(19) Europäisches Patentamt
European Patent Office
Office européen des brevets

(11) Veröffentlichungsnummer: **0 443 165 B1**

# (12) EUROPÄISCHE PATENTSCHRIFT

(45) Veröffentlichungstag der Patentschrift: **14.09.94**

(51) Int. Cl.⁵: **C09B 62/20**, C09B 62/022, C09B 62/503, D06P 1/38

(21) Anmeldenummer: **90124698.3**

(22) Anmeldetag: **19.12.90**

Die Akte enthält technische Angaben, die nach dem Eingang der Anmeldung eingereicht wurden und die nicht in dieser Patentschrift enthalten sind.

## (54) Reaktivfarbstoffe.

(30) Priorität: **17.02.90 DE 4005121**
**25.02.90 DE 4005929**

(43) Veröffentlichungstag der Anmeldung:
**28.08.91 Patentblatt 91/35**

(45) Bekanntmachung des Hinweises auf die Patenterteilung:
**14.09.94 Patentblatt 94/37**

(84) Benannte Vertragsstaaten:
**CH DE FR GB LI**

(56) Entgegenhaltungen:
**EP-A- 0 132 223**
**CH-A- 510 728**

(73) Patentinhaber: **BAYER AG**
**D-51368 Leverkusen (DE)**

(72) Erfinder: **Hoppe, Manfred, Dr.**
**Koelner Strasse 233**
**W-5067 Kuerten 2 (DE)**
Erfinder: **Herd, Karl-Josef, Dr.**
**Am Gartenfeld 66**
**W-5068 Odenthal-Holz (DE)**
Erfinder: **Stöhr, Frank-Michael, Dr.**
**Am Thelen Siefen 10**
**W-5068 Odenthal-Osenau (DE)**
Erfinder: **Henk, Hermann, Dr.**
**Roggendorfstrasse 55**
**W-5000 Koeln 80 (DE)**
Erfinder: **Schündehütte, Karl-Heinz, Prof. Dr.**
**Klief 75**
**W-5090 Leverkusen 3 (DE)**

EP 0 443 165 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Reaktivfarbstoffe der Formel

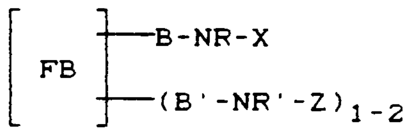

(1)

insbesondere Farbstoffe der Formel

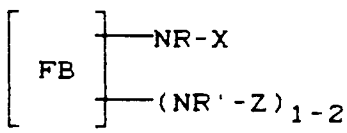

(1a)

worin

| | |
|---|---|
| FB = | der Rest eines Farbstoffes bzw. der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, |
| B bzw. B' = | direkte Bindung oder Brückenglied an ein Ring C-Atom eines aromatisch-carbocyclischen oder an ein Ring-C- oder -N-Atom eines aromatischheterocyclischen Ringes in FB, |
| X = | 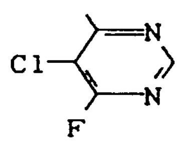 |
| Z = | heterocyclischer faserreaktiver Rest |
| R, R' = | H, gegebenenfalls substituiertes $C_1$-$C_6$-Alkyl (bevorzugte Substituenten: Halogen, OH, COOH, $SO_3H$, $OSO_3H$), |

mit Ausnahme des Farbstoffs der Formel

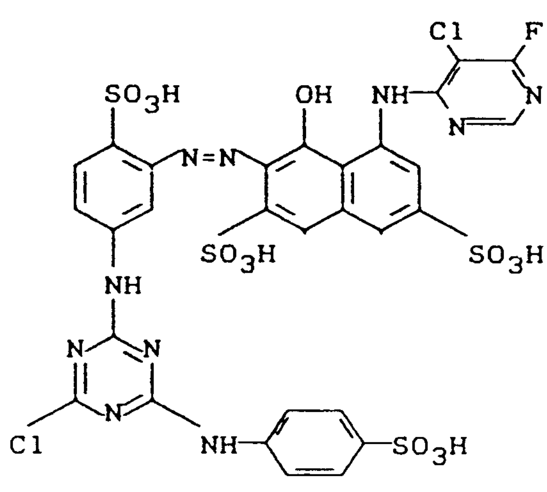

(bekannt aus CH-A-510 728, 7. Verbindung der Tabelle in Spalte 12).

In EP-A-132 223 sind expressis verbis bifunktionale Reaktivfarbstoffe beschrieben, die als heterocyclische Reaktivreste einen Amino-Fluor-Triazinrest und einen Trihalogenopyrimidinrest tragen.

Aus CH-A-510 728 sind explizit als Reaktivfarbstoffe solche beschrieben, die nur eine Dihalogenopyrimidinreaktivgruppe tragen.

Geeignete Brückenglieder B und B', die gleich oder verschieden sein können, sind beispielsweise

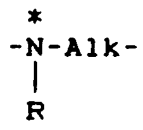 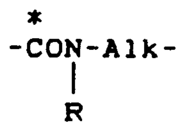 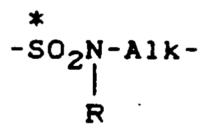 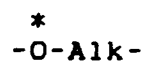 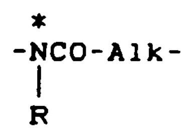

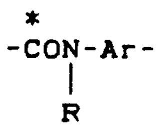 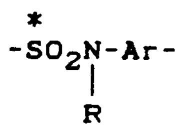 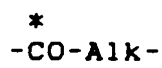 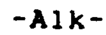 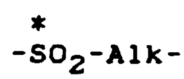

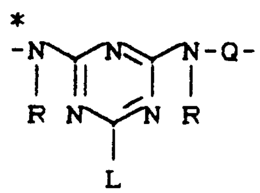 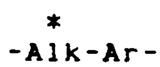

wobei der Stern die Verknüpfungsstelle mit FB markiert,

R die obengenannte Bedeutung hat,

Alk gegebenenfalls durch Heteroatome oder Heteroatome wie N, O oder S enthaltende Gruppierungen unterbrochenes, geradkettiges oder verzweigtes $C_1$-$C_6$-Alkylen,

Ar gegebenenfalls substituiertes Phenylen oder Naphthylen oder Rest eines Diphenyls oder Stilbens,

Q Alk oder Ar oder

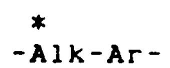

wobei Alk oder Ar weitere Substituenten, beispielsweise F, Cl, Br, $C_1$-$C_4$-Alkyl, $C_1$-$C_4$-Alkoxy, Carboxy oder Sulfo enthalten können,

L F, Cl, Br, gegebenenfalls substituiertes Amino, OH, $C_1$-$C_4$-Alkoxy, gegebenenfalls substituiertes Phenoxy, $C_1$-$C_4$-Alkylthio bedeutet.

Geeignete faserreaktive Reste Z, d.h. solche die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin- oder Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido-($N_3$), Rhodanido, Thiolether, Oxyether, Sulfinsäure und Sulfonsäure.

Im einzelnen sind beispielsweise zu nennen:
2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls

substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, $C_1$-$C_4$-Alkoxy, Vinylsulfonyl-$C_2$-$C_4$-Alkoxy, substituierte Alkylsulfonyl-$C_2$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen, Acylamino, Vinylsulfonyl, substituiertes Alkylsulfonyl, Hydroxy, Amino.

Im einzelnen seien folgende Reste genannt:

2-Amino-4-fluor-triazinyl-6, 2-Methylamino-4-fluor-triazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-$\beta$-Methoxy-ethylamino-4-fluor-triazinyl-6, 2-$\beta$-Hydroxyethylamino-4-fluor-triazinyl-6, 2-Di-($\beta$-hydroxyethylamino)-4-fluor-triazinyl-6, 2-$\beta$-Sulfoethylamino-4-fluor-triazinyl-6, 2-$\beta$-Sulfoethyl-methylamino-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-$\beta$-Cyanethylamino-4-fluor-triazinyl-6, 2-Benzylamino-4-fluor-triazinyl-6, 2-$\beta$-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-$\beta$-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m-oder p-Methyl- oder -Methoxy-phenoxy)-4-fluor-triazinyl-6, 2-$\beta$-Hydroxyethylmercapto-4-fluor-triazinyl-6, 2-Phenylmercapto-4-fluor-triazinyl-6, 2-(4'-Methylphenyl)-mercapto-4-fluortriazinyl, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-$\beta$-hydroxyethylamin, Triethanolamin, N,N-Dimethylhydrazin, Pyridin, $\alpha$-, $\beta$- oder $\gamma$-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethylsulfonylresten verknüpft sein bspw. über ein Brückenglied

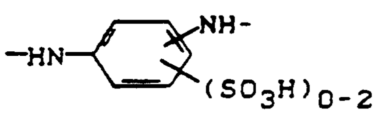

,

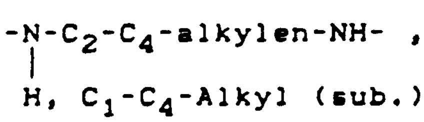

,

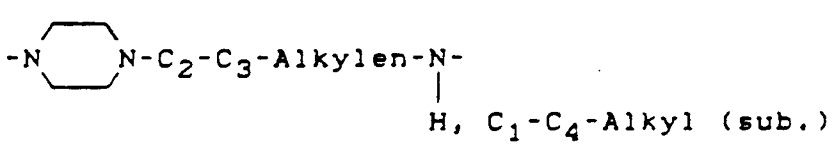

oder im Falle der Sulfatoethylsulfonyl- bzw. Vinylsulfonylgruppe über ein Brückenglied

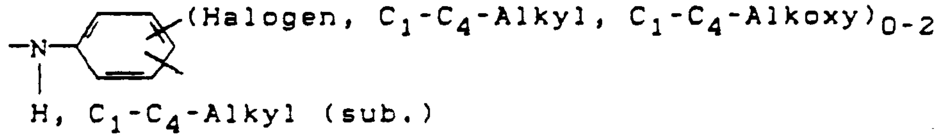

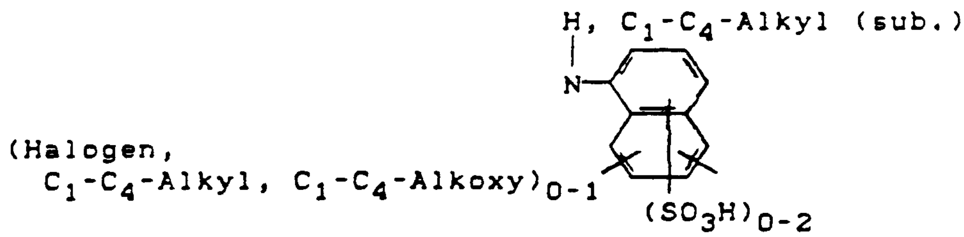

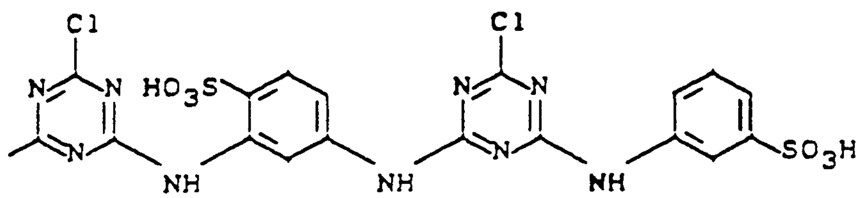

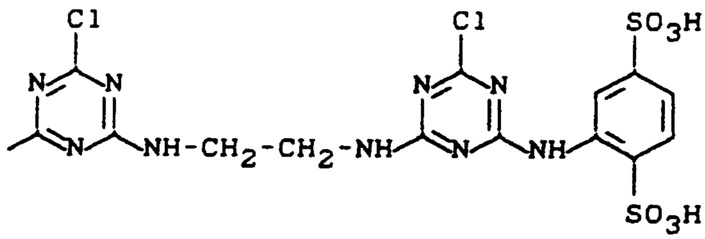

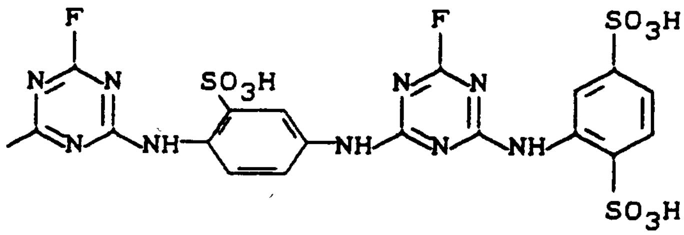

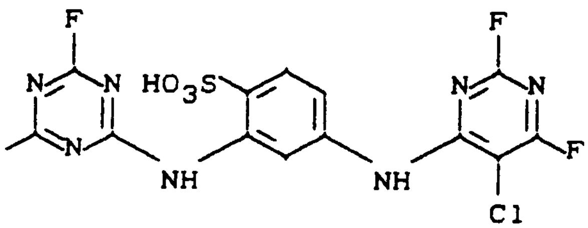

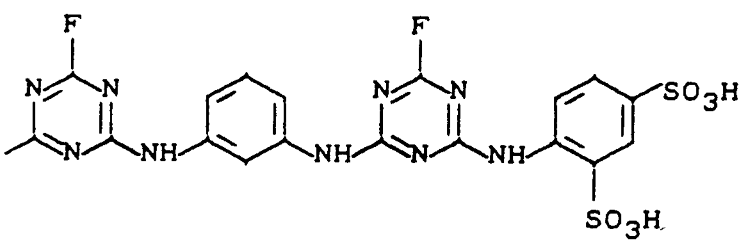

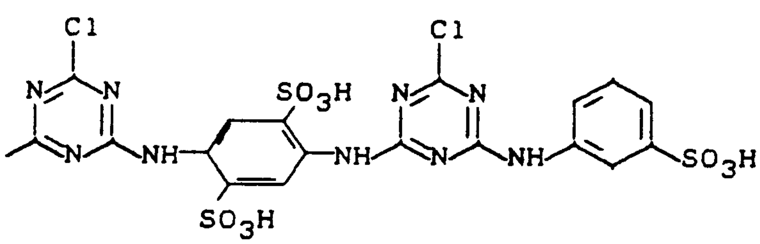

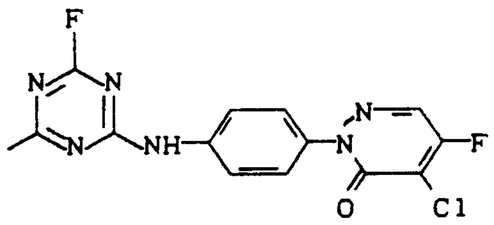

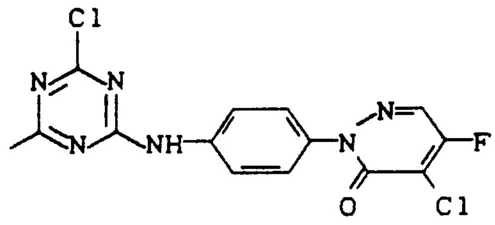

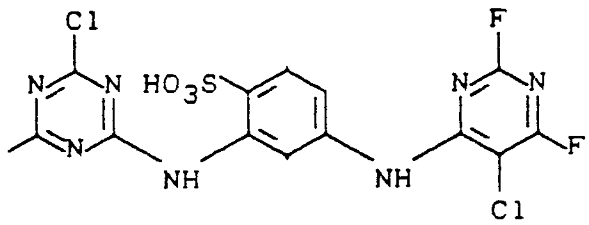

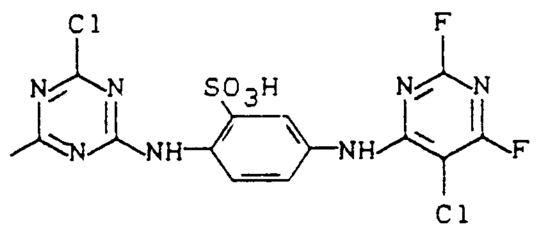

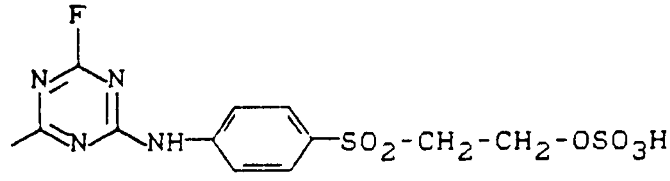

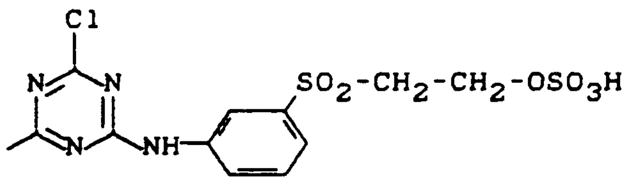

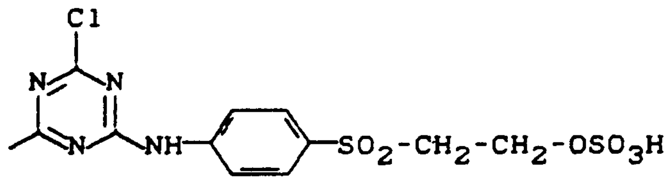

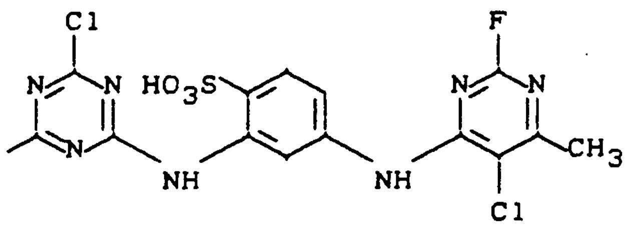

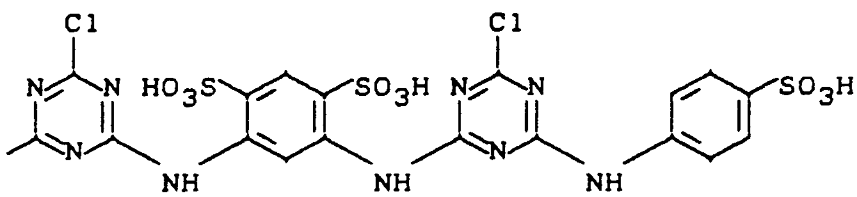

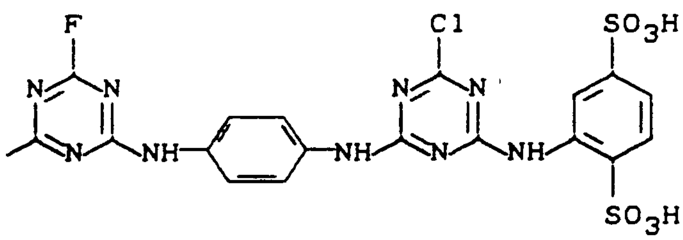

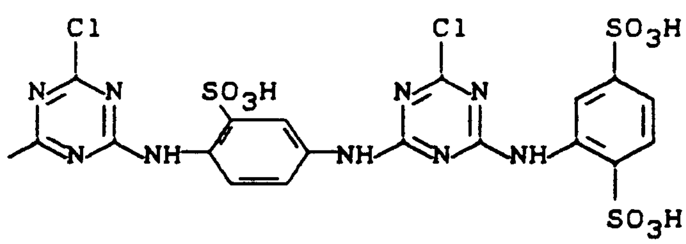

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder -carbonyl-, $\beta$-(4',5'-Dichlorpyridazon-6'-yl-1')-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-,2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluor-dichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 5-Chlor-6-Fluor-2-Dichlorfluormethyl-4-pyrimidinyl-, 2-Fluor-5-chlorpyrimidin-4-yl, 2-Methyl-4-fluor-5-methylsulfonylpyrimidinyl-6, 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methyl sulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-$\beta$-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder Alkylsulfonylbenzthiazol-5- oder - 6-carbonyl- oder -5- oder -6-sulfonyl-, wie 2-Methylsulfonyl- oder 2-Ethylsulfonylbenzthiazol-5- oder -6- sulfonyl-oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl-oder -4- oder -5-sulfonyl-, N-Oxid des 4-Chlor- oder 4-Nitrochinolin-5-carbonyl.

Bevorzugt sind Reaktivfarbstoffe der Formel (1), worin FB der Rest eines Mono- oder Disazofarbstoffes oder eines Metallkomplexazofarbstoffes ist.

In diesem Falle sind die Reste- -B-N(R)-X und -B'-N(R')-Z an verschiedene oder gleiche Reste von Ausgangskomponenten, d.h. Diazo- und Kupplungskomponenten, gebunden. Vorzugsweise sind die Reste -B-N(R)-X und -B'-N(R')-Z an je eine Komponente, Diazokomponente oder Kupplungskomponente, gebunden. Die Reaktivfarbstoffe haben dann z.B. die Formel

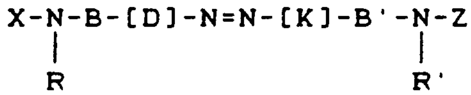

(1b)

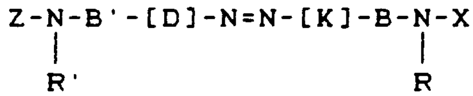

(1c)

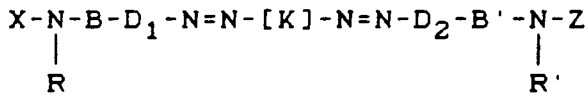

(1d)

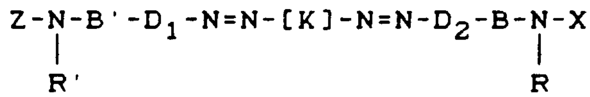

(1e)

worin -K- in Formeln (1d) und (1e) für den Rest einer zweifach kuppelnden Kupplungskomponente steht.

Wenn beide Reste -B-N(R)-X und -B'-N(R')-Z an den gleichen Rest einer Ausgangskomponente D oder K gebunden sind, so ist dies insbesondere der Rest der Kupplungskomponente K. Die Reaktivfarbstoffe entsprechen dann der Formel

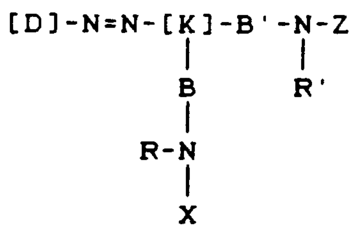

(1f)

worin

D, $D_1$, $D_2$ = Rest einer Diazokomponente der Benzol- oder Naphthalinreihe,

K = Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest.

Die Reste D, $D_1$, $D_2$ und K können dabei mit weiteren Azogruppen oder mit azogruppenhaltigen Resten und ebenso, wie es für den Rest FB der Formel (1) weiter oben aufgeführt ist, substituiert sein, wobei X, Z, B, B', R und R' die oben angegebenen Bedeutungen haben.

Beispiele für D, $D_1$ und $D_2$ sind vorzugsweise gegebenenfalls durch $SO_3H$, Chlor, $C_1$-$C_4$-Alkoxy, $C_1$-$C_4$-Alkyl, Carbalkoxy oder Sulfonamido substituiertes Phenyl bzw. Phenylen, gegebenenfalls durch $SO_3H$, Chlor, $C_1$-$C_4$-Alkoxy oder $C_1$-$C_4$-Alkyl substituiertes Naphthyl bzw. Naphthylen, gegebenenfalls durch $SO_3H$ substituiertes 4-(Phenylazo)phenyl und gegebenenfalls durch $SO_3H$ substituiertes Biphenylen.

K steht beispielsweise für den Rest einer Kupplungskomponente aus der Hydroxybenzol-, Hydroxynaphthalin-, Aminobenzol-, Aminonaphthalin-, Aminohydroxynaphthalinreihe, für einen 5-Hydroxy-3-methyl (bzw. carboxy)-pyrazolon-, einen 6-Hydroxy-2-pyridon- oder einen gegebenenfalls $C_1$-$C_4$-Alkyl- bzw. $C_1$-$C_4$-Alkoxy-ringsubstituierten Acetessigsäurearylid-Rest.

K kann die üblichen Substituenten, insbesondere Sulfonsäuregruppen aufweisen.

Ferner sind in Betracht zu ziehen, Reaktivfarbstoffe der Formel (1b) bis (1f), worin die Reste D, $D_1$, $D_2$ und K noch einen weiteren Reaktivrest enthalten können. Somit sind auch tri-und tetrareaktive Farbstoffe umfaßt, wobei jedoch mindestens ein Reaktivrest der 6-Fluor-5-chlor-4-pyrimidinyl-Rest ist. Die zusätzlichen, in D oder K eingeschlossenen Reaktivreste können, wie Z und X, über Aminogruppen, oder in anderer Weise, z.B. durch eine direkte Bindung an D bzw. K gebunden sein. Die obigen Erläuterungen gelten sinngemäß auch für die Metallkomplexe der Mono-und Disazofarbstoffe (1b - 1f).

Im besonderen bevorzugt sind erfindungsgemäße Reaktivfarbstoffe der Formel (1) bzw. (1a) - (1f), worin Z ein Rest der Formel

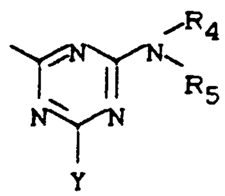

(II)

ist,

worin $R_4$ und $R_5$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenethyl, Cyclohexyl, Phenyl oder - $NHCH_2CH_2OCH_2CH_2$-$SO_2M$ (M = $-CH=CH_2$ oder $-CH_2CH_2$-V mit V = alkalisch eliminierbarer Rest); Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, ist,

oder worin $R_4$ und $R_5$ zusammen mit dem Aminostickstoffatom einen Morpholino-, Piperidino- oder Piperazinorest bilden, und worin Y = Cl, F oder gegebenenfalls substituierter Pyridiniumrest ist.

Bevorzugt sind dabei Farbstoffe mit Y = F. Im Rahmen der Farbstoffe mit Y = Cl sind solche bevorzugt, bei denen $-NR_4R_5$ die oben angegebene Bedeutung hat aber

≠ 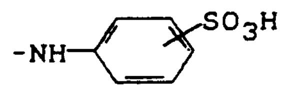

ist.

Weiterhin besonders bevorzugt sind die erfindungsgemäßen Farbstoffe, worin X und Z beide für den 5-Chlor-6-fluor-4-pyrimidinyl-Rest stehen.

Weiterhin bevorzugt sind Farbstoffe der Formel (1), in denen

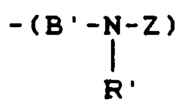

für

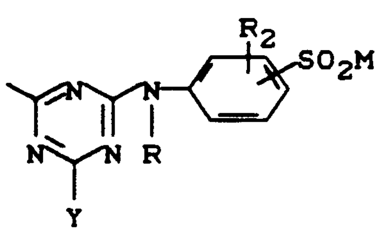

(III)

steht, worin

- Y = Cl, F oder gegebenenfalls substituierter Pyridiniumrest ist,
- M = $CH=CH_2$ oder $CH_2CH_2$-V, worin
- V = alkalisch eliminierbarer Rest, z.B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4$,$[N(CH_3)_3]^+$Anion$^-$ oder gegebenenfalls substituierter Pyridinium-Rest (Substituenten insbesondere gegebenenfalls substituiertes $C_1$-$C_4$-Alkyl, COOH, $SO_3H$, CN, Carbonamid) und
- $R_2$ = H, Cl, Br, $C_1$-$C_4$-Alkyl, $C_1$-$C_4$-Alkoxy, $CO_2H$ oder $SO_3H$.

Bevorzugt sind Reaktivfarbstoffe der Formel

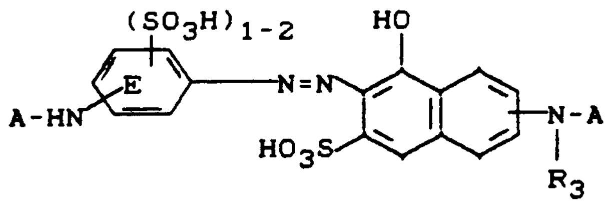

(2),

worin beide Reste A = X oder ein A = X und das andere A = Z ist, und X und Z die unter Formel (1) angegebenen Bedeutungen haben, $R_3$ Wasserstoff, Methyl oder Ethyl ist, und der Benzolring E gegebenenfalls weitersubstituiert ist.

Bevorzugt sind ebenfalls Reaktivfarbstoffe der Formel

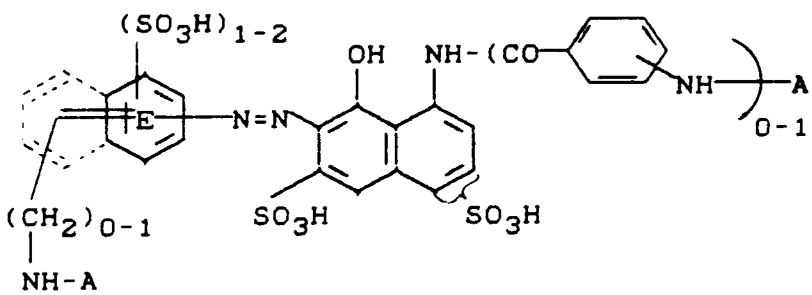

(3)

worin A und E die oben angegebene Bedeutung haben.

Bevorzugt sind insbesondere Reaktivfarbstoffe der Formel (2), worin der Benzolring E nicht weitersubstituiert ist, sowie Reaktivfarbstoffe der Formel (3), worin der Benzolring E nicht weitersubstituiert ist.

Bevorzugt sind ferner Reaktivfarbstoffe der Formel

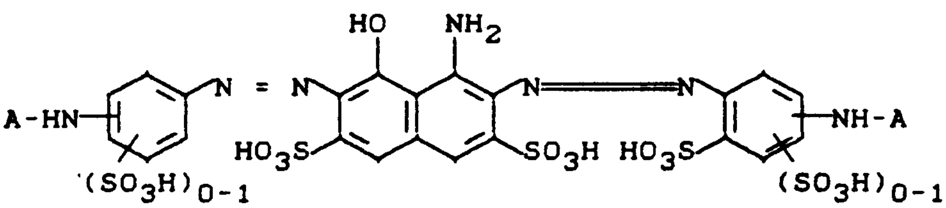

(4),

worin A die oben angegebene Bedeutung hat.

Außer den weiter oben beschriebenen Reaktivfarbstoffen der Formeln (2), (3) und (4) sind als weitere wertvolle Vertreter die Reaktivfarbstoffe der folgenden Formeln zu nennen:

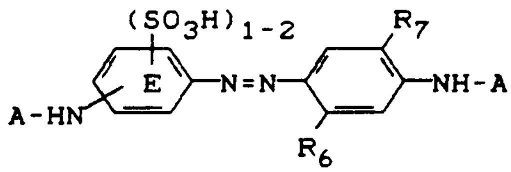

(5)

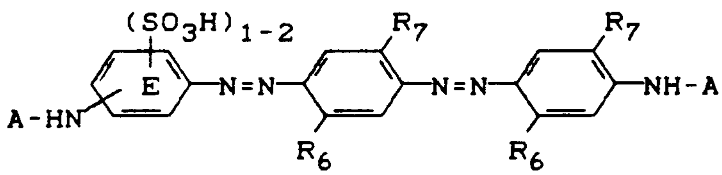

(6)

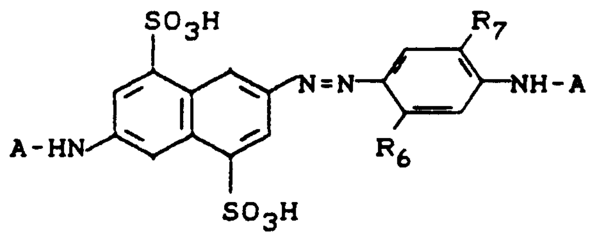

(7)

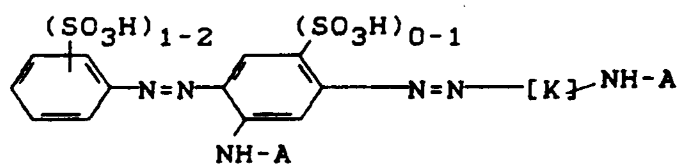

(8)

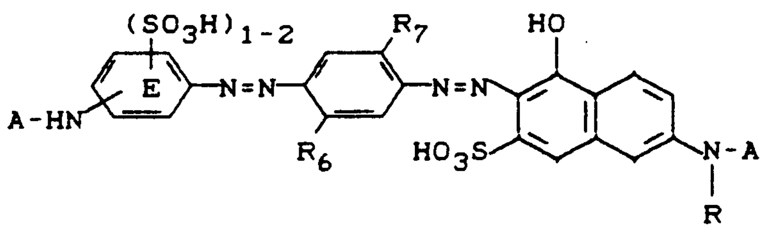

(9)

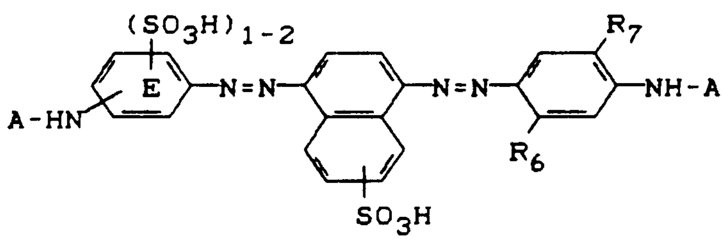

(10)

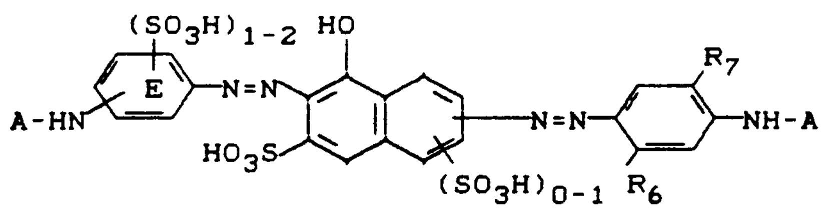

(11)

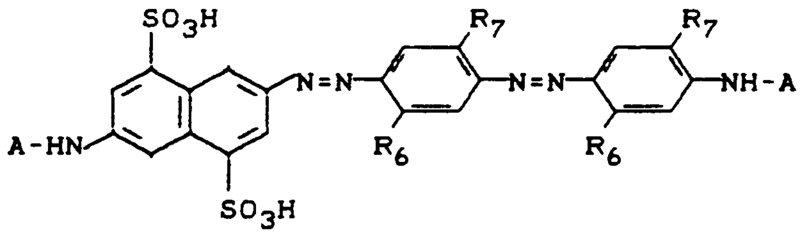

(12)

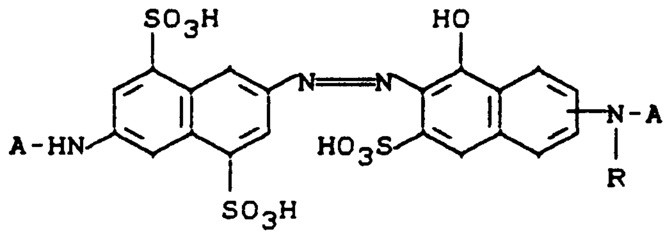

(13)

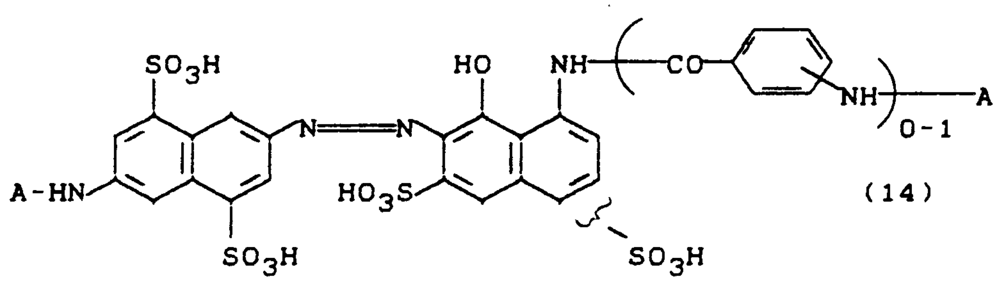

(14)

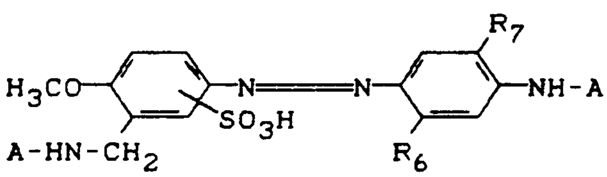

(15)

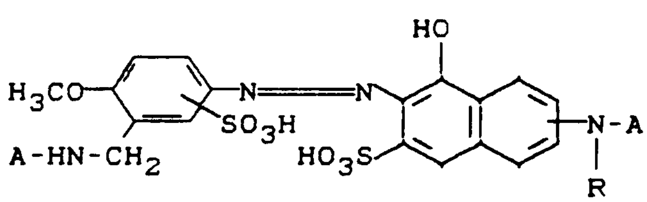

(16)

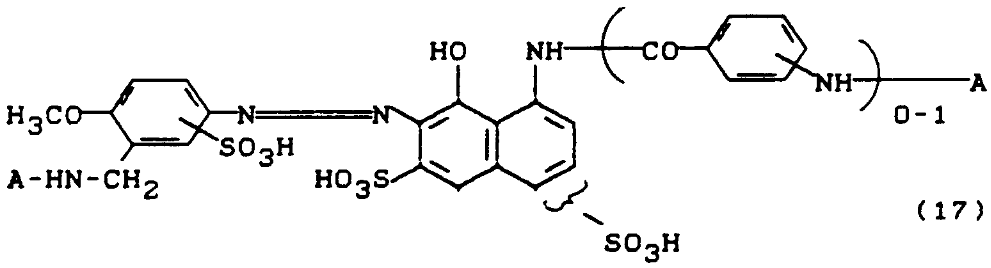

(17)

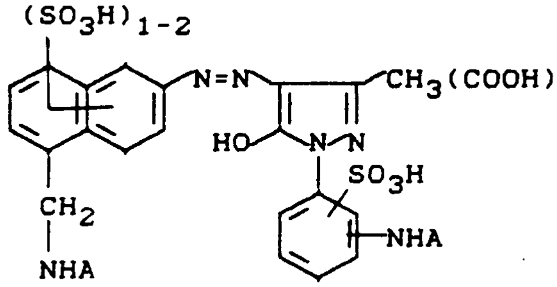

(18)

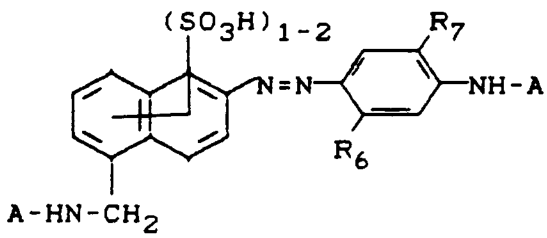

(19)

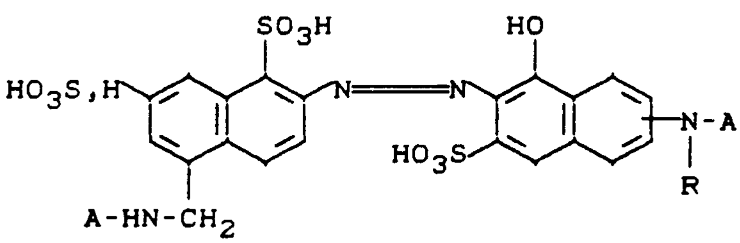

(20)

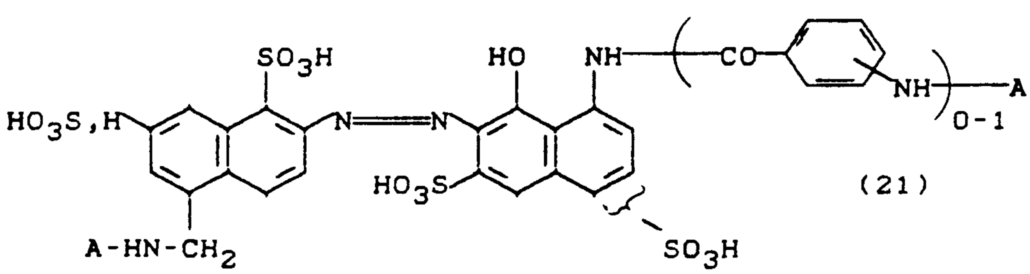

(21)

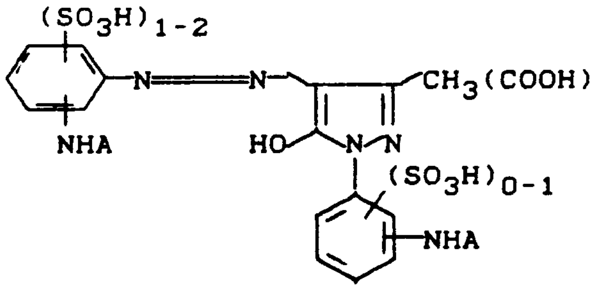

(22)

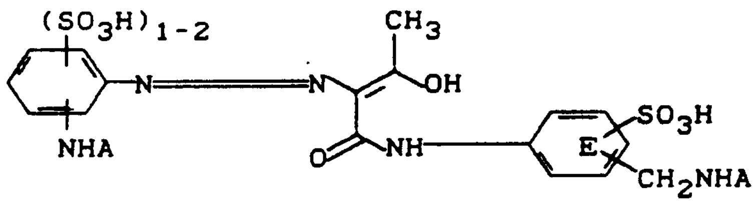

(23)

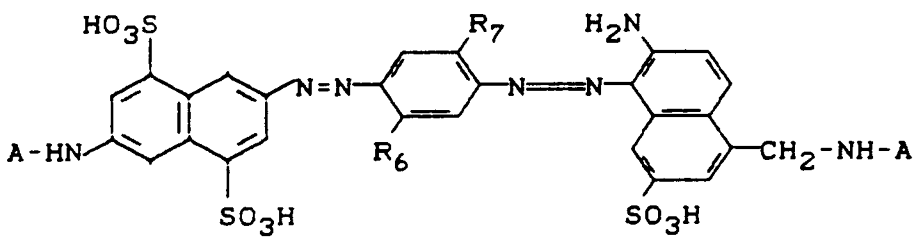

(24)

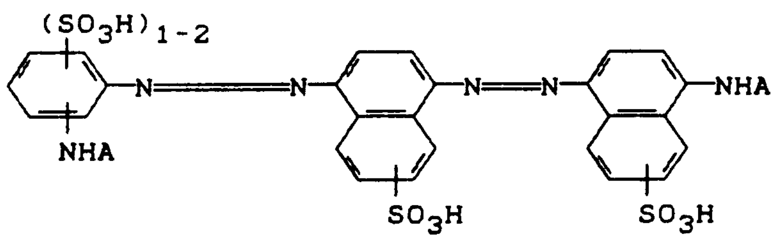

(25)

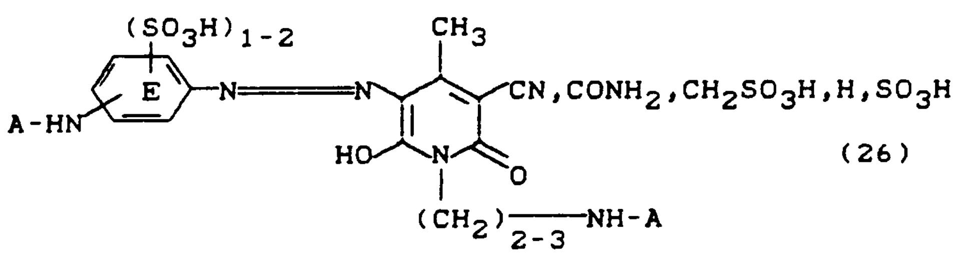

(26)

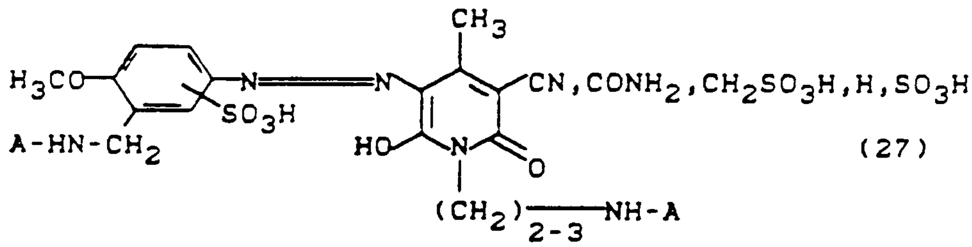

(27)

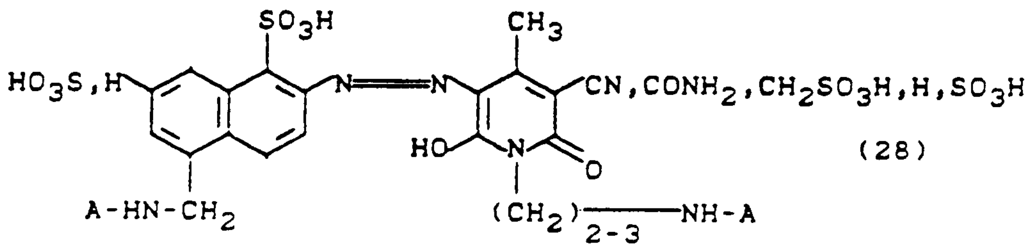

(28)

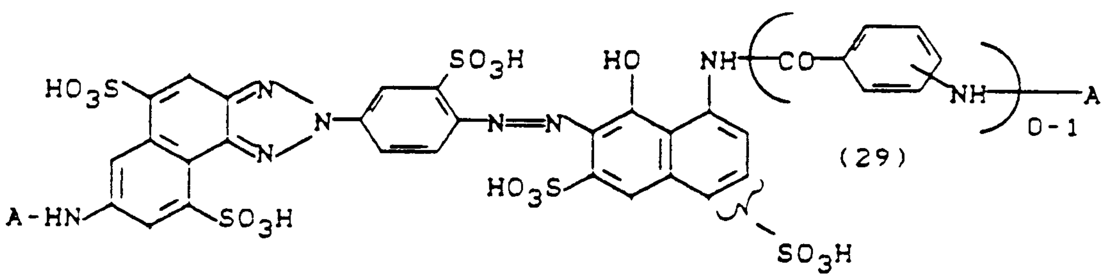

(29)

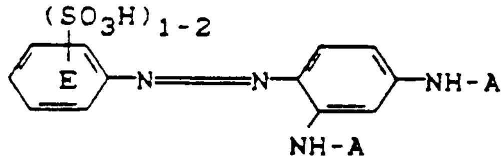

(30)

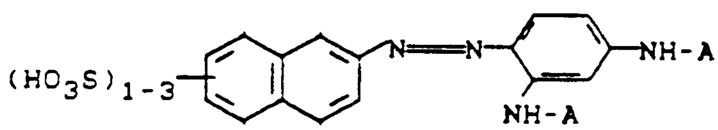

(31)

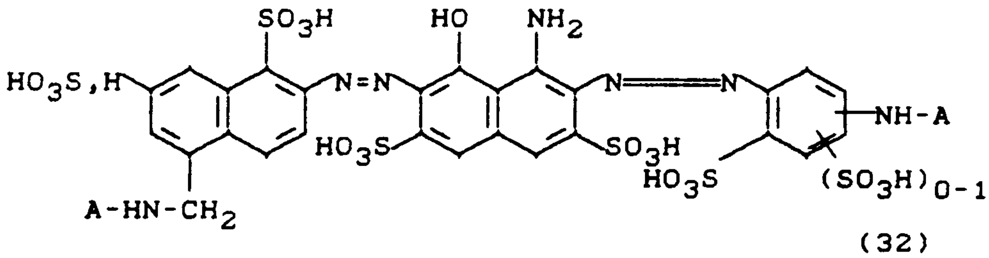

(32)

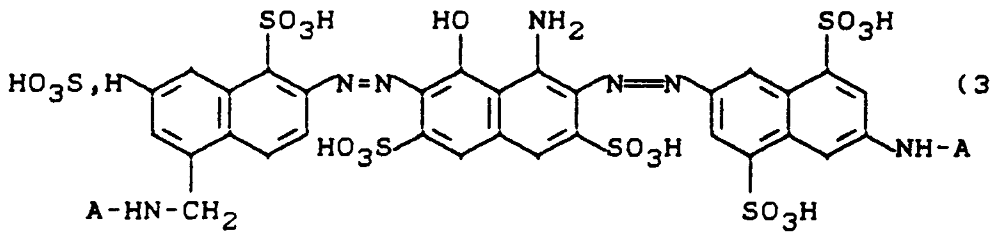

(33)

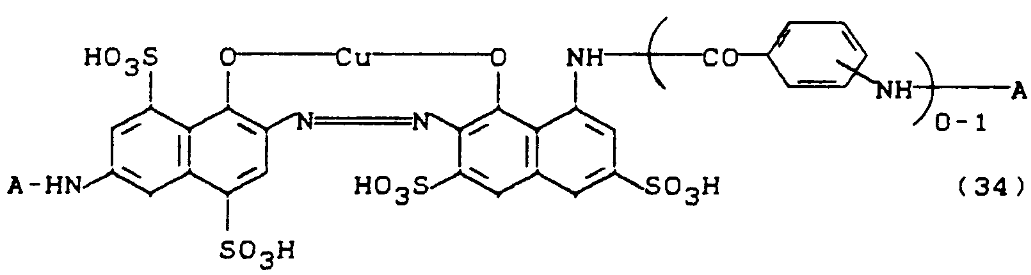

(34)

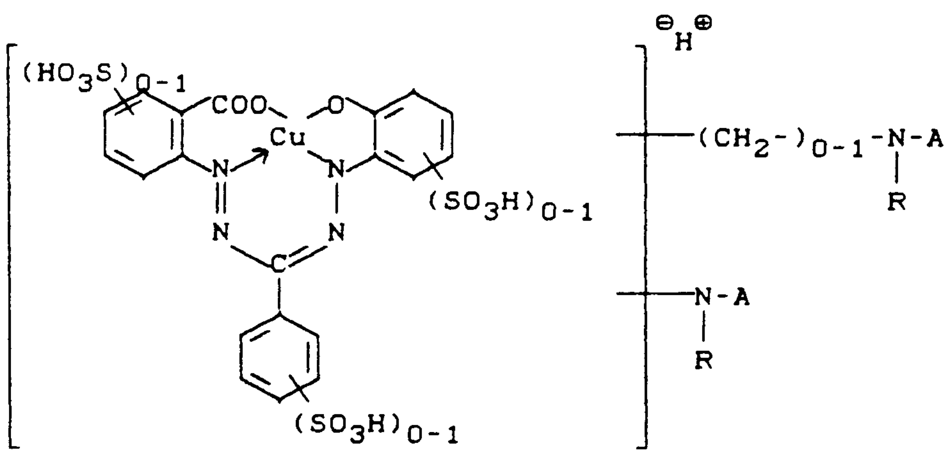

(35)

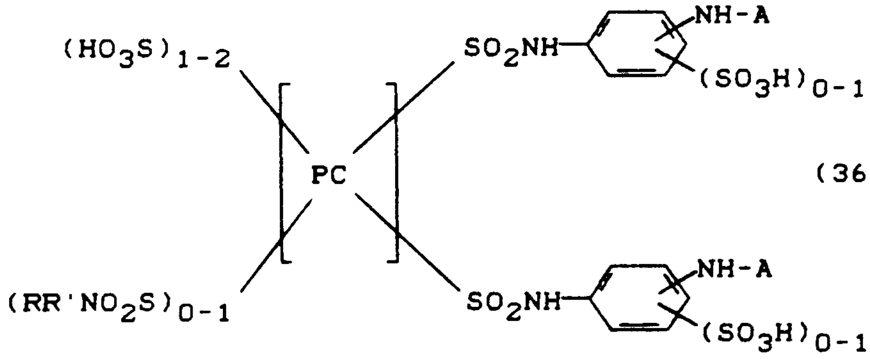

(36)

worin Pc für einen Cu- oder Ni-Phthalocyaninrest steht und die Gesamtzahl der Substituenten am Pc-Gerüst maximal 4 beträgt; R und R' die obengenannte Bedeutung besitzen,

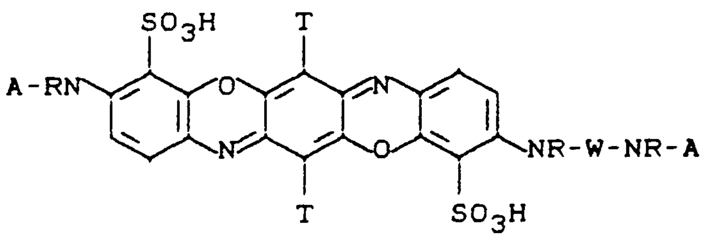

(37)

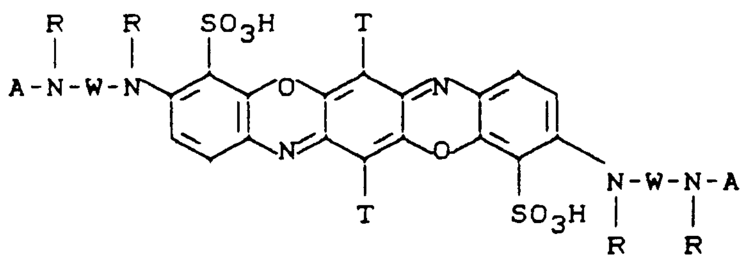

(38)

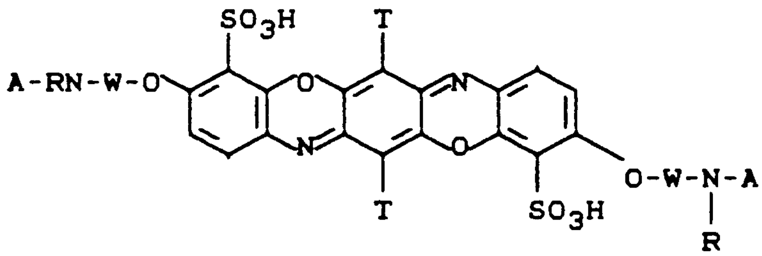

(39)

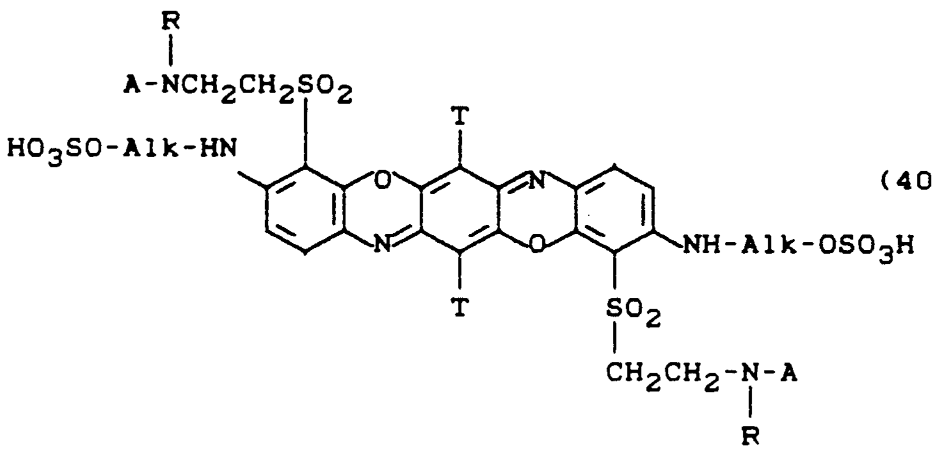

(40)

wobei

T = Cl, Br, $OCH_3$ und A, E, R und Alk die oben angegebenen Bedeutungen haben,

$R_6$ = H, $C_1$-$C_4$-Alkyl, $C_1$-$C_4$-Alkoxy, Acylamino, insbesondere $C_1$-$C_4$-Alkylcarbonylamino, $C_1$-$C_4$-Alkylsulfonylamino, Aminocarbonylamino, gegebenenfalls substituiertes Phenylcarbonylamino, Cl, Br

$R_7$ = H, $C_1$-$C_4$-Alkyl, $C_1$-$C_4$-Alkoxy, OH, $SO_3H$.

W = aliphatisches Brückenglied, insbesondere $C_2$-$C_4$-Alkylen.

In den bevorzugten Reaktivfarbstoffen der Formeln (2) und (3) sind die Benzolringe E vorzugsweise ebenfalls nicht weitersubstituiert; als Diazokomponenten werden in diesem Falle vor allem die 1,3-Phenylen-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet. Der Rest $R_3$ in Formel (2) ist insbesondere Wasserstoff, Methyl oder Ethyl.

Bevorzugt sind vor allem Reaktivfarbstoffe der Formeln (2) bis (40), worin A ein unsubstituierter oder substituierter Aminofluor-s-triazin-Rest ist, wobei $-NR_4R_5$ vorzugsweise steht für: $-NH_2$, Morpholino, N-$\beta$-Hydroxyethylamino,N,N-Di-$\beta$-hydroxyethylamino, $\beta$-Sulfoethylamino, Phenylamino, das gegebenenfalls im Phenylkern substituiert ist durch Chlor, Methyl, Ethyl, Methoxy, Ethoxy, Acetylamino, Hydroxy, Carboxy, Sulfomethyl oder Sulfo, N-$C_{1-4}$-Alkyl-N-phenylamino, das gegebenenfalls im Phenylkern substituiert ist durch Chlor, Methyl oder Ethyl, N-Sulfo-$C_{1-4}$-alkyl-N-phenylamino, das gegebenenfalls im Phenylkern substituiert ist durch Chlor, Methyl oder Ethyl, N-Hydroxy-$C_{1-4}$-alkyl-N-phenylamino oder Sulfonaphthylamino ist, und der zweite Reaktivrest A für den 6-Fluor-5-chlorpyrimidyl-(4)-Rest steht, wie z.B. Farbstoffe der Formel (41)

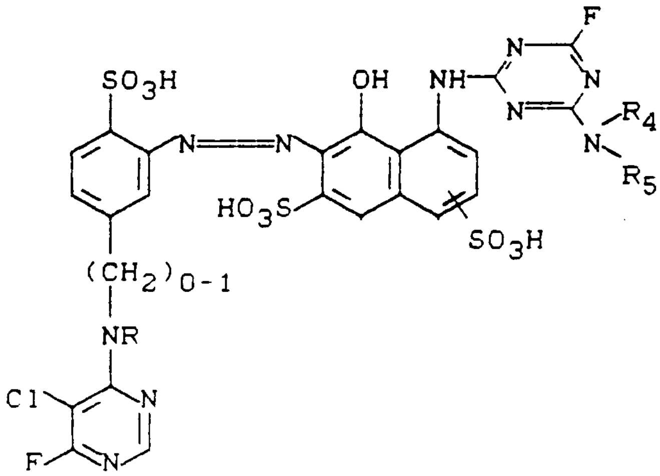

(41)

Bevorzugt sind Farbstoffe (2) bis (40), in denen beide Reste A für X stehen, sowie solche, in denen ein Rest A für X und der andere für

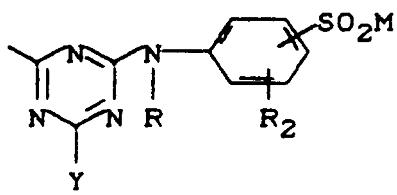

(III)

steht.

Ein Verfahren zur Herstellung der Farbstoffe (1) besteht darin, daß man Farbstoffe

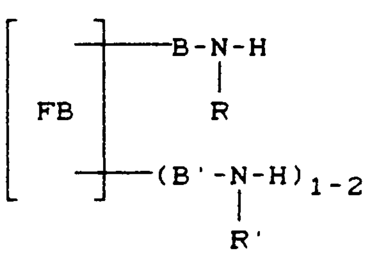

(IV)

bzw. die entsprechenden Farbstoffvorprodukte mit 1 bis 2 Mol einer Reaktivkomponente

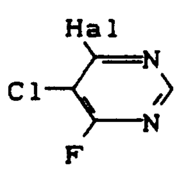

(V)

und gegebenenfalls 1 bis 2 Mol einer Reaktivkomponente

Z - Hal (VI)

worin Hal = Cl, Br oder F, umsetzt und im Falle der Verwendung von Vorprodukten diese anschließend in die gewünschten Endfarbstoffe überführt und gegebenenfalls weitere Umwandlungsreaktionen anschließt.

Bei der Herstellung der bevorzugten Azofarbstoffe müssen die Diazokomponenten und die Kupplungskomponenten zusammen zwei Aminogruppen -N(R)H und -N(R')H, und gegebenenfalls weitere acylierbare

Aminogruppen enthalten. Gegebenenfalls verwendet man entsprechende Acetylamino- oder Nitroverbindungen, worin die Acetylamino- bzw. Nitrogruppe vor der Kondensation mit einem Halogentriazin, Halogenpyrimidin oder dergleichen durch Verseifen bzw. Reduzieren in die $NH_2$-Gruppe übergeführt wird. Die Einführung der Reaktivreste X und Z erfolgt durch Kondensation von Farbstoffen oder Farbstoffvorprodukten, welche acylierbare Aminogruppen enthalten, mit faserreaktiven halogenierten Acylierungsmitteln. Bei der Herstellung der Endfarbstoffe aus Vorprodukten handelt es sich meistens um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse eines Halogentriazin- oder Halogenpyrimidinrestes etc. eintritt, muß ein Zwischenprodukt, welches Acetylaminogruppen enthält, zwecks Abspaltung der Acetylgruppen verseift werden, bevor mit einem Aminodifluortriazin oder Trifluortriazin etc. kondensiert wird. Als weitere Umwandlungsreaktion kommt z.B. die nachträgliche Umsetzung eines Dihalogentriazinylrestes mit einem Amin in Betracht. Welche Reaktion bei der Herstellung eines sekundären Kondensationsproduktes aus Amin $HNR_4R_5$, 2,4,6-Trihalogen-s-triazin und Diaminobenzolsulfonsäure zweckmäßigerweise zuerst ausgeführt wird, die des Trihalogentriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen. Die wichtigsten Verfahrensvarianten sind in den Ausführungsbeispielen dargestellt.

Geeignete Ausgangsverbindungen für die Herstellung von Mono- oder Polyazofarbstoffen (1) sind beispielsweise:

<u>Diazokomponenten</u> (D, $D_1$ und $D_2$)

1,3-Diaminobenzol, 1,4-Diaminobenzol, 1,3-Diamino-4-chlorbenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol, 1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol, 1,4-Diamino-2,5-diethoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4'-Diaminodiphenyloxid, 4,4'-Diaminodiphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine aminoacetylamino-Verbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der obengenannten Diazokomponenten in Frage, z.B. 1-Acetylamino-3-aminobenzol-4-sulfonsäure oder 1-Acetylamino-4-aminobenzol-3-sulfonsäure.

Falls die beiden Reste -B-N(R)-X und -B'-N(R')-Z in Formel (1) an die gleiche Komponente, z.B. die Kupplungskomponente gebunden sind, wie dies weiter vorn beschrieben ist, können als Diazokomponenten auch solche verwendet werden, die neben der zu diazotierenden Aminogruppe keine acylierbare Aminogruppe enthalten, wie z.B. Aminobenzol, 1-Amino-2-, -3- oder -4-methylbenzol, 1-Amino-2-, -3- oder -4-methoxybenzol, 1-Amino-2-, -3-oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenylether, 1-Aminobenzol-2-, -3- oder -4-sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7-oder -8-sulfonsäure, 1-Aminonaphthalin-3,6- oder -5,7-disulfonsäure, 2-Aminonaphthalin-1,5-, -1,7-, -3,6-, - 5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 4-Aminobenzol-3,4'-disulfonsäure, 3-Methoxy-4-amino-6-methyl-azobenzol-2',4'-disulfonsäure oder 3-Methoxy-4-amino-6-methylazobenzol-2',5'-disulfonsäure.

Kupplungskomponenten (K)

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynapahthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. 2-Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-$\beta$-Aminoethyl-3-cyan-4-methyl-6-hydroxypyridon-(2), 1-$\gamma$-Aminopropyl-3-sulfomethyl-4-methyl-6-hydroxypyridon-(2), 1,3-Diaminobenzol.

Die Diazotierung der Diazokomponenten bzw. der eine diazotierbare Aminogruppe enthaltenden Zwischenprodukte erfolgt in der Regel durch Einwirkung salpetriger Säure in wäßrig-mineralsaurer Lösung bei tiefer Temperatur. Die Kupplung auf die Kupplungskomponente erfolgt bei stark sauren, neutralen bis schwach alkalischen pH-Werten.

Die Kondensation der Reaktivkomponenten mit den Diazokomponenten und den Kupplungskomponenten und mit den Aminen bzw. mit acylierbaren Monoazo- oder Disazo-Zwischenprodukten bzw. mit den aminogruppenhaltigen Farbstoffen erfolgen vorzugsweise in wäßriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wäßriger Alkalihydroxide, -carbonat oder -bicarbonate neutralisiert.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die durch Quarternierung mit Pyridinen entstehende Ladung wird, in Abhängigkeit der Isolierungsbedingungen, durch ein Gegenion z.B. Chlorid, Fluorid oder Sulfat ausgeglichen; oder die Farbstoffe bilden innere Salze mit Sulfo- oder Carboxylgruppen.

Alle Farbstoffe, insbesondere solche die in letzter Stufe mit Pyridinen umgesetzt werden, können je nach Reaktionsbedingungen als Gemische der $\beta$-Sulfatoethylsulfonylfarbstoffe und deren eliminierten Form dem Vinylsulfon vorliegen. Die Farbstoffe können auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren, sowie zum Bedrucken von Baumwolle und Zellwolle.

Man erhält bei gutem Aufbauvermögen und hohen Fixierausbeuten Färbungen mit guten Allgemeinechtheiten, insbesondere Naßechtheiten.

Beispiel 1

a) 0,2 Mol 1-Amino-8-hydroxynaphthalin-3,6-disulfonsäure werden in 350 ml Wasser bei pH 6,5 gelöst und mit 350 g Eis auf 0 ° C abgekühlt. 0,21 Mol 2,4,6-Trifluor-1,3,5-triazin (Cyanurfluorid) werden zugegeben und der pH mit $Na_2CO_3$-Lösung zwischen 3,5 und 4 gehalten. Nach 5 Minuten setzt man 0,2 Mol Morpholin zu und stellt den pH mit Sodalösung auf 7 ein. Die Temperatur steigt dabei auf ca. 10 ° C an.

b) 0,2 Mol 6-Fluor-5-chlor-4-(3'-amino-4'-sulfophenyl)pyrimidin (aus 2,4-Diaminobenzolsulfonsäure und 4,6-Difluor-5-chlorpyrimidin hergestellt) werden in Wasser suspendiert und mit 65 ml 30 %iger Salzsäure und 300 g Eis versetzt. Danach werden 46 ml 30 %ige Natriumnitritlösung zugegeben und 1 Stunde bei 0 ° C gerührt. Überschüssiges Natriumnitrit wird mit Amidosulfonsäure vernichtet und die so erhaltene Diazotierung zur Lösung der Kupplungskomponente a) gegeben. Mit Sodalösung wird ein pH von 6-7 eingestellt.

Nach beendeter Kupplung wird der Farbstoff ausgesalzen, isoliert, getrocknet und gemahlen. Der so erhaltene Farbstoff der Formel

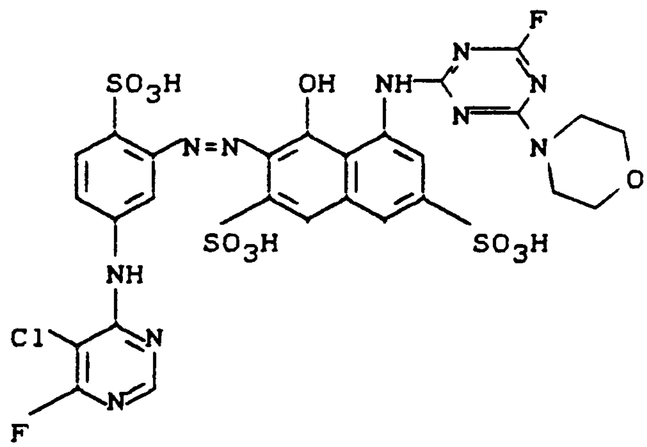

$\lambda_{max}$ = 515,532 nm ($H_2O$)
färbt Baumwolle in klaren roten Tönen.

Beispiel 2

a) 0,2 Mol 1,4-Diaminobenzoldisulfonsäure-2,5 werden in 500 ml Wasser mit konz. Natronlauge neutral gelöst. Man heizt auf 50 ° C auf und gibt 0,3 Mol 4,6-Difluor-5-chlorpyrimidin zu. Durch gleichzeitige Zugabe von Sodalösung (20 g/100 ml) wird pH 7 gehalten. Die Reaktion ist nach 3 Std. beendet. Man kühlt auf 0 ° C ab und gibt 55 ml 30 %ige HCl zu. Innerhalb von 30 Minuten tropft man bei 0 ° C-5 ° C 47 ml Natriumnitritlösung (30 g/100 ml) ein. Die Diazotierung rührt 30 Minuten bei 0-5 ° C nach. Anschließend wird überschüssiges Nitrit mit Amidosulfonsäure zerstört.

b) 0,2 Mol 6-Amino-1-naphthol-3-sulfonsäure werden in 600 ml Wasser unter Zusatz von 38 ml 11 %iger Lithiumhydroxydlösung bei pH 7-7,5 gelöst. In 30 Minuten tropft man 0,21 Mol Cyanurfluorid zu. Man hält dabei durch gleichzeitiges Eintropfen von 11 %iger Lithiumhydroxidlösung einen pH-Wert von 3,7-4,1. Man rührt 5 Minuten nach und gibt 0,2 Mol Morpholin zu. Mit Sodalösung (20 g/100 ml) stellt man pH 7 ein. T = 5-8 ° C. Man rührt 15 Minuten nach und tropft innerhalb von 1 Stunde obige Diazotierung a) zu. Mit 1 molarer Nariumhydrogencarbonatlösung wird ein pH-Wert von 5,5-6,5 gehalten. Nach beendeter Kupplung salzt man mit NaCl aus, isoliert und trocknet. Der Farbstoff der Formel

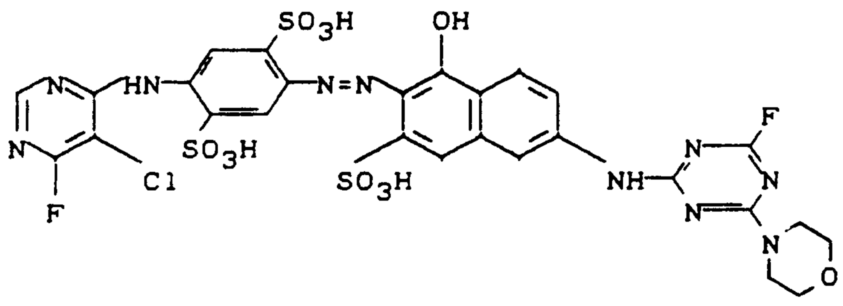

färbt Baumwolle in roten Tönen.

Die Farbstoffe der folgenden Beispiele 3-31 der allgemeinen Formel

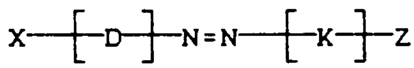

lassen sich auf analoger Weise herstellen unter Verwendung der aufgeführten Diazo- bzw. Kupplungskomponenten und Amine. Sie färben Baumwolle in den aufgeführten Farbtönen.

X hat die in Formel (1) angegebene Bedeutung.

| | Diazokomponente | Kupplungskomponente | Z | Farbton |
|---|---|---|---|---|
| 4 | 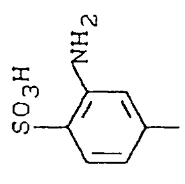 | 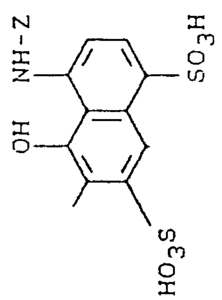 | 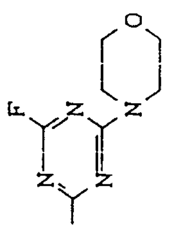 | Rot |
| 5 | 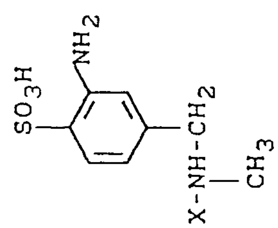 | " | " | Rot |
| 6 | 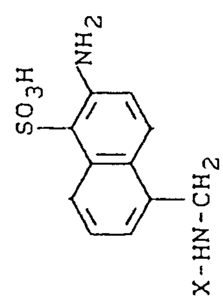 | " | 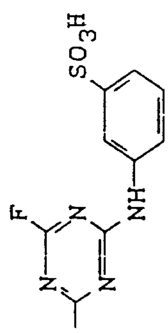 | Rot |

| | Diazokomponente | Kupplungskomponente | Z | Farbton |
|---|---|---|---|---|
| 7 | 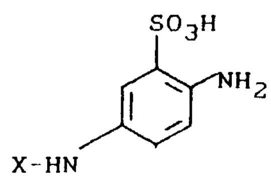 | 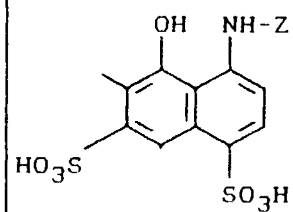 | 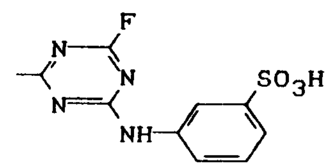 | Blaust. Rot |
| 8 | 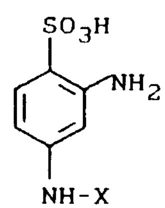 | 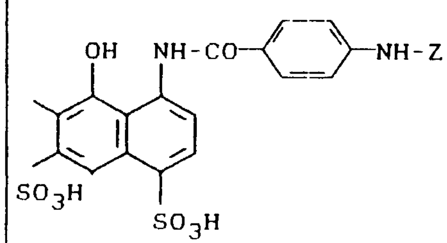 | " | Rot |
| 9 | 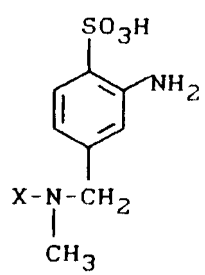 | " | " | gelbst. Rot |

| | Diazokomponente | Kupplungskomponente | Z | Farbton |
|---|---|---|---|---|
| 10 | 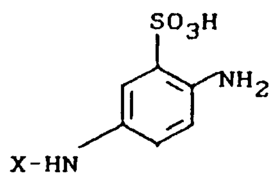 | 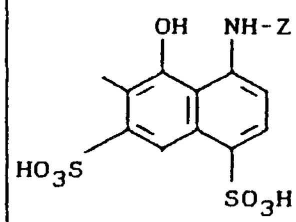 | 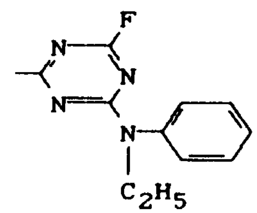 | Blaust. Rot |
| 11 | 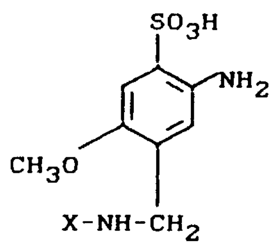 | " | 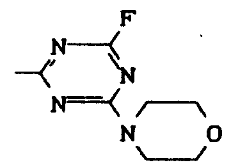 | Rot |
| 12 | 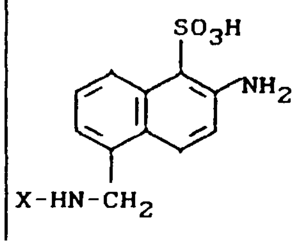 | " | 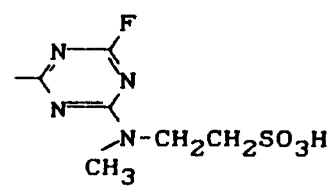 | Rot |

| | Diazokomponente | Kupplungskomponente | Z | Farbton |
|---|---|---|---|---|
| 13 | 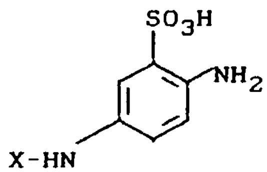 | 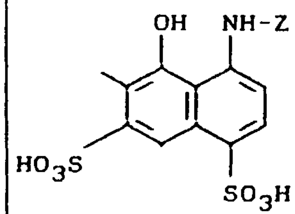 | 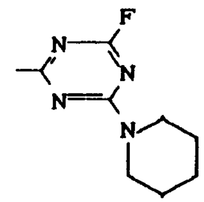 | Rotviolett |
| 14 | 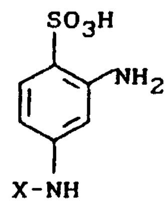 | " | 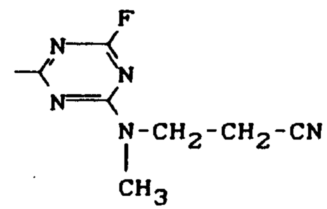 | Rot |
| 15 | " | 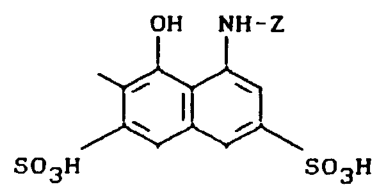 | 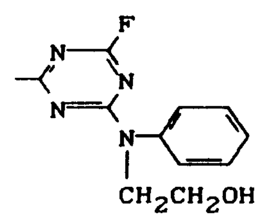 | Rot $\lambda_{max}$=515nm, Sh 532 nm |

| | Diazokomponente | Kupplungskomponente | Z | Farbton |
|---|---|---|---|---|
| 16 | 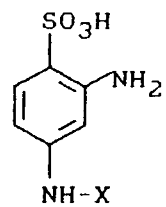 | 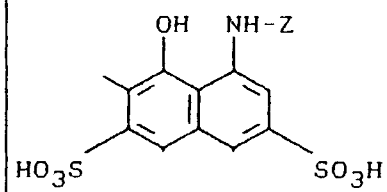 | 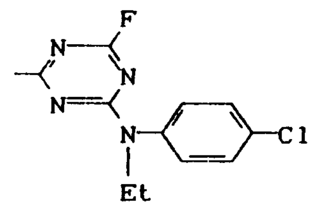 | Rot<br>$\lambda_{max}$=514 nm,<br>Sh 530 nm |
| 17 | 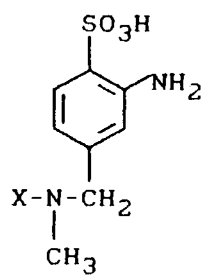 | " | 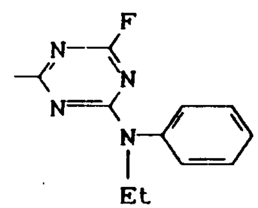 | Rot<br>$\lambda_{max}$=512 nm,<br>535 nm |
| 18 | 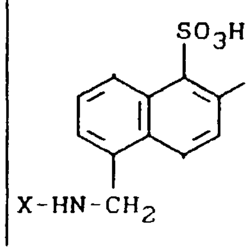 | " | 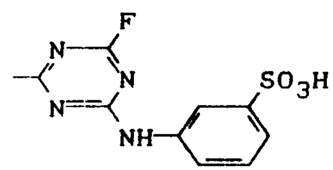 | Blaust. Rot |

| | Diazokomponente | Kupplungskomponente | Z | Farbton |
|---|---|---|---|---|
| 19 | 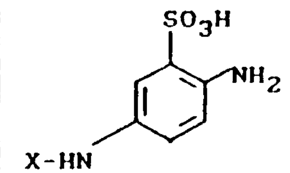 | 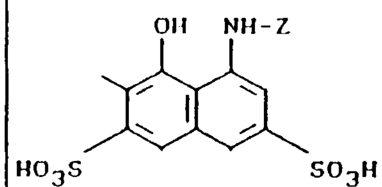 | 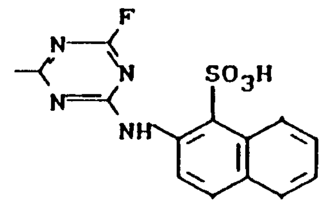 | Rotviolett |
| 20 | 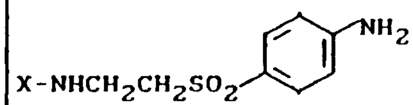 | " | 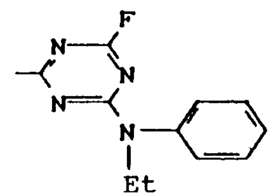 | Rot |
| 21 | 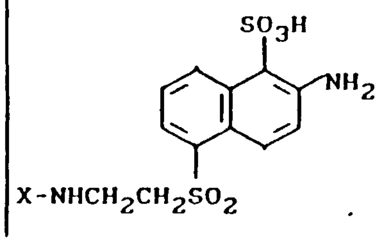 | " | 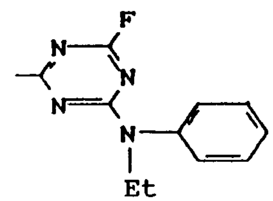 | Rot |

| | Diazokomponente | Kupplungskomponente | Z | Farbton |
|---|---|---|---|---|
| 22 | 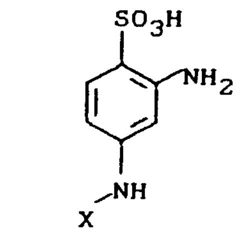 | 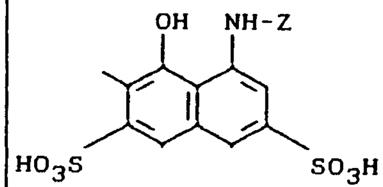 | 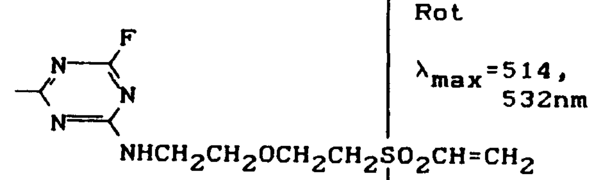 | Rot<br>$\lambda_{max}$=514, 532nm |
| 23 | 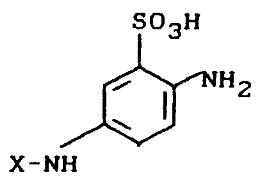 | " | 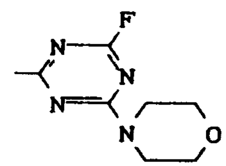 | Rotviolett |
| 24 | 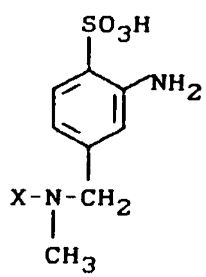 | " | " | Rot<br>$\lambda_{max}$=514, 533nm |

| | Diazokomponente | Kupplungskomponente | Z | Farbton |
|---|---|---|---|---|
| 25 | 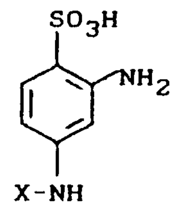 | 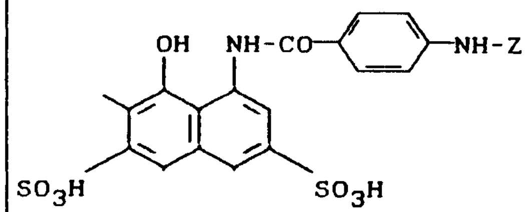 | 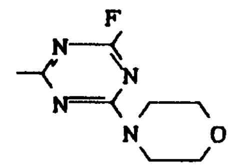 | Rot |
| 26 | 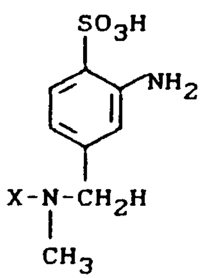 | " | 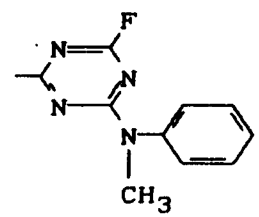 | Rot $\lambda_{max}$= 512nm, 535nm |
| 27 | 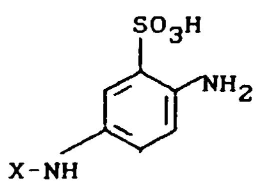 | 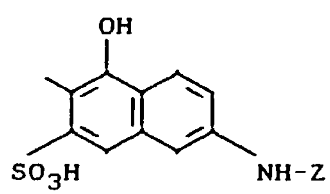 | 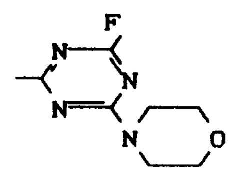 | Schar-lach |

| | Diazokomponente | Kupplungskomponente | Z | Farbton |
|---|---|---|---|---|
| 28 | 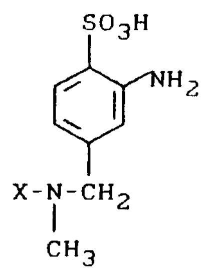 | 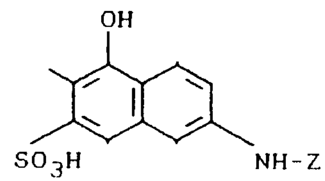 | 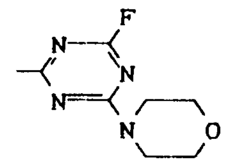 | Orange |
| 29 | 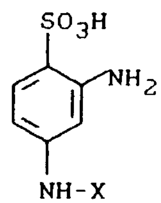 | " | 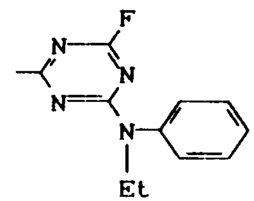 | Orange |
| 30 | 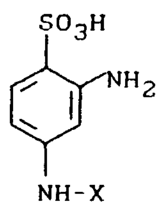 | 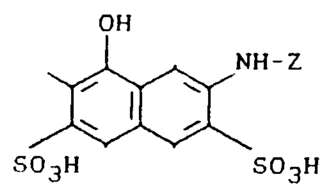 | " | Scharlach-rot $\lambda_{max}$ = 506 nm |

| | Diazokomponente | Kupplungskomponente | Z | Farbton |
|---|---|---|---|---|
| 31 | 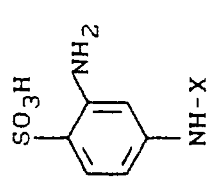 | 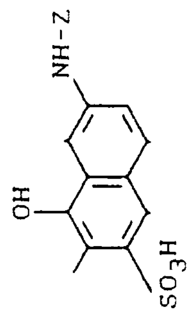 | 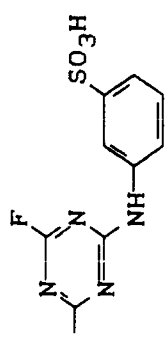 | Orange |

Beispiel 32

0,2 Mol 1-Amino-8-hydroxynaphthalin-3,6-disulfonsäure werden in 450 ml Wasser mit Natronlauge bei pH 8-9 gelöst und mit 0,22 Mol 4,6-Difluor-5-chlorpyrimidin versetzt. Die Kondensation erfolgt bei 35-40 °C,

wobei der pH mit Sodalösung gehalten wird.

Kuppelt man mit der in Beispiel 1 beschriebenen Diazotierung unter gleichen Bedingungen, so erhält man nach Aussalzen, Isolieren, Trocknen den Farbstoff der Formel

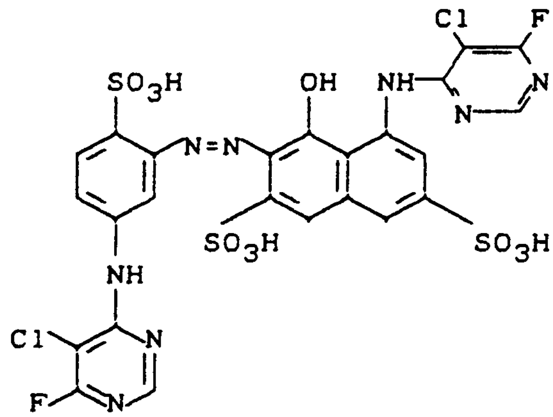

der Baumwolle in roten Tönen färbt.

Beispiel 33

0,2 Mol 8-(4'-amino-benzoylamino)-1-naphthol-3,6-disulfonsäure werden in 800 ml Wasser mit Sodalösung (20 g/100 ml) bei einem pH-Wert von 7 gelöst. Mit 10 %iger HCl-Lösung wird pH 4,5 eingestellt. Man gibt 2,2 Mol 4,6-Difluor-5-chlorpyrimidin zu und heizt auf 30 °C auf. Mit Sodalösung (20 g/100 ml) wird ein pH-Wert von 4,5-6 gehalten. Die Umsetzung ist nach 4 Stunden beendet.

Man gibt nun 0,2 Mol des Diazoniumsalzes aus Beispiel 1 zu und hält gleichzeitig durch Zutropfen von Sodalösung (20 g/100 ml) einen pH-Wert von 7,5-8. Nach beendeter Kupplung salzt man mit NaCl aus, isoliert und trocknet. Der Farbstoff der Formel

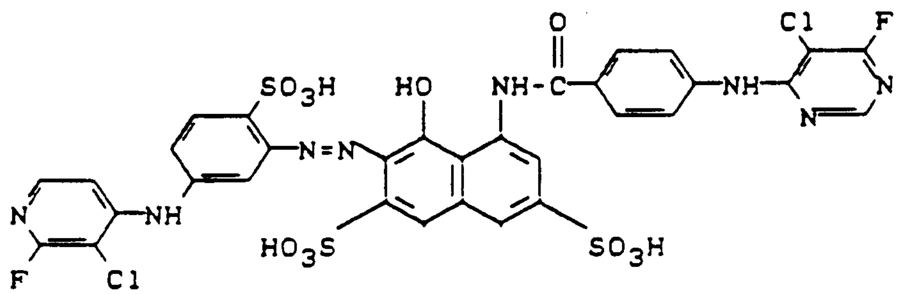

färbt Baumwolle in roten Tönen.

Die Beispiele 34-52 der Formel

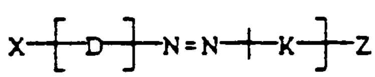

lassen sich wie in Beispiel 32 bez. 33 beschrieben herstellen, wenn die entsprechenden Zwischenprodukte eingesetzt werden. Sie färben Baumwolle in den angegebenen Farbtönen

| | Diazokomponente | Kupplungskomponente | Z | Farbton |
|---|---|---|---|---|
| 35 | 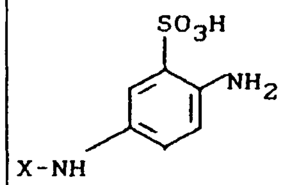 | 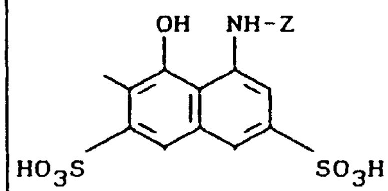 | 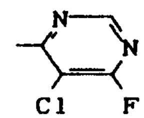 | Rotviolett |
| 36 | 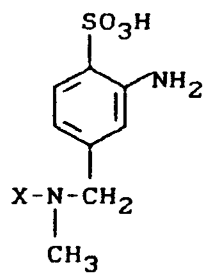 | " | " | Rot |
| 37 | 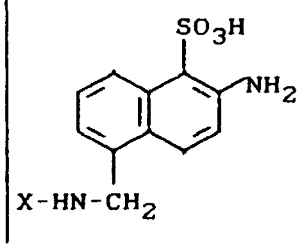 | " | " | Blaust. Rot |

| | Diazokomponente | Kupplungskomponente | Z | Farbton |
|---|---|---|---|---|
| 38 | 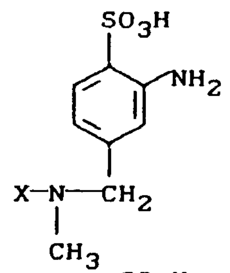 | 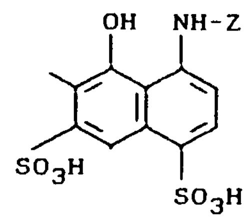 | 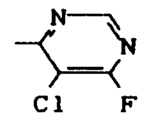 | Rot |
| 39 | 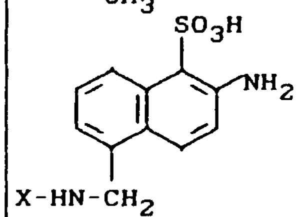 | " | " | Rot |
| 40 | 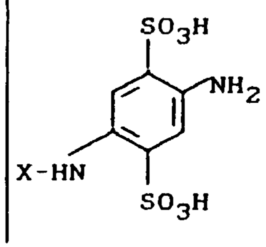 | " | " | Blaust. Rot |

| | Diazokomponente | Kupplungskomponente | Z | Farbton |
|---|---|---|---|---|
| 41 | 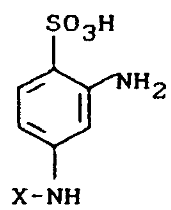 | 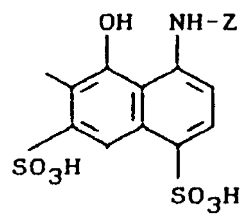 | 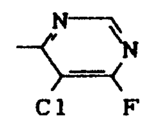 | Rot |
| 42 | 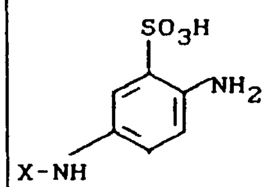 | 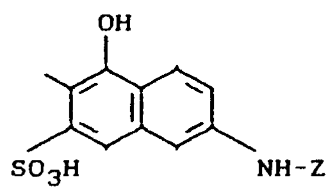 | " | Scharlach |
| 43 | 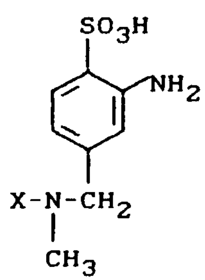 | " | " | Orange |

| | Diazokomponente | Kupplungskomponente | Z | Farbton |
|---|---|---|---|---|
| 44 | 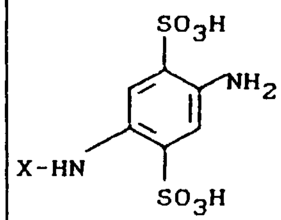 | 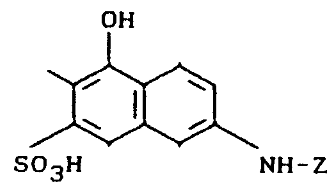 | 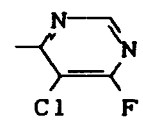 | Rot |
| 45 | 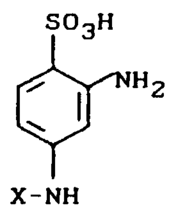 | 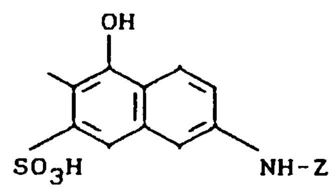 | " | Orange |
| 46 | 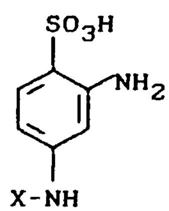 | 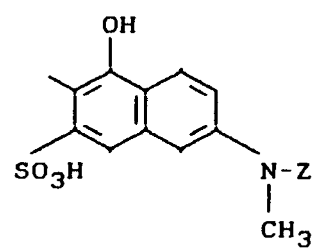 | 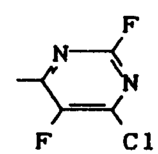 | Orange |

| | Diazokomponente | Kupplungskomponente | Z | Farbton |
|---|---|---|---|---|
| 47 | 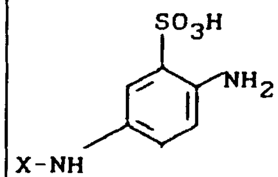 | 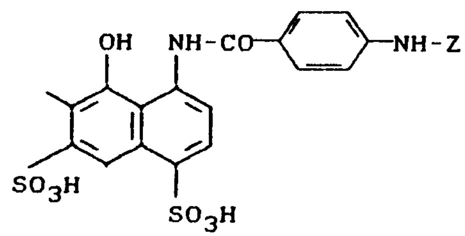 | 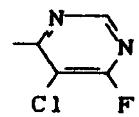 | Blaust. Rot |
| 48 | 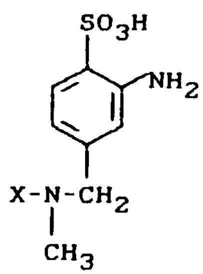 | " | " | Rot |
| 49 | 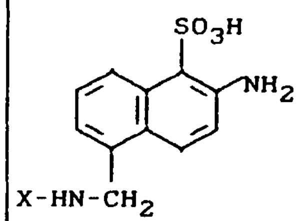 | " | 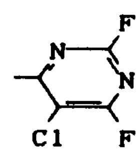 | Rot |

| | Diazokomponente | Kupplungskomponente | Z | Farbton |
|---|---|---|---|---|
| 50 | 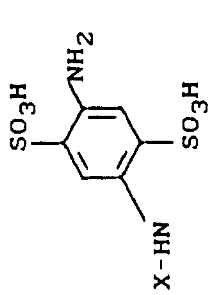 | 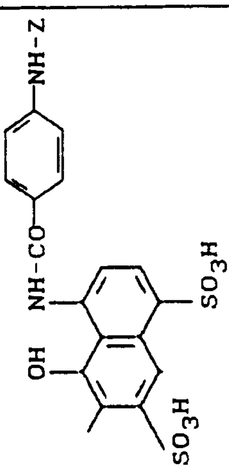 | 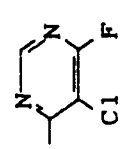 | Blaust. R |
| 51 | 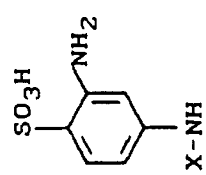 | 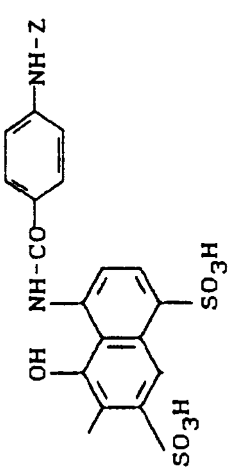 | " | Rot |
| 52 | 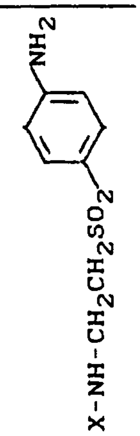 | 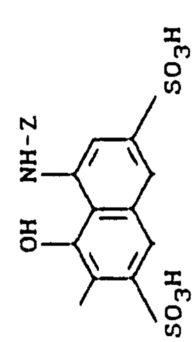 | " | Rot |

Beispiel 53

0,2 Mol 1-Amino-8-hydroxynaphthalin-3,6-disulfonsäure werden in 650 ml Wasser und mit Natronlauge bei pH 6,5 gelöst und auf 35°C erwärmt. Zu dieser Lösung werden 0,21 Mol 2,3-Dichlorchinoxalin-6-carbonsäurechlorid hinzugefügt und der pH mit Sodalösung auf 6-7 eingestellt und ca. 6 h bei 35°C

kondensiert.

Danach wird mit 6-Fluor-5-chlor-4-(3'-amino-4'-sulfophenylamino)-pyrimidin-Diazotierung analog Beispiel 1 gekuppelt.

Der Farbstoff wird ausgesalzen, isoliert, getrocknet und gemahlen. Er hat folgende Formel

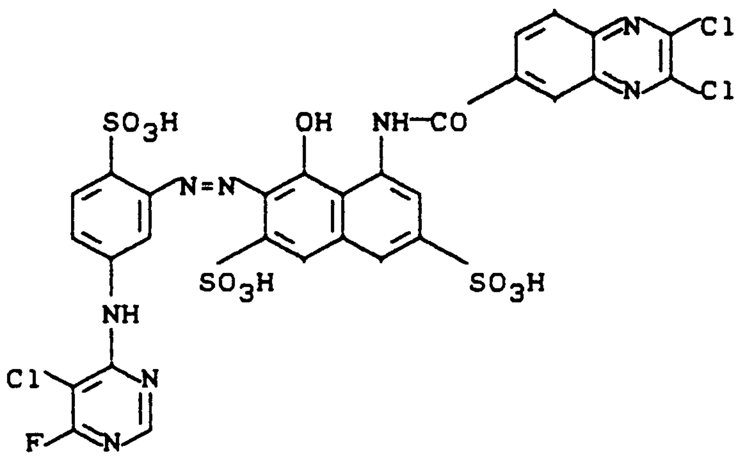

und färbt Baumwolle in roten Tönen.

Wie oben beschrieben, können die Farbstoffe dar Beispiele 54-64 der Formel

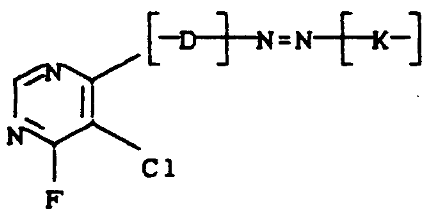

$Z_1$

mit den angeführten Diazo- und Kupplungskomponenten (K) herstellt werden, X hat dabei die in Formel (1) angegebene Bedeutung,

$Z_1$ =

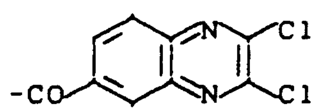

.

| | Diazokomponente | K | Farbton |
|---|---|---|---|
| 54 | 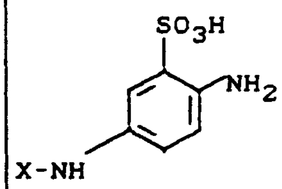 | 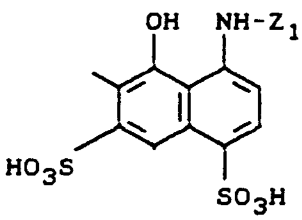 | Blaust. Rot |
| 55 | 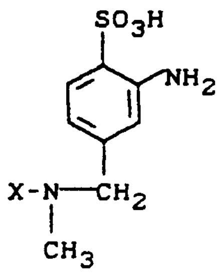 | " | Rot |
| 56 | 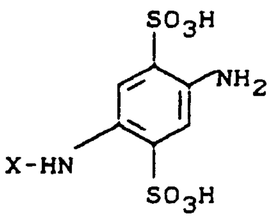 | " | Blaust. Rot |
| 57 | 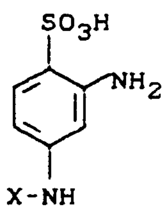 | " | Rot |
| 58 | 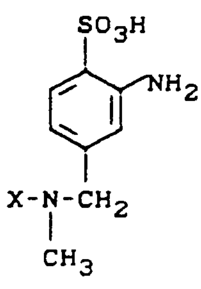 | 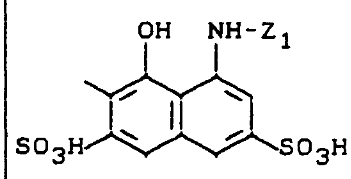 | Rot |

| | Diazokomponente | K | Farbton |
|---|---|---|---|
| 59 | 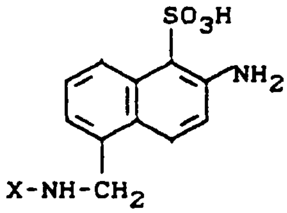 | 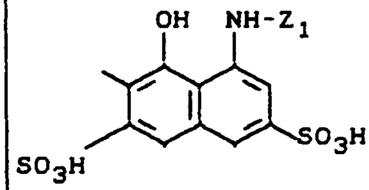 | Blaust. Rot |
| 60 | 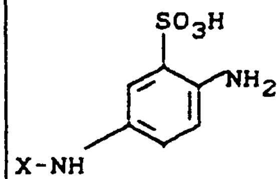 | 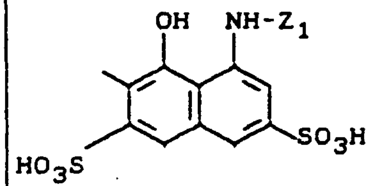 | Rotviolett |
| 61 | 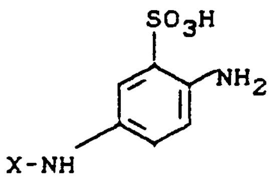 | 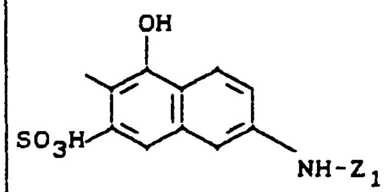 | Scharlach |
| 62 | 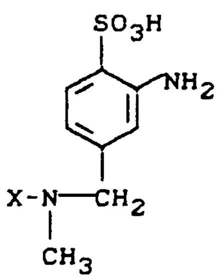 | " | Orange |
| 63 | 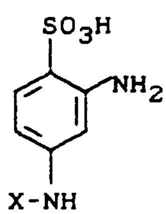 | " | Orange |

| | Diazokomponente | K | Farbton |
|---|---|---|---|
| 64 | 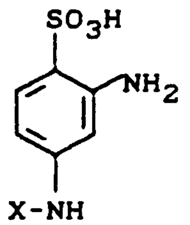 | 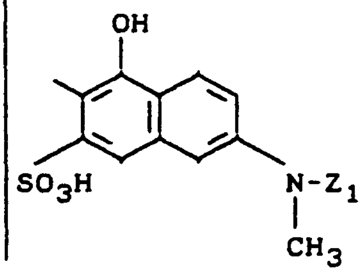 | Orange |

Beispiel 65

0,26 Mol 3-(2-Sulfatoethyl)sulfonyl-anilin werden in 250 ml Wasser mit 1 molarer Natriumhydrogencarbonatlösung neutral gelöst. Man gibt 250 g Eis zu und tropft 0,27 Mol Cyanurfluorid ein. Mit 1 molarer Natriumhydrogencarbonatlösung wird ein pH-Wert von 4-5 gehalten.

Man rührt 10 Minuten nach.

0,2 Mol 8-(4'-amino-benzoylamino)-1-naphthol-3,6-disulfonsäure werden in 300 ml Wasser verrührt und mit 11 %iger Lithiumhydroxydlösung neutral gelöst. Diese Lösung gibt man zur obigen Kondensationslösung zu. Mit Sodalösung wird ein pH-Wert von 6,5-7 gehalten, die Temperatur steigt auf ca. 10 °C. Nach beendeter Reaktion gibt man 0,2 Mol des Diazoniumsalzes aus Beispiel 1 zu und hält gleichzeitig durch Zutropfen von Sodalösung (20 g/100 ml) einen pH-Wert von 7,5-8. Nach 3 Stunden salzt man mit NaCl aus, isoliert und trocknet. Der erhaltene Farbstoff der Formel

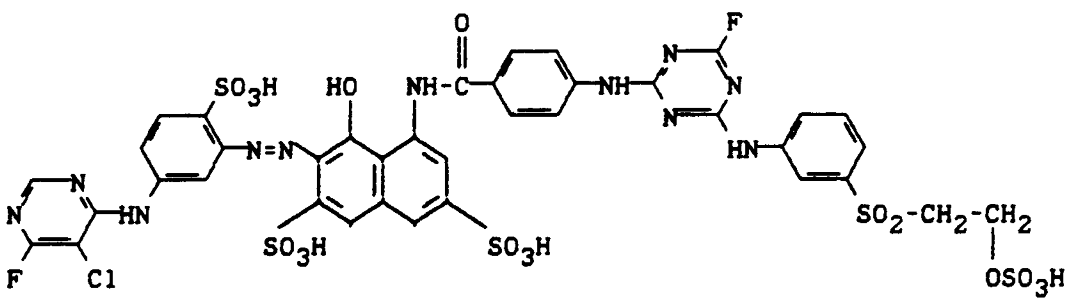

färbt Baumwolle in roten Tönen.

Die Farbstoffe der Beispiele 66-75 erhält man analog unter Verwendung der entsprechenden Diazokomponenten Kupplungskomponenten und Amine. Sie besitzen die allgemeine Formel

$$X-[D]-N=N-[K]-Z \quad .$$

| | Diazokomponente | Kupplungskomponente | Z | Farbton |
|---|---|---|---|---|
| 66 | 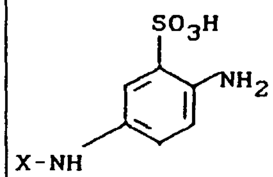 | 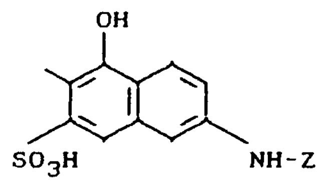 | 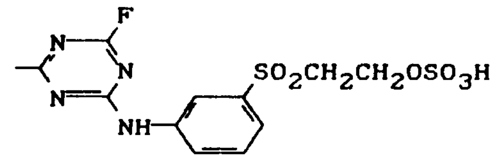 | Scharlach |
| 67 | 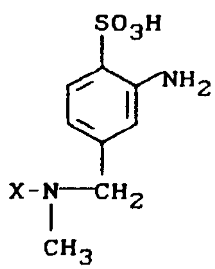 | " | " | Orange |
| 68 | 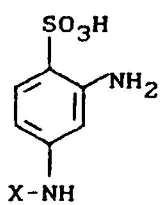 | 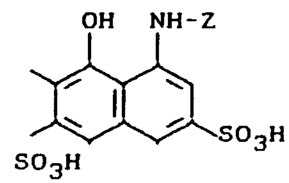 | 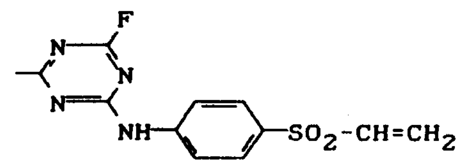 | Rot $\lambda_{max}$= 515nm, SH 535nm |

| | Diazokomponente | Kupplungskomponente | Z | Farbton |
|---|---|---|---|---|
| 69 | 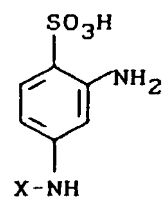 | 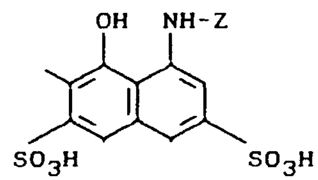 | 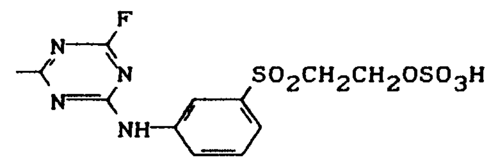 | Rot $\lambda_{max}$ = 514 nm |
| 70 | 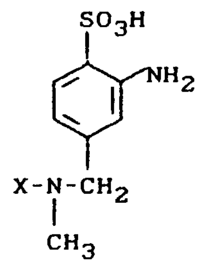 | " | " | Rot |
| 71 | 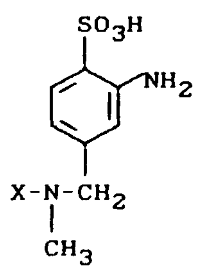 | 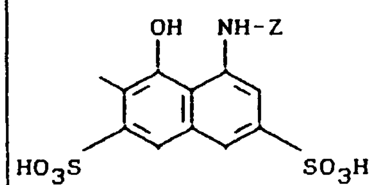 | 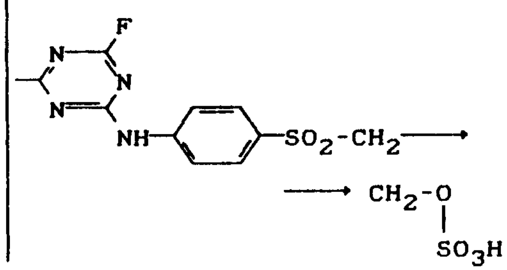 | Rot |

| | Diazokomponente | Kupplungskomponente | Z | Farbton |
|---|---|---|---|---|
| 72 | 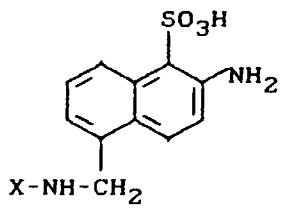 | 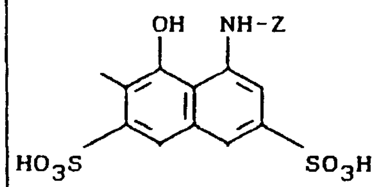 | 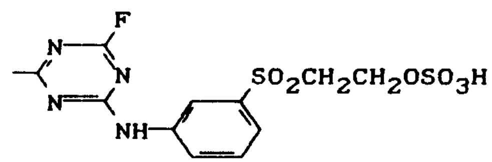 | Rot |
| 73 | 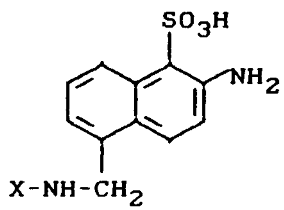 | " | 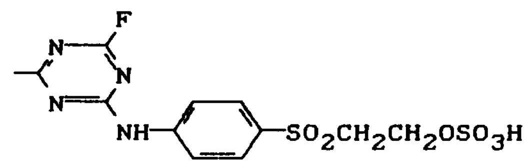 | Blaust. Rot |
| 74 | 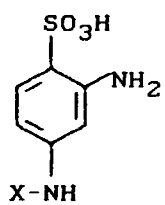 | 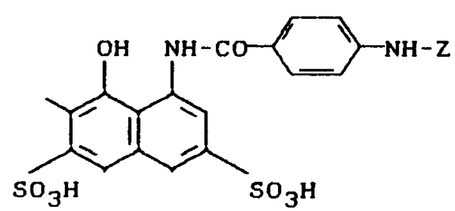 | " | Rot |

| | Diazokomponente | Kupplungskomponente | Z | Farbton |
|---|---|---|---|---|
| 75 | 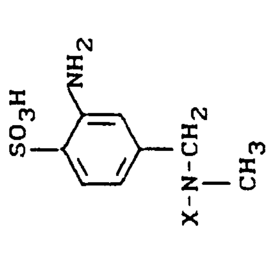 | 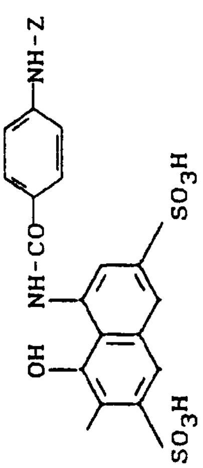 | 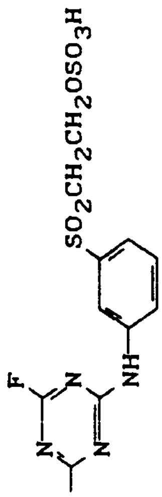 | Rot |

Beispiel 76

a) 0,2 Mol 2-Amino-4-(aminomethyl)-benzolsulfonsäure werden in 500 ml Wasser mit konz. Natronlauge bei einem pH-Wert von 8 gelöst. Man gibt 0,25 Mol 4,6-Difluor-5-chlorpyrimidin zu. Durch gleichzeitige

Zugabe von 11 %iger Lithiumhydroxydlösung wird ein pH-Wert von 8-8,5 gehalten. T = 30 °C - 40 °C. Man kühlt auf 0 °C ab und gibt 56 ml 30 %ige Salzsäure zu.

Innerhalb von 1 Stunde tropft man bei 0-5 °C 47 ml Natriumnitritlösung (30 g/100 ml) ein. Die Diazotierung rührt 1 Stunde bei 0-5 °C nach. Anschließend wird überschüssiges Nitrit durch Zugabe von Amidosulfonsäure zerstört.

b) 0,2 Mol 1-Amino-8-hydroxynaphthalin-4,6-disulfonsäure werden in 300 ml Wasser durch Zugabe von konz. Natronlauge bei pH = 5-7 gelöst. Man gibt 300 g Eis zu und streut 0,21 Mol Cyanurchlorid ein. Mit Sodalösung (20 g/100 ml) wird ein pH-Wert von 4-4,5 bei 0 °C gehalten. Nach beendeter Kondensation gibt man 0,2 Mol einer neutralen Lösung von 4-Chloranilin in ca. 200 ml Wasser zu. Man heizt auf 20-30 °C auf und hält mit Sodalösung (20 g/100 ml) pH 6-7. Nach ca. 1 Stunde kühlt man auf 10 °C ab und gibt die obige Diazotierung a) zu.

Gleichzeitig hält man mit Sodalösung (20 g/100 ml) pH 7-7,5.

Nach beendeter Kupplung salzt man mit NaCl aus, isoliert und trocknet. Der erhaltene Farbstoff der Formel

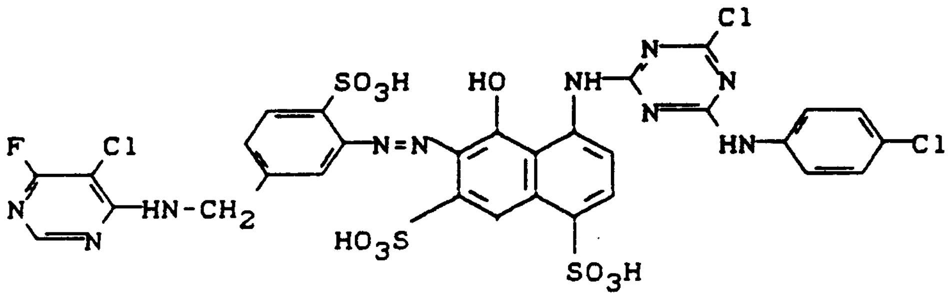

färbt Baumwolle in roten Tönen.

Durch Variation der Diazokomponenten, Kupplungskomponenten und Amine erhält man die Farbstoffe der folgenden Beispiele 77-96 der allgemeinen Formel

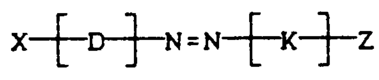

Sie färben Baumwolle in den angegebenen Tönen.

| | Diazokomponente | Kupplungskomponente | Z | Farbton |
|---|---|---|---|---|
| 77 | 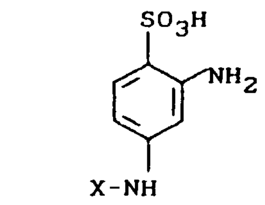 | 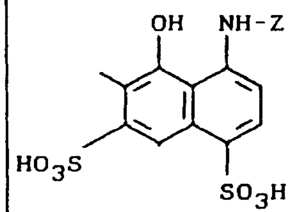 | 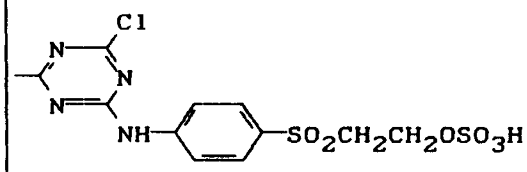 | Gelbst. Rot $\lambda_{max}$ = 510 nm |
| 78 | 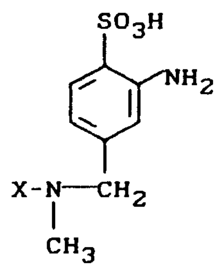 | 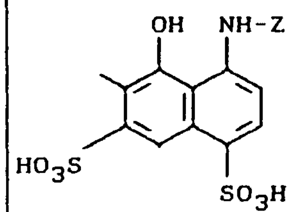 | 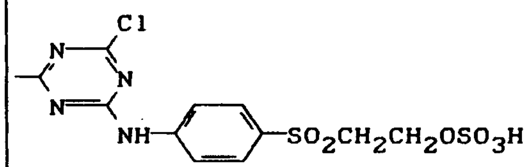 | Gelbst. Rot $\lambda_{max}$ = 510 nm |
| 79 | 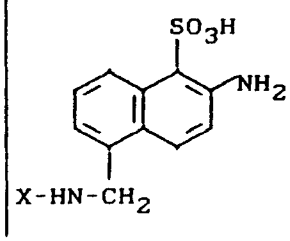 | 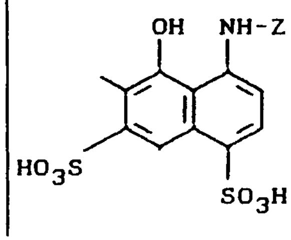 | 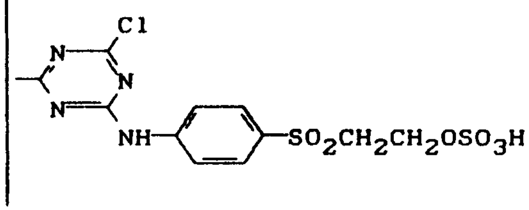 | Rot $\lambda_{max}$ = 518 nm Sh 536 nm |

| | Diazokomponente | Kupplungskomponente | Z | Farbton |
|---|---|---|---|---|
| 80 | 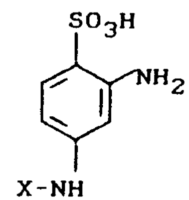 | 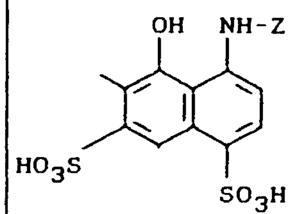 | 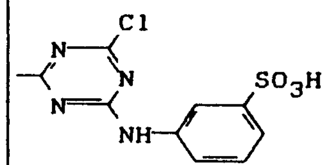 | Gelbst. Rot $\lambda_{max}$ = 510 nm, Sh 528nm |
| 81 | 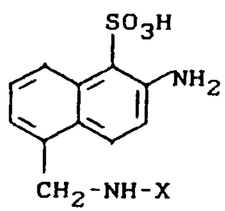 | 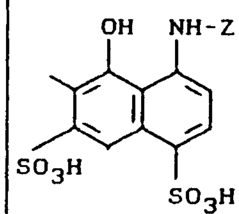 | 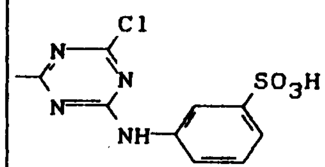 | Rot $\lambda_{max}$ = 516 nm, Sh 538 nm |
| 82 | 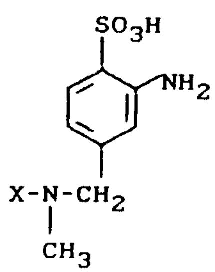 | " | 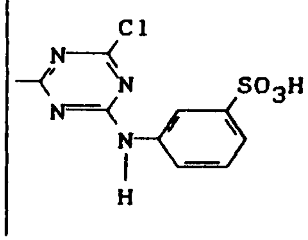 | Gelbst. Rot $\lambda_{max}$ = 508 nm, Sh 526 nm |

| | Diazokomponente | Kupplungskomponente | Z | Farbton |
|---|---|---|---|---|
| 83 | 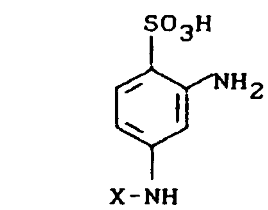 | 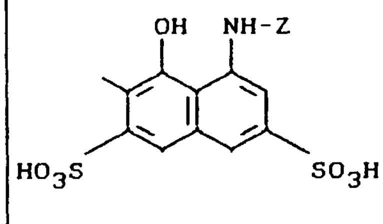 | 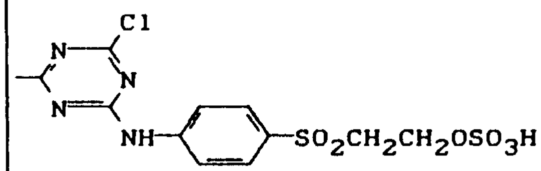 | Rot $\lambda_{max}$ = 515 nm, Sh 534 nm |
| 84 | 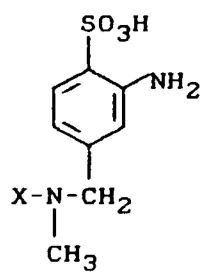 | 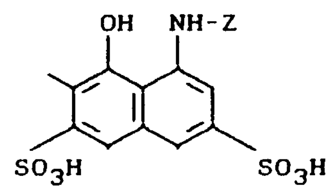 | " | Rot |
| 85 | 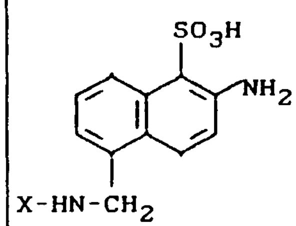 | " | 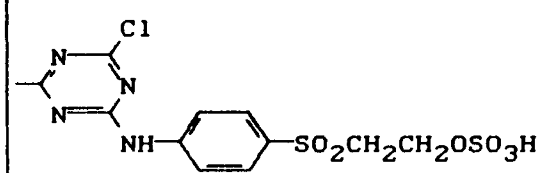 | Blaust. Rot |

| | Diazokomponente | Kupplungskomponente | Z | Farbton |
|---|---|---|---|---|
| 86 | 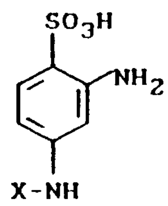 | 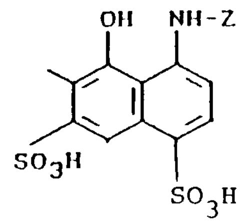 | 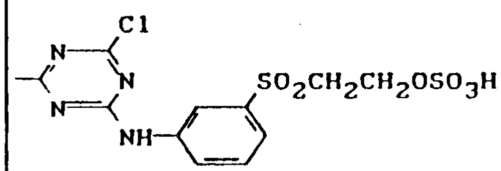 | Rot |
| 87 | 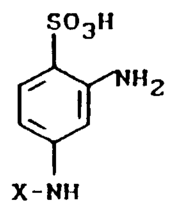 | 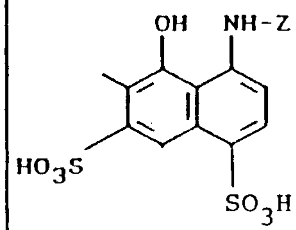 | 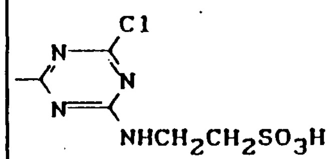 | Rot $\lambda_{max}$= 515 nm Sh 536nm |
| 88 | 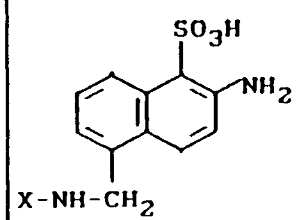 | " | 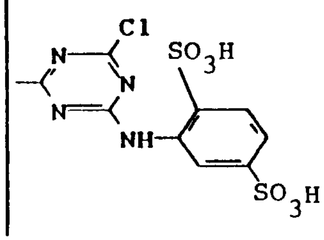 | Rot |

| | Diazokomponente | Kupplungskomponente | Z | Farbton |
|---|---|---|---|---|
| 89 | 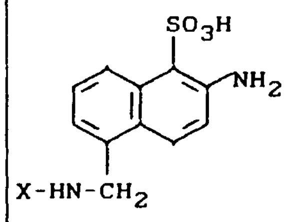 | 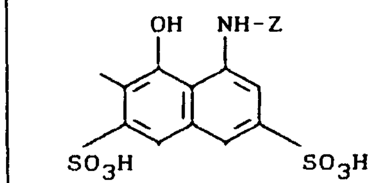 | 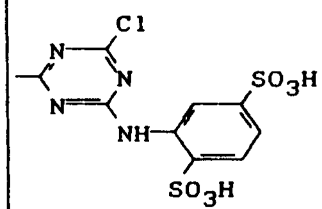 | Blaust. Rot |
| 90 | 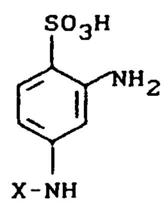 | 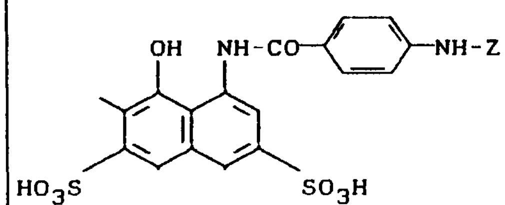 | 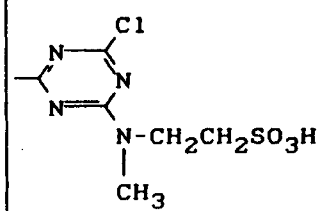 | Rot |
| 91 | 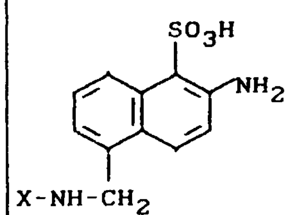 | " | 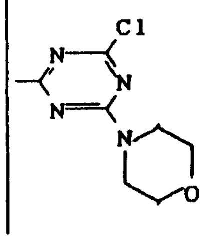 | Rot |

| | Diazokomponente | Kupplungskomponente | Z | Farbton |
|---|---|---|---|---|
| 92 | 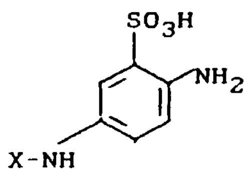 | 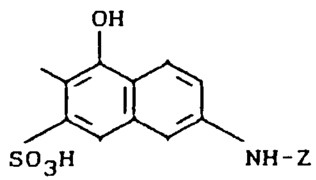 | 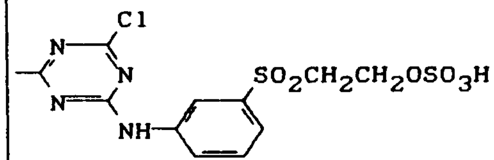 | Scharlach |
| 93 | 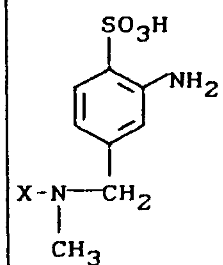 | " | " | Orange |
| 94 | 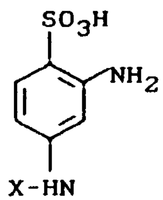 | " | 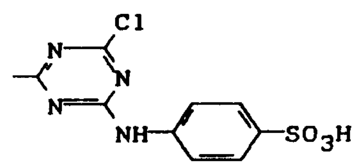 | Orange |

| | Diazokomponente | Kupplungskomponente | Z | Farbton |
|---|---|---|---|---|
| 95 | 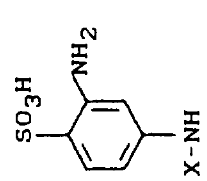 | 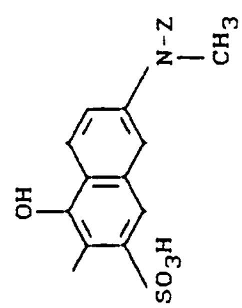 | 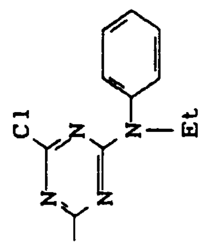 | Orange |
| 96 | 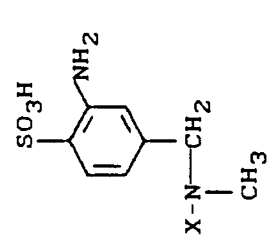 | " | 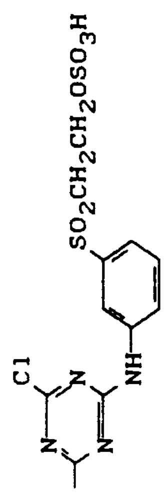 | Orange |

Beispiel 97

0,2 Mol 2-Aminonapthalinsulfonsäure werden in 280 ml Wasser mit Lithiumhydroxyd bei pH 7 gelöst und 250 g Eis zugegeben. Danach werden 0,21 Mol Cyanurfluorid zugegeben und der pH mit Sodalösung bei ca. 4 gehalten. Zu der so entstandenen Suspension wird eine neutrale Lösung von 2,4-Diaminobenzolsulfonsäure gegeben und der pH auf 7-7,5 angehoben. Die Reaktionstemperatur wird auf 20 ° C angehoben und ca. 1 Stunde gerührt. Die Reaktionsmischung wird auf 0 ° C gekühlt und mit HCl und Natriumnitritlösung bei pH 2-2,2 diazotiert. Nach dem Vernichten des Nitritüberschußes mit Amidosulfonsäure kuppelt man auf die in Beispiel 32 beschriebene Kupplungskomponente bei pH 7-8 und 10-15 ° C. Aussalzen, Isolieren und Trocknen ergibt den Farbstoff der Formel

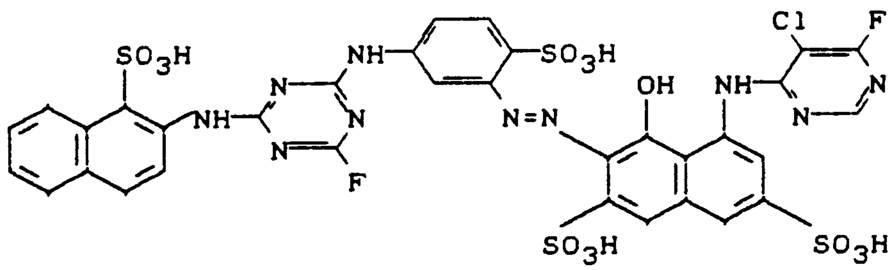

der Baumwolle in roten Tönen färbt.

Die Farbstoffe der Beispiele 98-110 der allgemeinen Formel

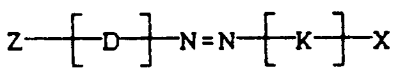

lassen sich auf analoge Weise herstellen unter Verwendung der angegebenen Diazo- und Kupplungskomponenten.

In einigen Fällen ist es jedoch günstiger, zunächst das Azochromophor zu synthetisieren und dann die Reaktivkomponenten oder eine davon (Z) anzukondensieren. Sie färben Baumwolle in den angegebenen Farbtönen.

X hat die in Formel (1) angegebene Bedeutung.

| | Diazokomponente | Kupplungskomponente | Z | Farbton |
|---|---|---|---|---|
| 98 | 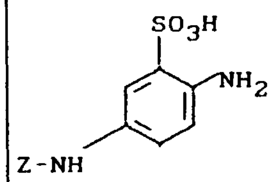 | 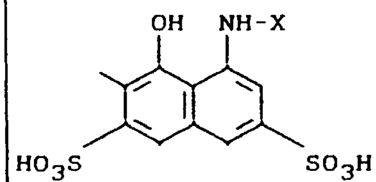 | 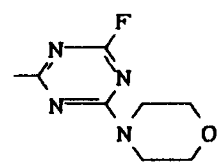 | Rotviolett |
| 99 | 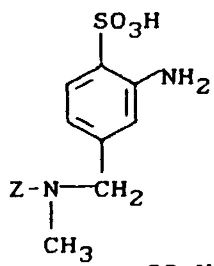 | " | " | Rot |
| 101 | 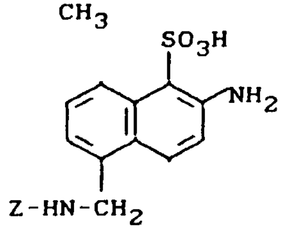 | " | 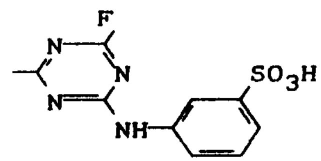 | Blaust. Rot |

| | Diazokomponente | Kupplungskomponente | Z | Farbton |
|---|---|---|---|---|
| 102 | 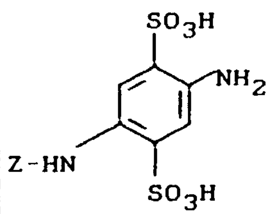 | 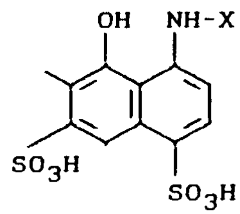 | 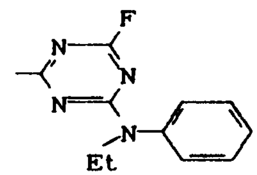 | Blaust. Rot |
| 103 | 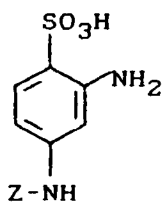 | 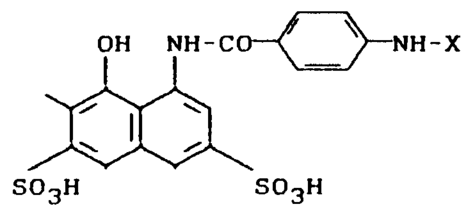 | " | Rot |
| 104 | 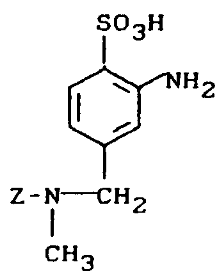 | " | 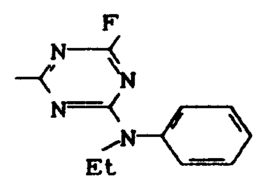 | Rot |

| | Diazokomponente | Kupplungskomponente | Z | Farbton |
|---|---|---|---|---|
| 105 | 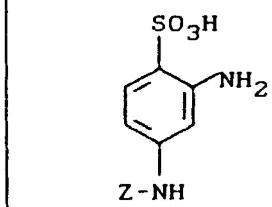 | 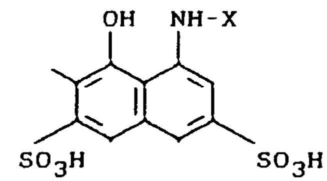 | 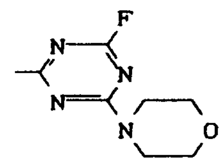 | Rot |
| 106 | 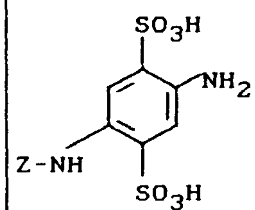 | 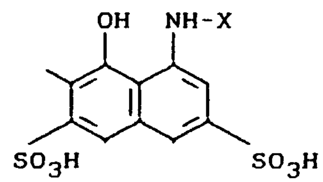 | 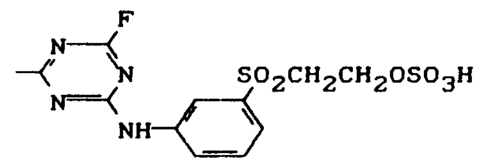 | Rotviolett |
| 107 | 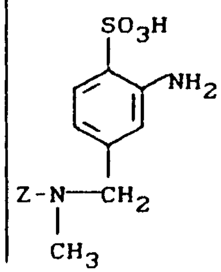 | „ | | Rot |

| | Diazokomponente | Kupplungskomponente | Z | Farbton |
|---|---|---|---|---|
| 108 | 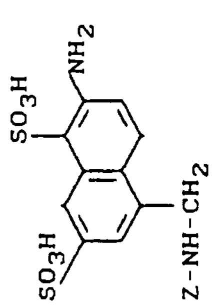 | 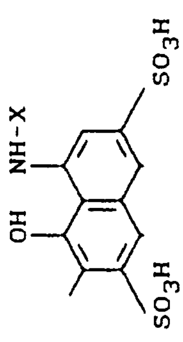 | 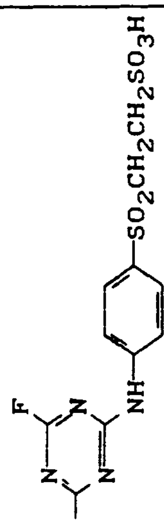 | Blaust. Rot |
| 109 | 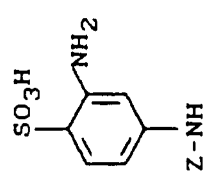 | 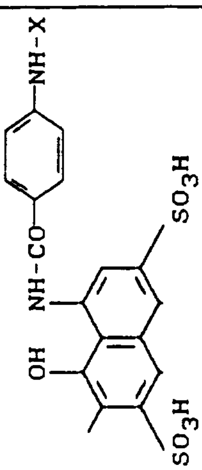 | " | Rot |
| 110 | 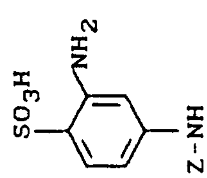 | 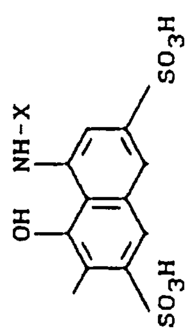 | 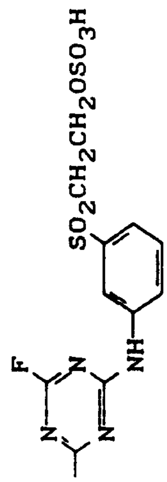 | Rot |

Beispiel 111

0,22 Mol N-Ethylanilin werden in 200 ml Wasser bei pH 7 gelöst. Man gibt 200 g Eis zu und streut 0,24 Mol Cyanurchlorid ein. Mit Sodalösung (20 g/100 ml) hält man einen pH-Wert von 6-7. Nach ca. 1 Stunde

bei 0 ° C ist die Kondensation beendet. 0,2 Mol 2,4-Diamino-benzolsulfonsäure werden in 250 ml Wasser durch Zugabe von konz. Natronlauge gelöst und zu 1 Stufe der Kondensation zugesetzt. Mit Sodalösung (20 g/100 ml) wird ein pH-Wert von 6-7 gehalten. Man heizt auf 25-35 ° C auf. Nach beendeter Kondensation kühlt man auf 0 ° C ab. Es werden 56 ml 30 %iger Salzsäure zugegeben. Man tropft 47 ml Natriumnitritlösung (30 g/100 ml) zu und rührt 1 Stunde bei 0 ° C. Natriumnitrit wird mit Amidosulfonsäure vernichtet und die so erhaltene Diazotierung zur Kupplungskomponente aus Beispiel 32 gegeben. Mit Sodalösung (20 g/100 ml) wird ein pH-Wert von 7-8 gehalten. T = 10-15 ° C. Nach beendeter Kupplung salzt man mit NaCl aus, isoliert und trocknet. Der erhaltene Farbstoff der Formel

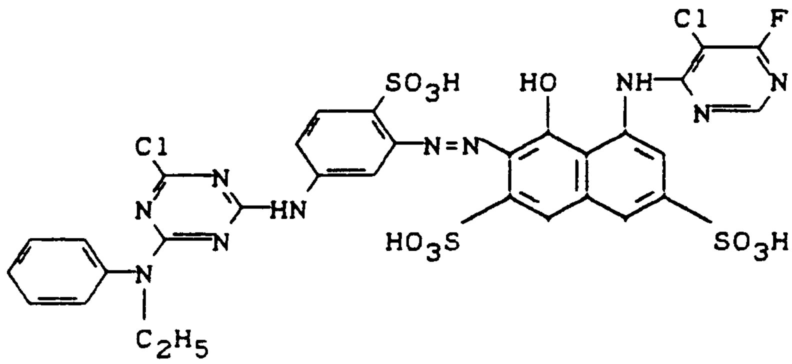

färbt Baumwolle in roten Tönen.

Die Farbstoffe der Beispiele 112-117 der allgemeinen Formel

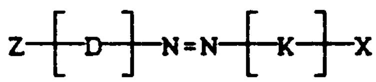

lassen sich unter Verwendung der entsprechenden Diazo-, Kupplungskomponenten und Amine analog herstellen. In einigen Fällen ist es günstiger die Kondensation mit Cyanurchlorid und Amin an den Schluß der Synthese-Frequenz zu stellen.

X hat die in Formel (1) angegebene Bedeutung.

| | Diazokomponente | Kupplungskomponente | Z | Farbton |
|---|---|---|---|---|
| 112 | 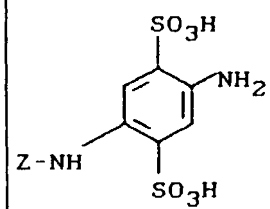 | 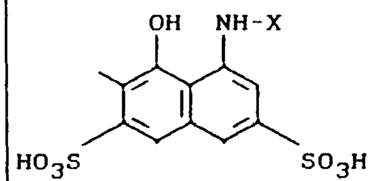 | 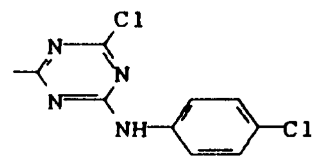 | Rotviolett |
| 113 | 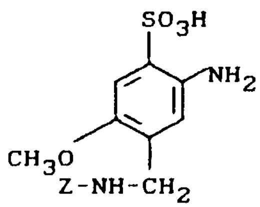 | " | 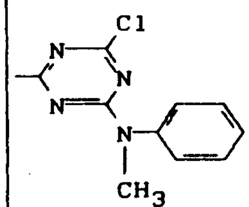 | Blaust. Rot |
| 114 | 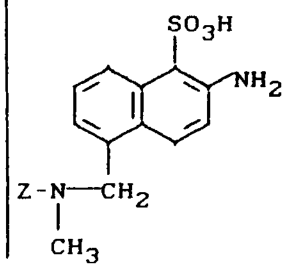 | " | 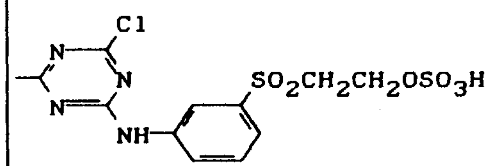 | Blaust. Rot |

| | Diazokomponente | Kupplungskomponente | Z | Farbton |
|---|---|---|---|---|
| 115 | 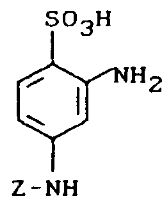 | 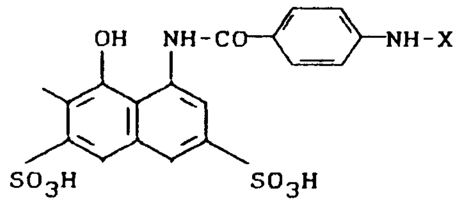 | 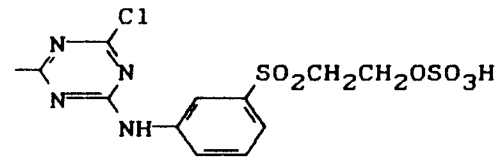 | Rot |
| 116 | 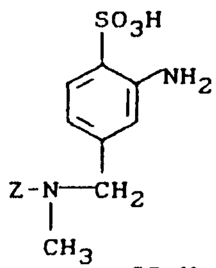 | " | 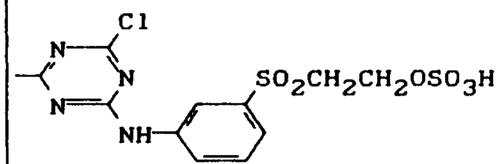 | Rot |
| 117 | 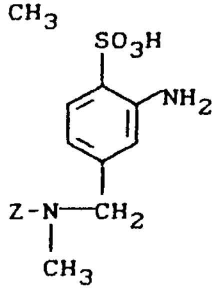 | 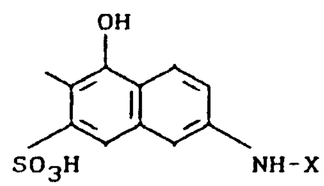 | 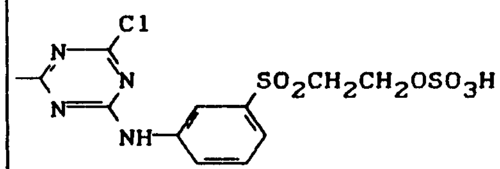 | Orange |

Weitere wertvolle Farbstoffe der Formel

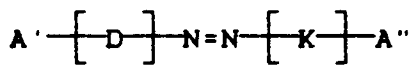

bzw.

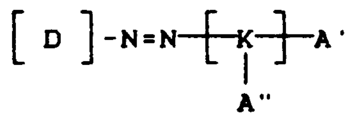

sind die der Beispiele 118-134, die sich nach bekannten Methoden, wie bsp. oben dargestellt, herstellen lassen und Baumwolle in den angegebenen Tönen färben.

| | A' | Diazokomponente | K | A" | Farbton |
|---|---|---|---|---|---|
| 118 | 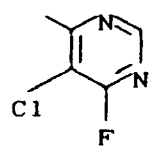 | 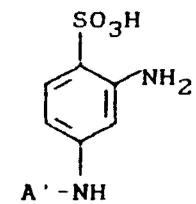 | 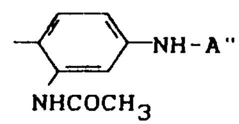 | 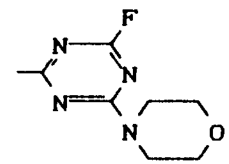 | Goldgelb |
| 119 | 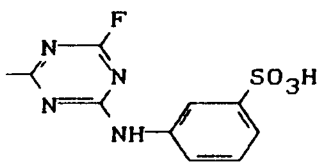 | 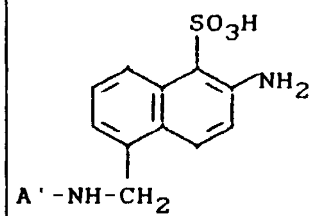 | " | 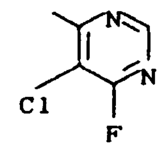 | Goldgelb |
| 120 | 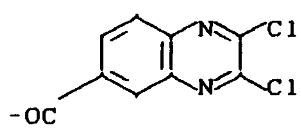 | 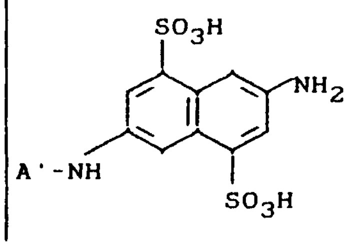 | 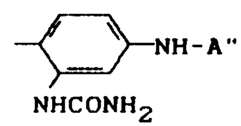 | " | rotst. Gelb |

| | A' | Diazokomponente | K | A" | Farbton |
|---|---|---|---|---|---|
| 121 | 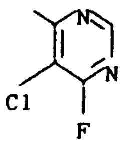 | 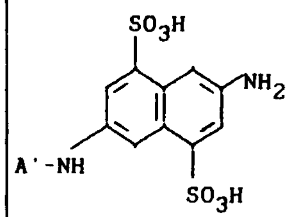 | 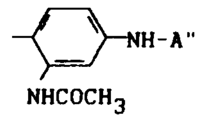 | 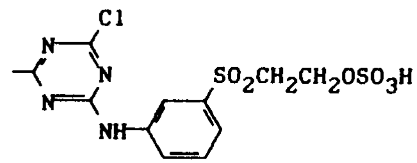 | Rotst. Gelb |
| 122 | " | " | 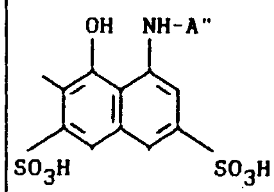 | 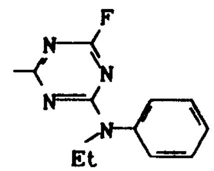 | Blaust. Rot |
| 123 | 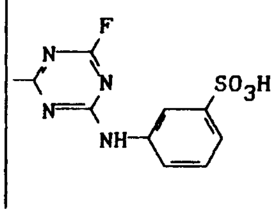 | 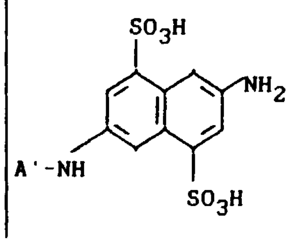 | 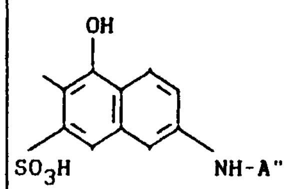 | 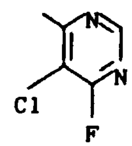 | Orange |

| | A' | Diazokomponente | K | A" | Farbton |
|---|---|---|---|---|---|
| 131 | 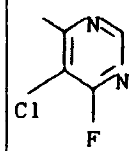 | 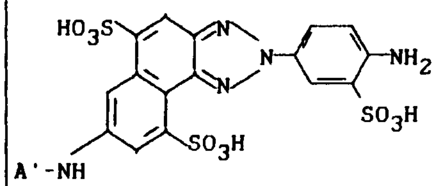 | 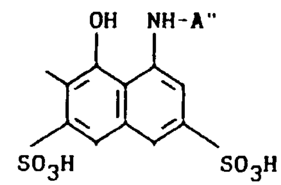 | 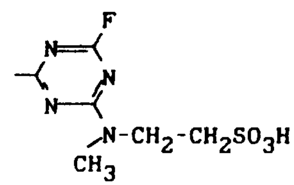 | Violett |
| 132 | " | " | 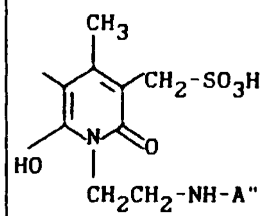 | " | Gelb |
| 133 | " | 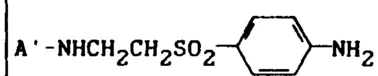 | 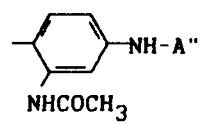 | " | Goldgelb |

| | A' | Diazokomponente | K | A" | Farbton |
|---|---|---|---|---|---|
| 134 | 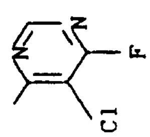 | 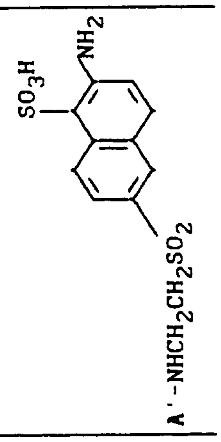 | 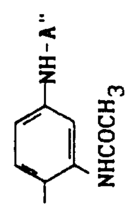 | 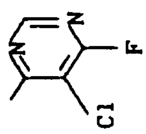 | Goldgelb |

Analog den oben beschriebenen Herstellungsverfahren bzw. nach üblichen Verfahren lassen sich unter Verwendung der entsprechenden Ausgangskomponenten die Farbstoffe der Beispiele 135-149 erhalten.

| | | |
|---|---|---|
| 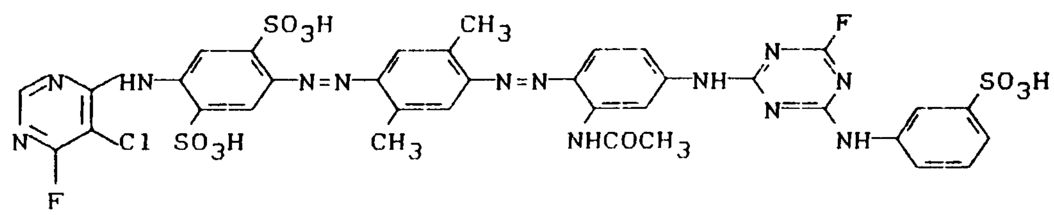 | 135 | Gelbbraun |
| 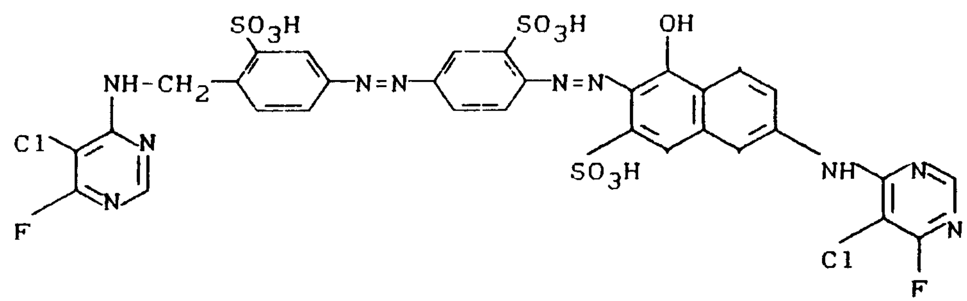 | 136 | Rot |
| 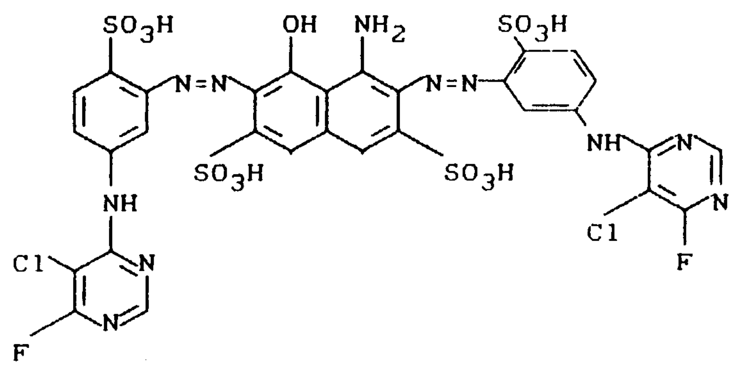 | 137 | Marineblau bzw. Schwarz |

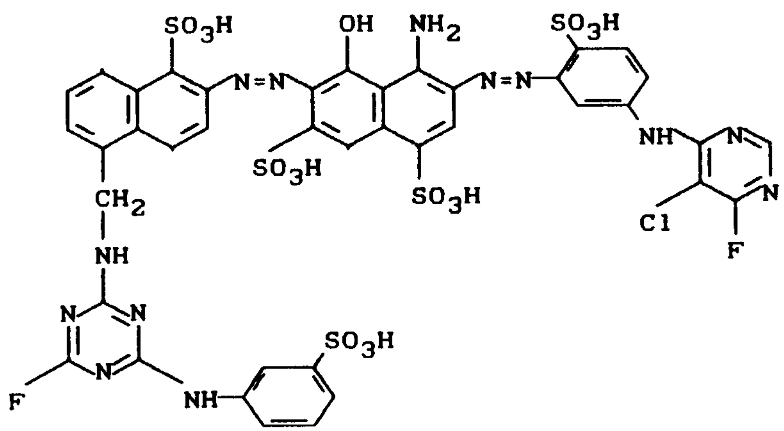

138 Marineblau bzw. Schwarz

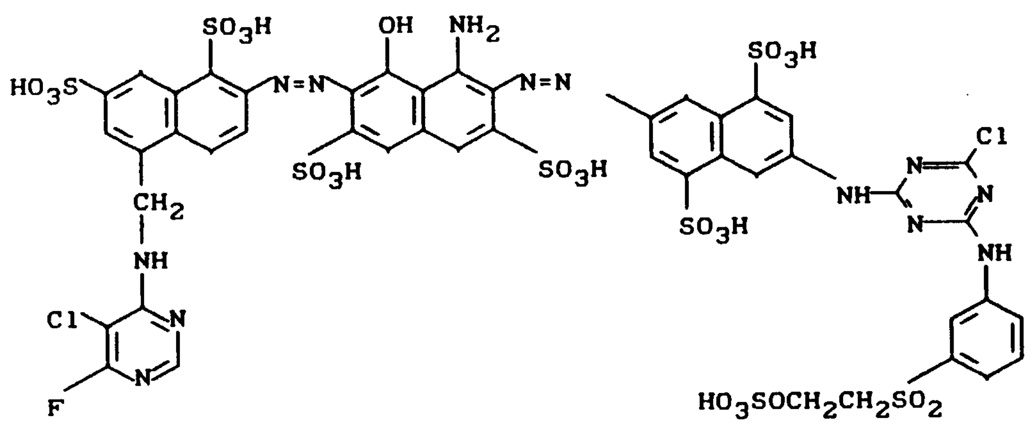

139 Schwarz

140 Marineblau

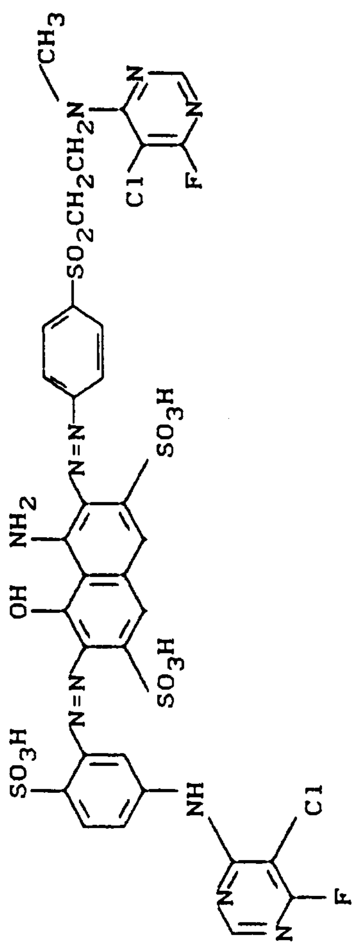

141 Marineblau

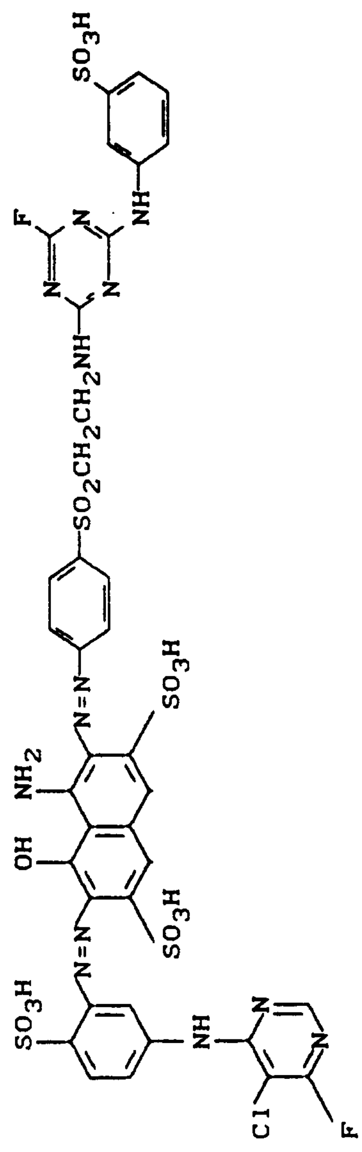

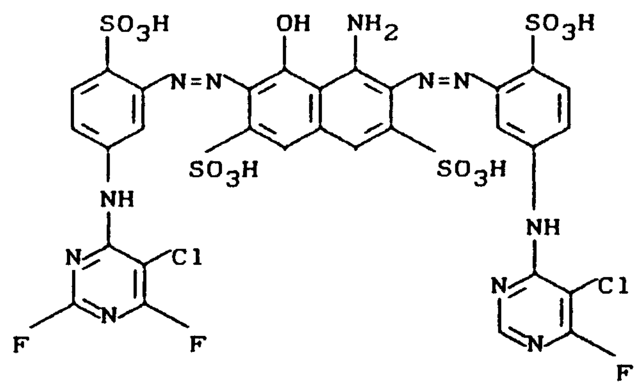

142 Marineblau bzw. Schwarz

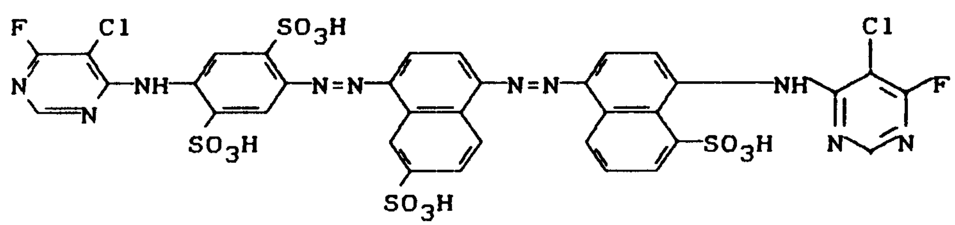

143 Braun

144 Blau

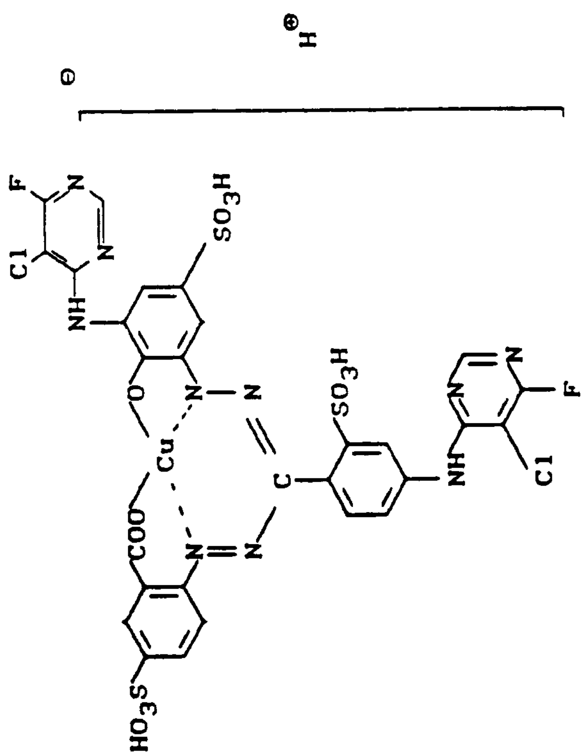

145 Blau

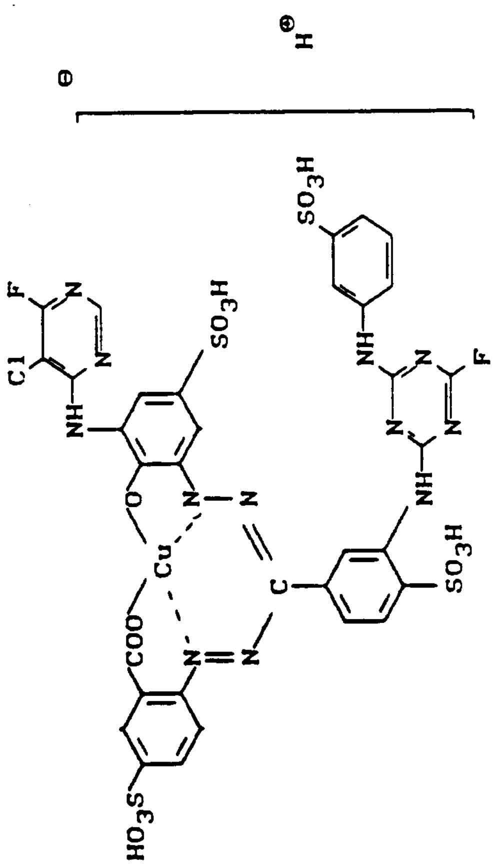

146 Blau

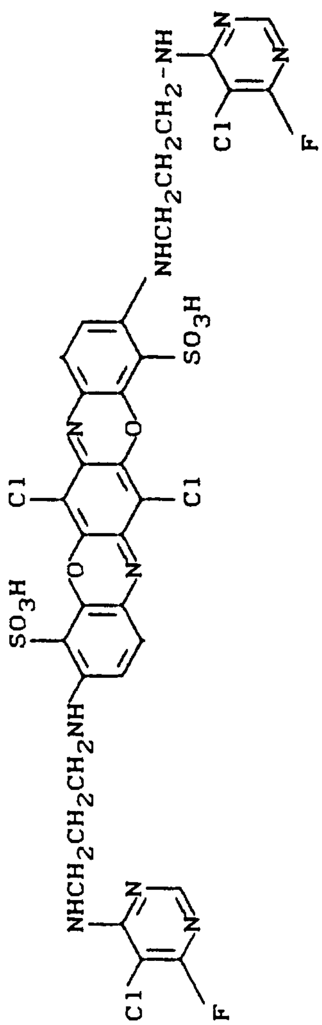

147 Blau

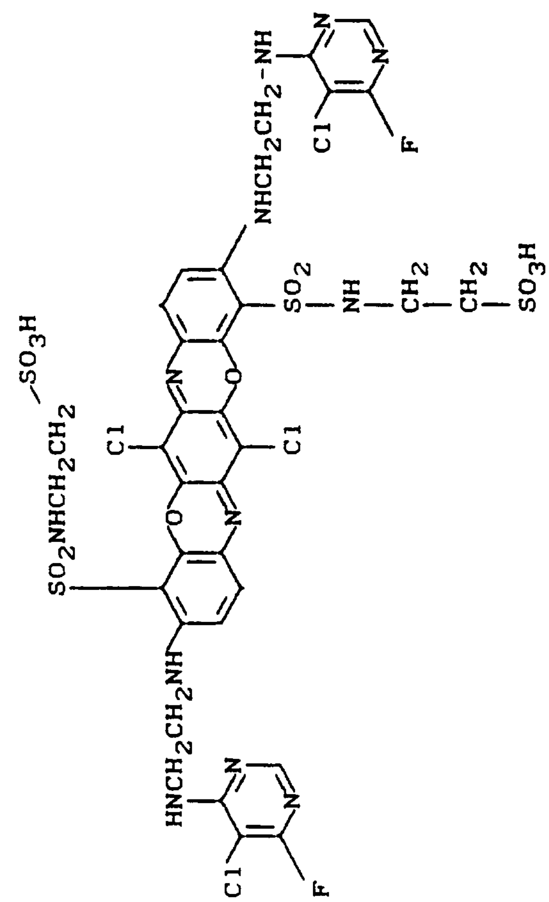

148

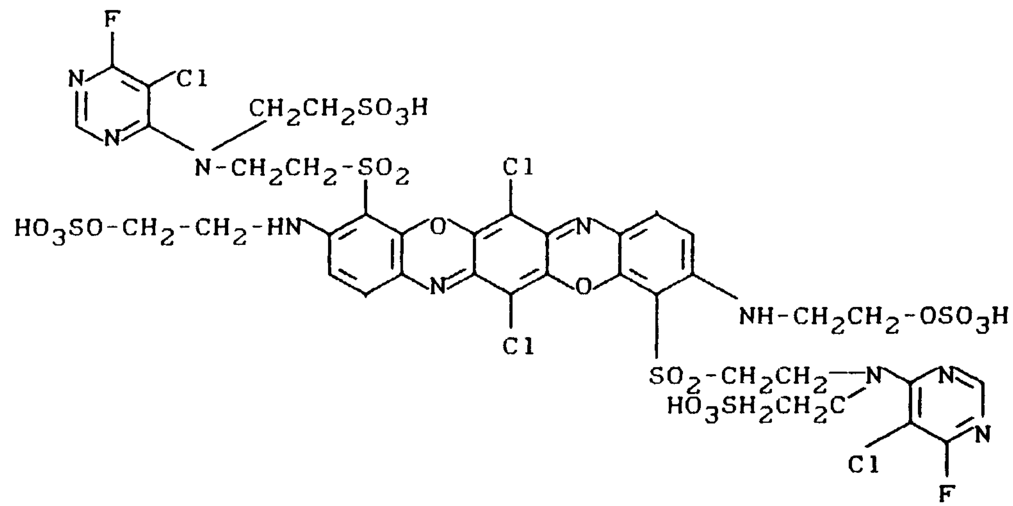

Blau

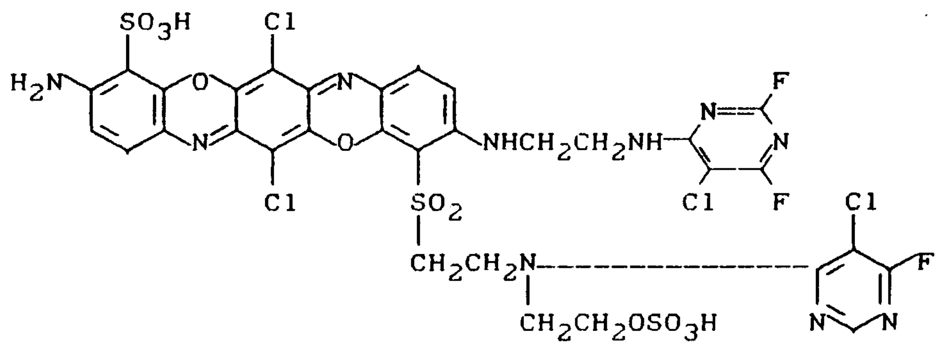

Blau

149 Rot

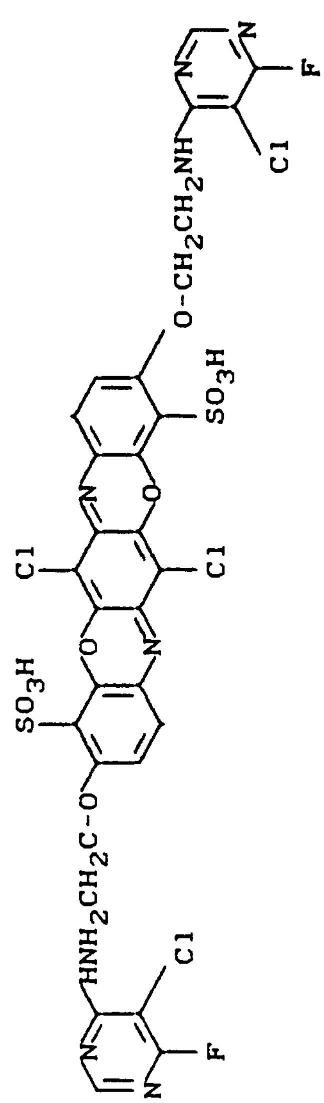

## Patentansprüche

1. Reaktivfarbstoffe der Formel

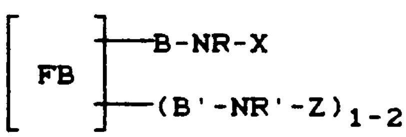

(1)

insbesondere Farbstoffe der Formel

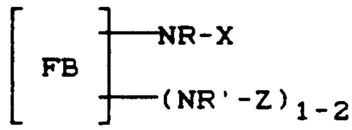

(1a)

worin

FB = der Rest eines Farbstoffes bzw. der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe,

B bzw. B' = direkte Bindung oder Brückenglied an ein Ring C-Atom eines aromatisch-carbocyclischen oder an ein Ring-C- oder -N-Atom eines aromatisch-heterocyclischen Ringes in FB,

X =

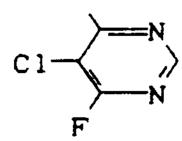

Z = heterocyclischer faserreaktiver Rest

R, R' = H, gegebenenfalls substituiertes $C_1$-$C_6$-Alkyl mit Ausnahme des Farbstoffs der Formel

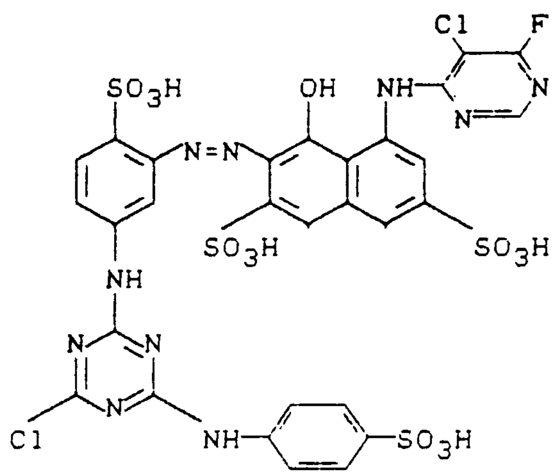

**2.** Farbstoffe des Anspruchs 1 der Formel

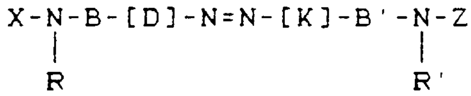
(1b)

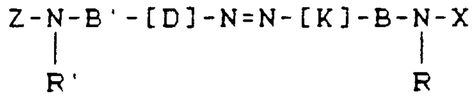
(1c)

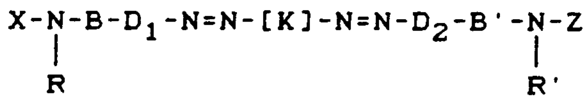
(1d)

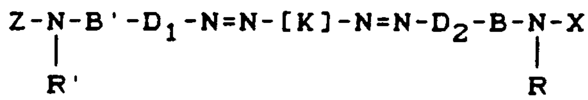
(1e)

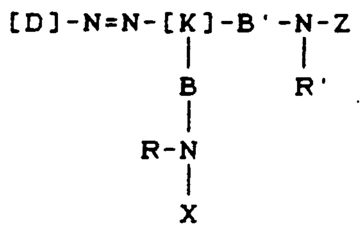
(1f)

worin
-K- in Formeln (1d) und (1e) für den Rest einer zweifach kuppelnden Kupplungskomponente steht,

D, $D_1$, $D_2$ = Rest einer Diazokomponente der Benzol- oder Naphthalinreihe,

K = Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest.

**3.** Farbstoffe des Anspruchs 1 mit Z = faserreaktiver fluorhaltiger Pyrimidyl-4-Rest, insbesondere X.

**4.** Farbstoffe des Anspruchs 1 mit Z =

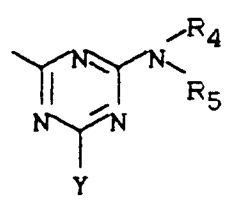

worin $R_4$ und $R_5$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenethyl, Cyclohexyl, Phenyl oder $-NHCH_2CH_2OCH_2CH_2-SO_2M$ (M = $-CH=CH_2$ oder $-CH_2CH_2V$ mit V = alkalisch eliminierbarer Rest), Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo oder Naphthyl, das gegebenenfalls substituiert ist durch

Halogen, Nitro, $C_{1-4}$-Alkoxy, $C_{1-4}$-Alkanoylamino, Hydroxy, Carboxy oder Sulfo, ist, oder worin $R_4$ und $R_5$ zusammen mit dem Aminostickstoffatom einen Morpholino-, Piperidino- oder Piperazinorest bilden, und worin Y = Cl, F oder gegegebenenfalls substituierter Pyridiniumrest ist.

**5.** Farbstoffe des Anspruchs 4
worin $R_4$ und $R_5$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenethyl, Cyclohexyl, Phenyl oder $-NHCH_2CH_2OCH_2CH_2-SO_2M$ (M = $-CH=CH_2$ oder $-CH_2CH_2V$ mit V = alkalisch aliminierbarer Rest), Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, ist,
oder worin $R_4$ und $R_5$ zusammen mit dem Aminostickstoffatom einen Morpholino-, Piperidino- oder Piperazinorest bilden, und worin Y = Cl ist.

**6.** Farbstoffe des Anspruchs 4
worin $R_4$ und $R_5$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenethyl, Cyclohexyl, Phenyl oder $-NHCH_2CH_2OCH_2CH_2-SO_2M$ (M = $-CH=CH_2$ oder $-CH_2CH_2V$ mit V = alkalisch eliminierbarer Rest), Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, ist,
oder worin $R_4$ und $R_5$ zusammen mit dem Aminostickstoffatom einen Morpholino-, Piperidino- oder Piperazinorest bilden, und worin Y = F ist.

**7.** Farbstoffe des Anspruchs 1, worin

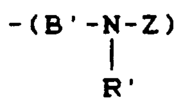

für

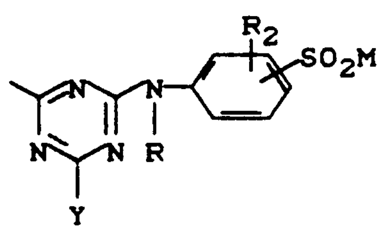

(III)

steht, worin

Y = Cl, F oder gegebenenfalls substituierter Pyridiniumrest ist,
M = $CH=CH_2$ oder $CH_2CH_2$-V, worin
V = alkalisch eliminierbarer Rest, z.B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4$,$[N(CH_3)_3]^+$Anion$^-$oder gegebenenfalls substituierter Pyridinium-Rest (Substituenten insbesondere gegebenenfalls substituiertes $C_1$-$C_4$-Alkyl, COOH, $SO_3H$, CN, Carbonamid) und
$R_2$ = H, Cl, Br, $C_1$-$C_4$-Alkyl, $C_1$-$C_4$-Alkoxy, $CO_2H$ oder $SO_3H$.

**8.** Farbstoffe des Anspruchs 1 der Formeln

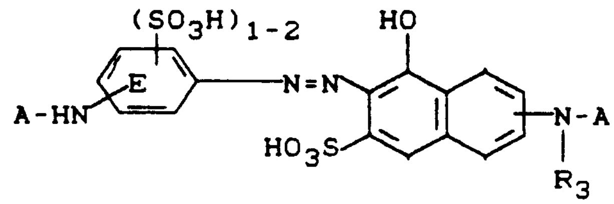

(2),

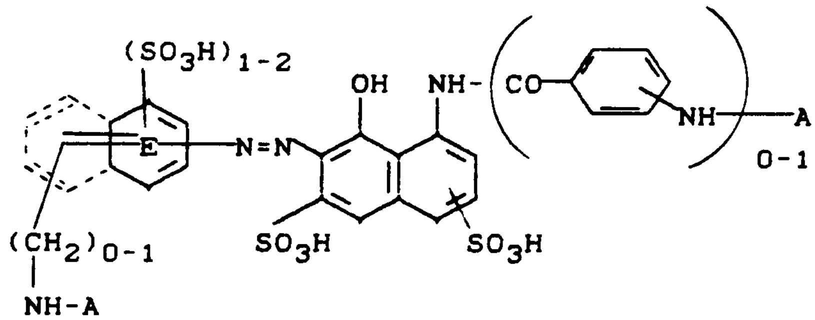

(3)

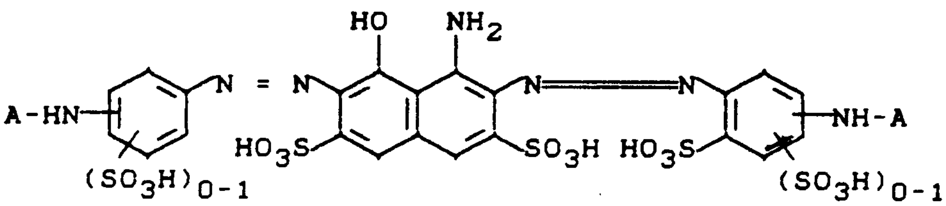

(4),

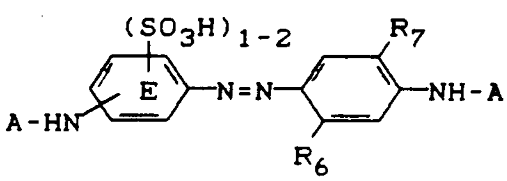

(5)

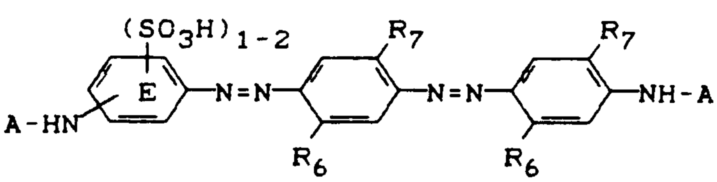

(6)

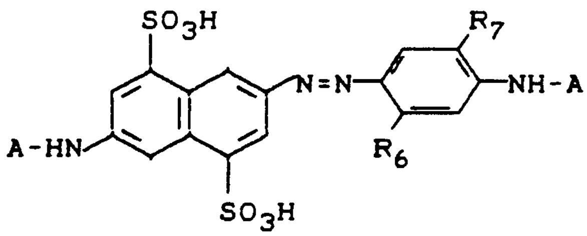

(7)

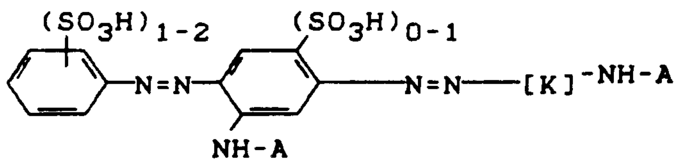

(8)

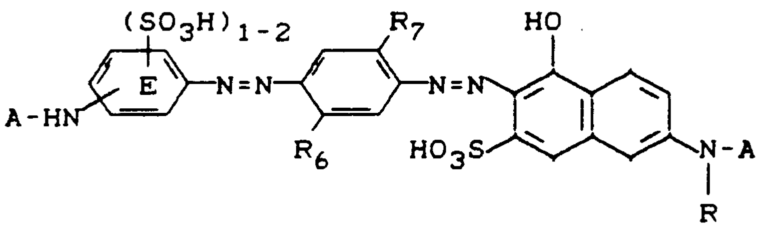

(9)

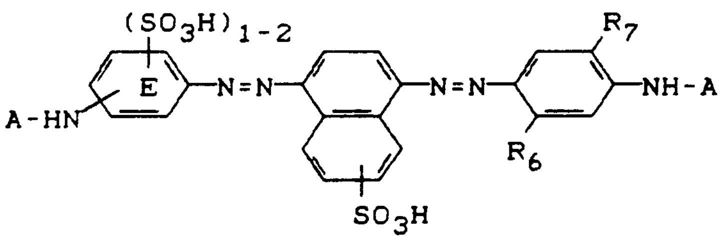

(10)

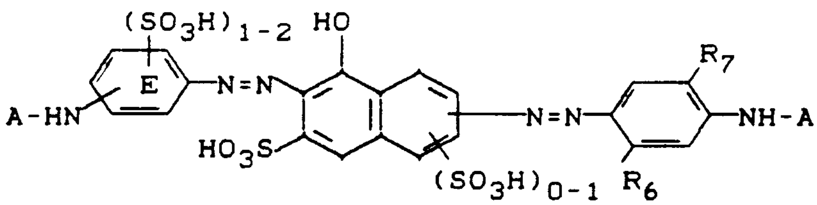

(11)

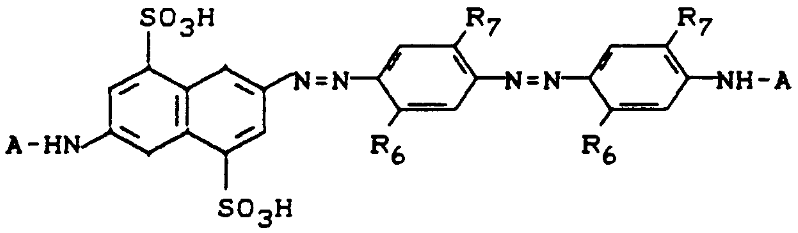

(12)

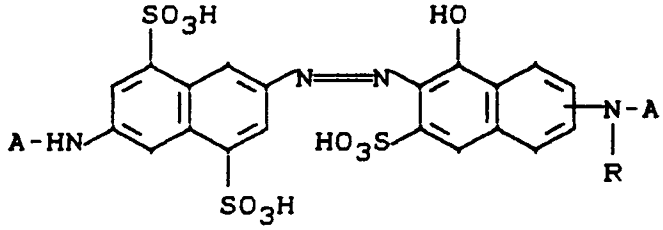

(13)

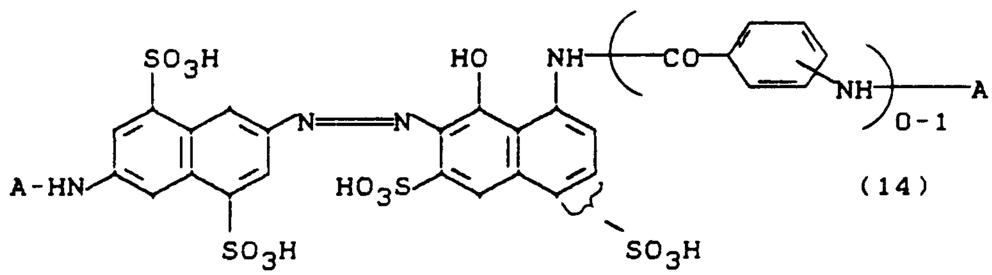

(14)

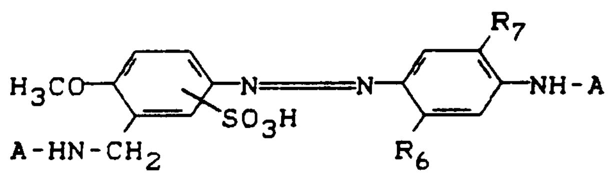

(15)

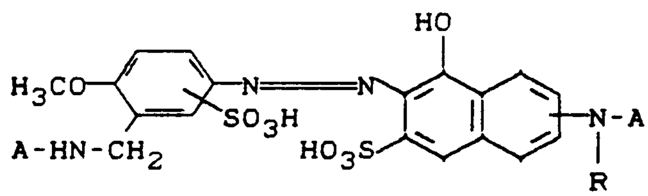

(16)

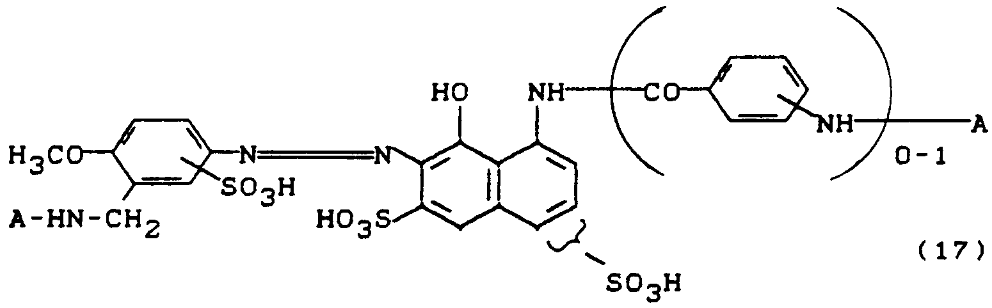

(17)

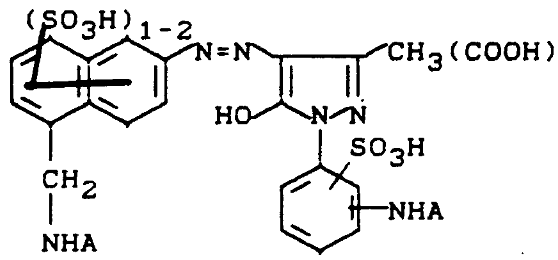

(18)

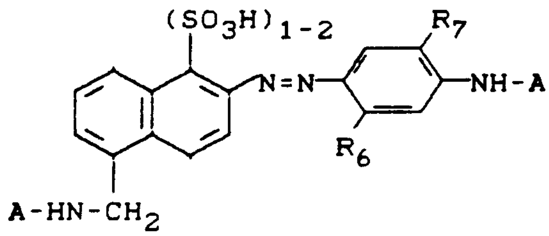

(19)

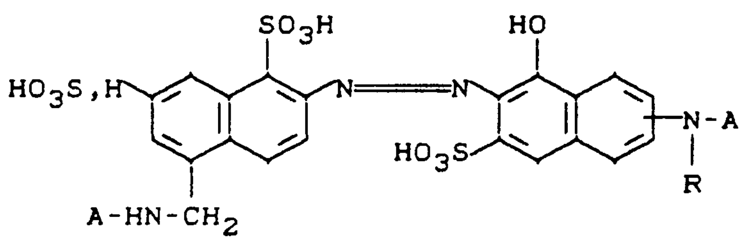

(20)

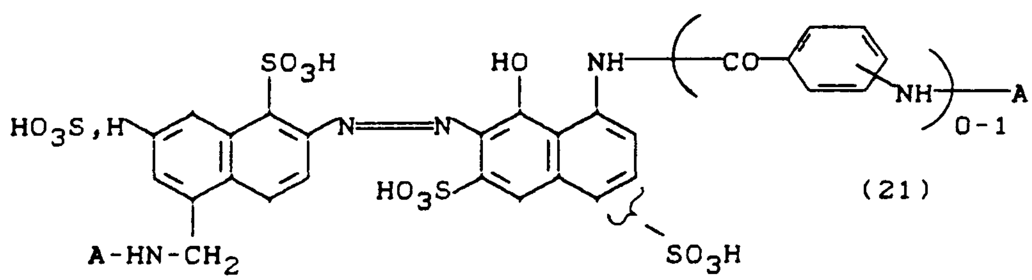

(21)

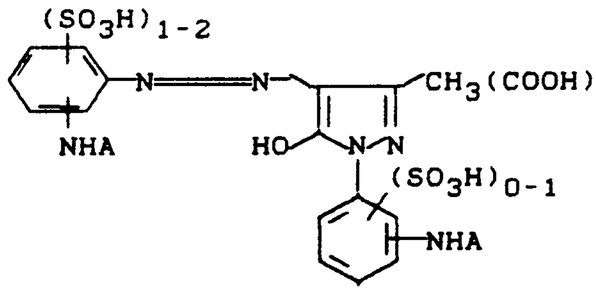

(22)

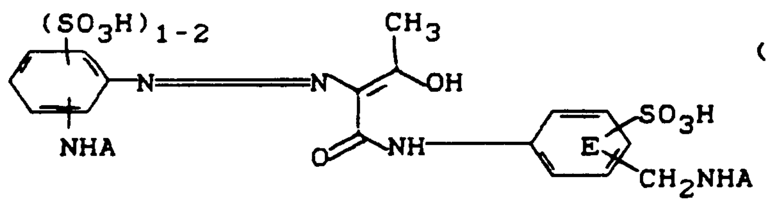

(23)

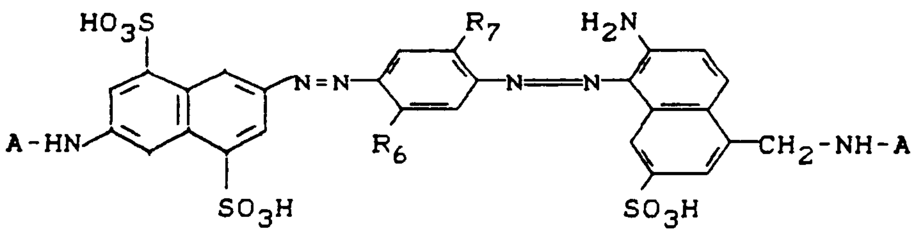

(24)

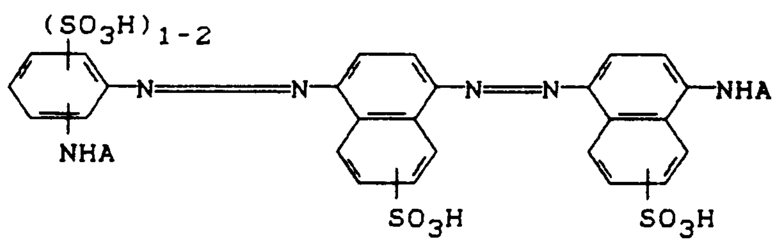

(25)

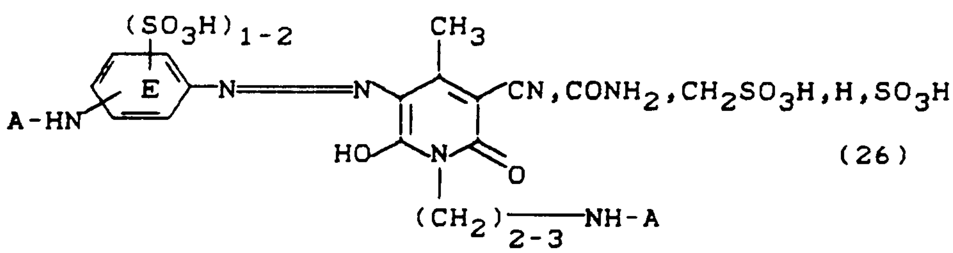

(26)

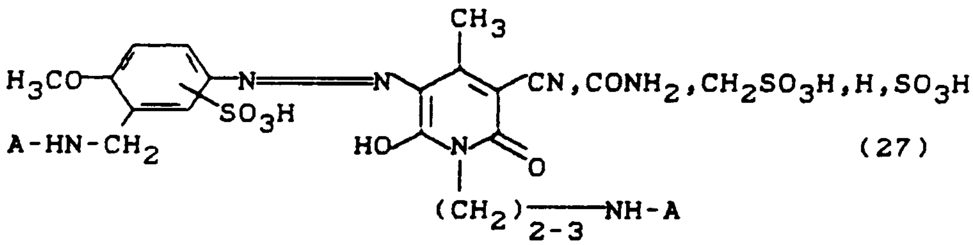

(27)

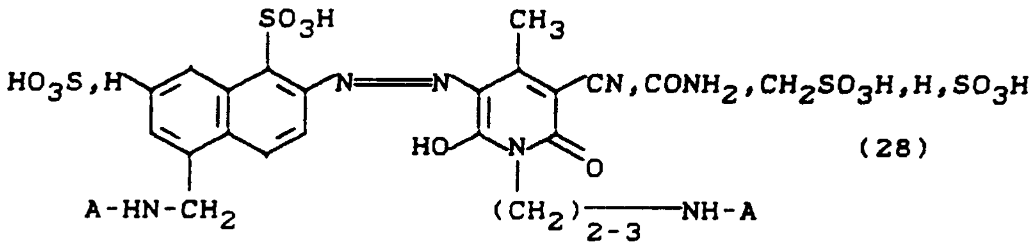

(28)

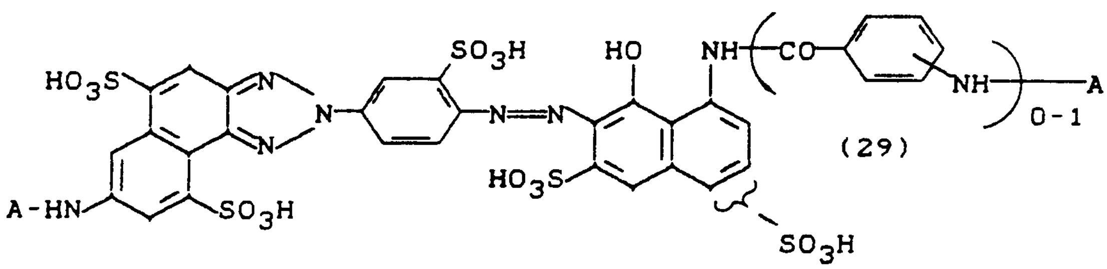

(29)

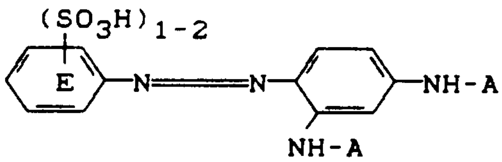

(30)

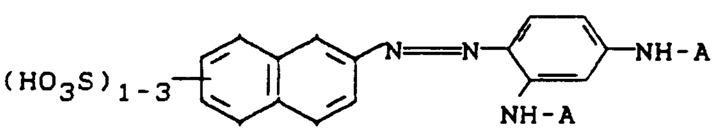

(31)

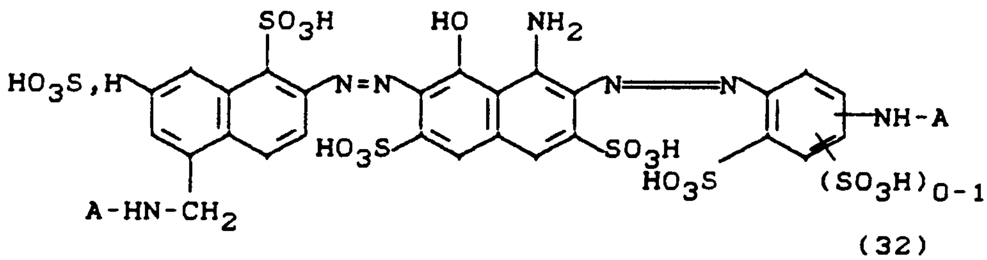

(32)

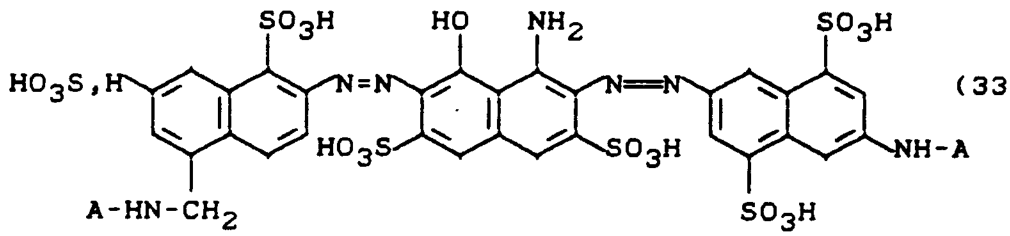

(33)

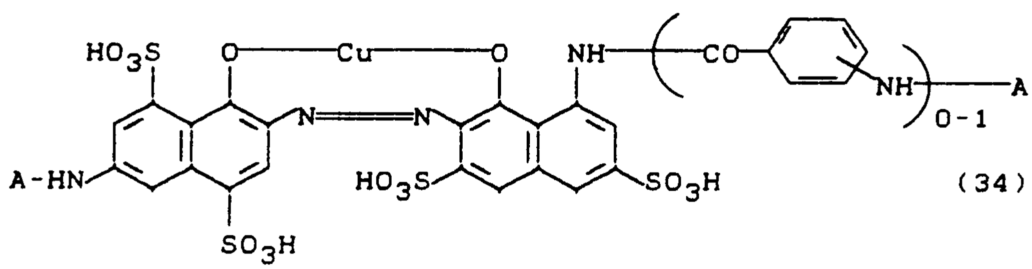

(34)

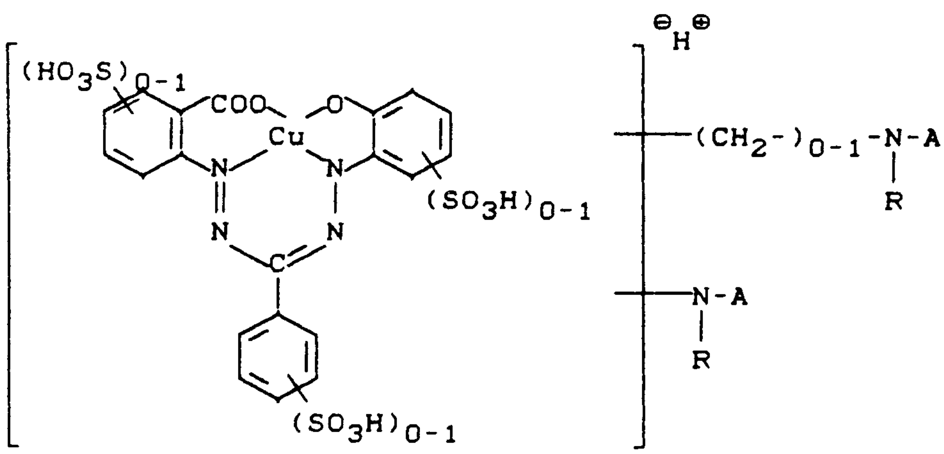

(35)

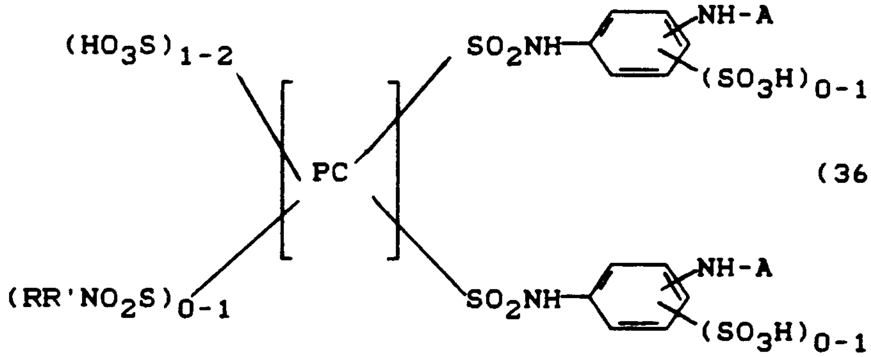

(36)

worin Pc für einen Cu- oder Ni-Phthalocyaninrest steht und die Gesamtzahl der Substituenten am Pc-Gerüst maximal 4 beträgt; R und R' die oben genannte Bedeutung besitzen,

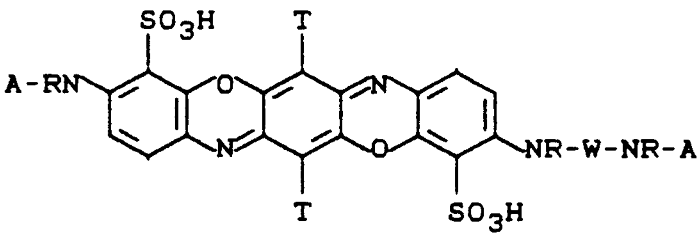

(37)

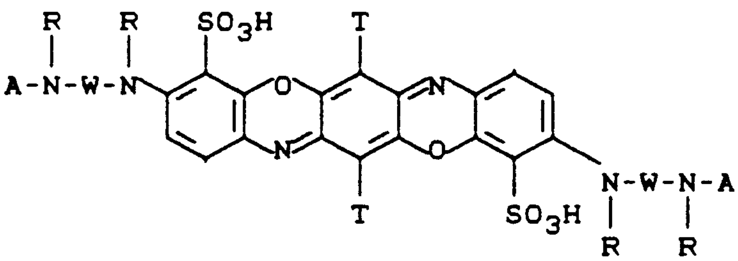

(38)

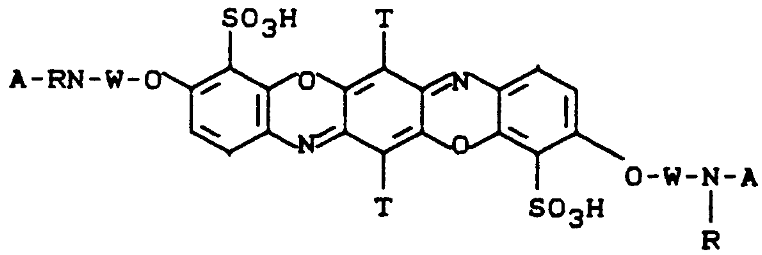

(39)

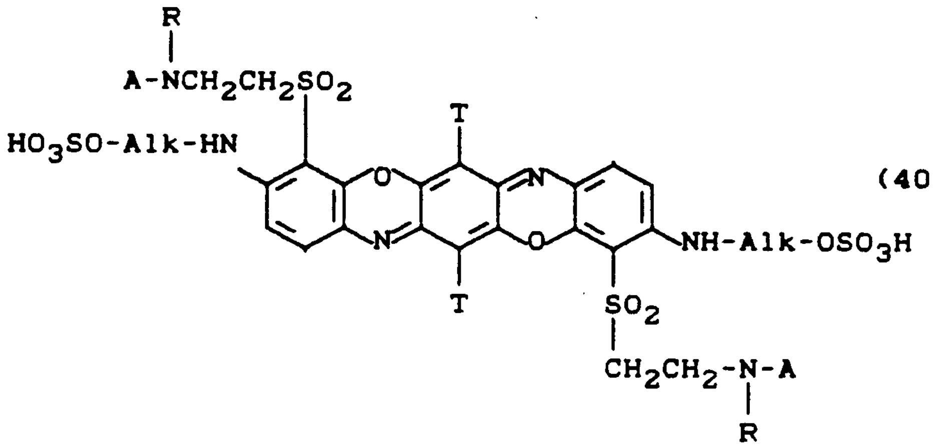

(40)

wobei

T = Cl, Br, $OCH_3$,

$R_3$ = H, $CH_3$ oder $C_2H_5$

$R_6$ = H, $C_1$-$C_4$-Alkyl, $C_1$-$C_4$-Alkoxy, Acylamino, insbesondere $C_1$-$C_4$-Alkylcarbonylamino, $C_1$-$C_4$-Alkylsulfonylamino, Aminocarbonylamino, gege benenfalls substituiertes Phenylcarbonylamino, Cl, Br

$R_7$ = H, $C_1$-$C_4$-Alkyl, $C_1$-$C_4$-Alkoxy, OH, $SO_3H$.

W = aliphatisches Brückenglied, insbesondere $C_2$-$C_4$-Alkylen,

Alk = gegebenenfalls durch Heteroatome oder Heteroatome wie N, O oder S enthaltende Gruppierungen unterbrochenenes, geradkettiges oder verzweigtes $C_1$-$C_6$-Alkylen, und wobei entweder beide A = X sind oder ein A für X und das andere A für Z steht und wobei die Benzolringe E gegebenenfalls weitersubstituiert sind.

**9.** Farbstoffe des Anspruchs 6 der Formel

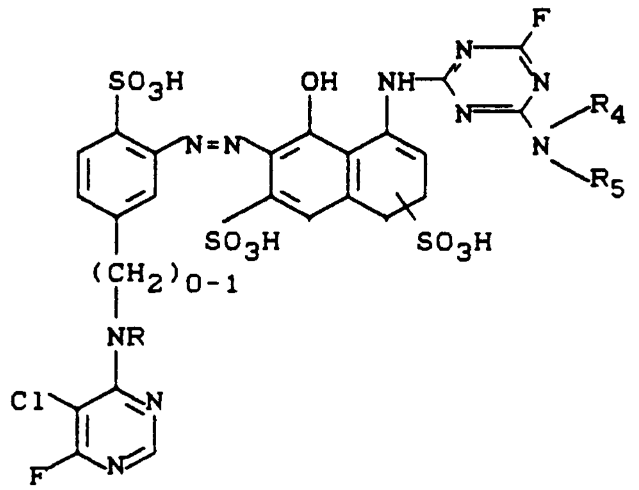

worin $R_4$ und $R_5$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenethyl, Cyclohexyl, Phenyl oder $-NHCH_2CH_2OCH_2CH_2-SO_2M$ (M = $-CH=CH_2$ oder $-CH_2CH_2V$ mit V = alkalisch eliminierbarer Rest), Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, ist,
oder worin $R_4$ und $R_5$ zusammen mit dem Aminostickstoffatom einen Morpholino-, Piperidino- oder Piperazinorest bilden, und R für H, $CH_3$ und $C_2H_5$ steht.

**10.** Verwendung der Farbstoffe der Ansprüche 1-6 zum Färben und Bedrucken von Hydroxylgruppen- und Amidgruppen-haltigen Materialien.

**11.** Mit den Farbstoffen der Ansprüche 1-6 gefärbtes oder bedrucktes Hydroxylgruppen- oder Amidgruppen-haltige Materialien.

## Claims

**1.** Reactive dyestuffs of the formula

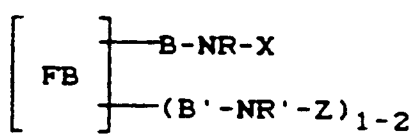

(1)

in particular dyestuffs of the formula

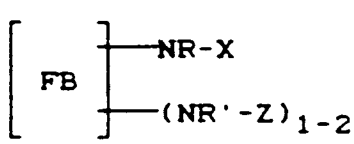

(1a)

in which

FB = the radical of a dyestuff or of the mono- or polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone

or perylenetetracarbimide series,

B or B' = a direct bond or bridge member to a ring C atom of an aromatic-carbocyclic ring in FB or to a ring C or N atom of an aromatic-heterocyclic ring in FB,

X =

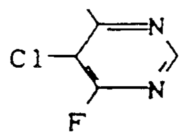

Z = a heterocyclic fibre-reactive radical

R and R' = H, optionally substituted $C_1$-$C_6$-alkyl with the exception of the dyestuff of the formula

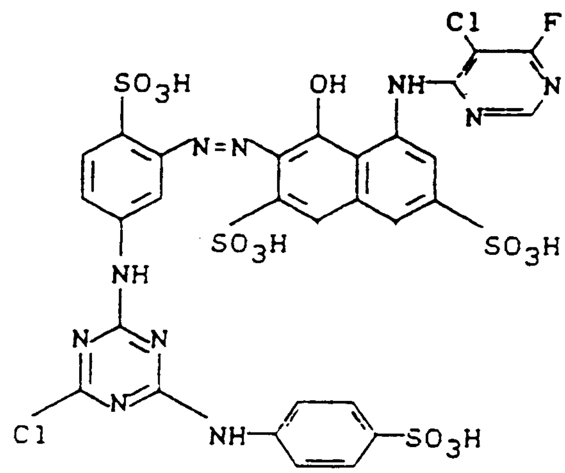

**2.** Dyestuffs of Claim 1 or the formula

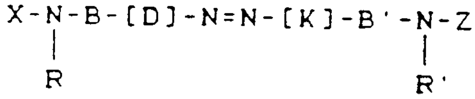

(1b)

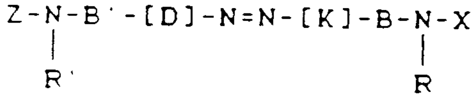

(1c)

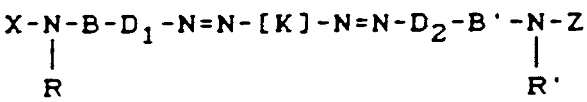

(1d)

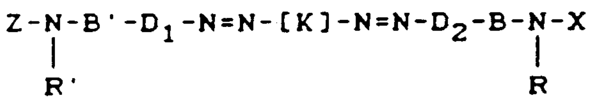

(1e)

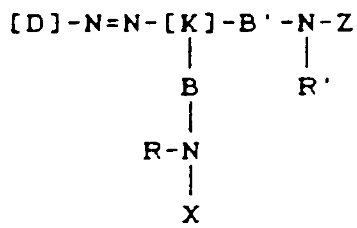

(1f)

in which
-K- in formulae (1d) and (1e) represents the radical of a doubly-coupling coupling component,

| | |
|---|---|
| D, $D_1$ and $D_2$ = | a radical of a diazo component of the benzene or naphthalene series, |
| K = | a radical of a coupling component of the benzene, naphthalene, acetoacetarylide or heterocyclic series; preferably a pyrazolone or pyridone radical in the heterocyclic series. |

**3.** Dyestuffs of Claim 1 where Z = a fibre-reactive fluorine-containing 4-pyrimidyl radical, in particular X.

**4.** Dyestuffs of Claim 1 where Z =

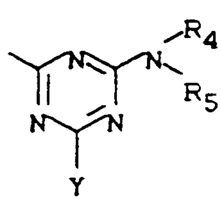

in which $R_4$ and $R_5$ independently of one another are hydrogen, $C_{1-4}$-alkyl which is optionally substituted by halogen, cyano, $C_{1-4}$-alkoxy, hydroxyl, carboxyl, sulpho or sulphato, benzyl, phenethyl, cyclohexyl, phenyl or $-NHCH_2CH_2OCH_2CH_2-SO_2M$ (M = $-CH=CH_2$ or $-CH_2CH_2V$ where V = a radical which can be eliminated by alkali), phenyl which is optionally substituted by halogen, nitro, cyano, trifluoromethyl, sulphamoyl, carbamoyl, $C_{1-4}$-alkyl, $C_{1-4}$-alkoxy, $C_{1-4}$-alkanoylamino, benzoylamino, ureido, hydroxyl, carboxyl, sulphomethyl or sulpho, or naphthyl which is optionally substituted by halogen, nitro, $C_{1-4}$-alkoxy, $C_{1-4}$-alkanoylamino, hydroxyl, carboxyl or sulpho,

or in which $R_4$ and $R_5$, together with the amino nitrogen atom, form a morpholino, piperidino or piperazino radical, and in which Y = Cl, F or an optionally substituted pyridinium radical.

**5.** Dyestuffs of Claim 4
in which $R_4$ and $R_5$ independently of one another are hydrogen, $C_{1-4}$-alkyl which is optionally substituted by halogen, cyano, $C_{1-4}$-alkoxy, hydroxyl, carboxyl, sulpho or sulphato, benzyl, phenethyl, cyclohexyl, phenyl or $-NHCH_2CH_2OCH_2CH_2-SO_2M$ (M = $-CH=CH_2$ or $-CH_2CH_2V$ where V = a radical which can be eliminated by alkali), phenyl which is optionally substituted by halogen, nitro, cyano, trifluoromethyl, sulphamoyl, carbamoyl, $C_1$-$_4$-alkyl, $C_{1-4}$-alkoxy, $C_{1-4}$-alkanoylamino, benzoylamino, ureido, hydroxyl, carboxyl, sulphomethyl, or naphthyl which is optionally substituted by halogen, nitro, $C_{1-4}$-alkoxy, $C_{1-4}$-alkanoylamino, hydroxyl, carboxyl or sulpho,
or in which $R_4$ and $R_5$, together with the amino nitrogen atom, form a morpholino, piperidino or piperazino radical, and in which Y = Cl.

**6.** Dyestuffs of Claim 4
in which $R_4$ and $R_5$ independently of one another are hydrogen, $C_{1-4}$-alkyl which is optionally substituted by halogen, cyano, $C_{1-4}$-alkoxy, hydroxyl, carboxyl, sulpho or sulphato, benzyl, phenethyl, cyclohexyl, phenyl or $-NHCH_2CH_2OCH_2CH_2-SO_2M$ (M = $-CH=CH_2$ or $-CH_2CH_2V$ where V = a radical which can be eliminated by alkali), phenyl which is optionally substituted by halogen, nitro, cyano, trifluoromethyl, sulphamoyl, carbamoyl, $C_1$-$_4$-alkyl, $C_{1-4}$-alkoxy, $C_{1-4}$-alkanoylamino, benzoylamino, ureido, hydroxyl, carboxyl, sulphomethyl or sulpho, or naphthyl which is optionally substituted by halogen, nitro, $C_{1-4}$-alkoxy, $C_{1-4}$-alkanoylamino, hydroxyl, carboxyl or sulpho,
or in which $R_4$ and $R_5$, together with the amino nitrogen atom, form a morpholino, piperidino or piperazino radical, and in which Y = F.

**7.** Dyestuffs of Claim 1, in which

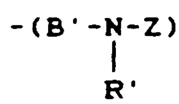

represents

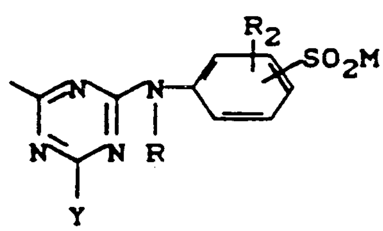

(III)

in which

| | |
|---|---|
| Y = | Cl, F or an optionally substituted pyridinium radical, |
| M = | $CH=CH_2$ or $CH_2CH_2$-V, in which |
| V = | a radical which can be eliminated by alkali, for example $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4$, $[N(CH_3)_3]^+$ anion$^-$ or an optionally substituted pyridinium radical (substituents in particular optionally substituted $C_1$-$C_4$-alkyl, COOH, $SO_3H$, CN or carbonamide) and |
| $R_2$ = | H, Cl, Br, $C_1$-$C_4$-alkyl, $C_1$-$C_4$-alkoxy, $CO_2H$ or $SO_3H$. |

**8.** Dyestuffs of Claim 1 of the formulae

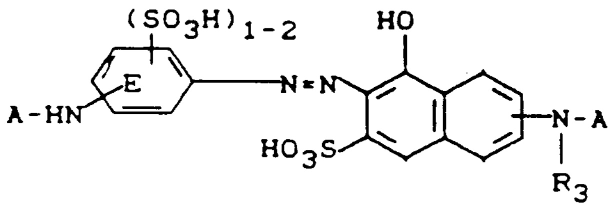

(2),

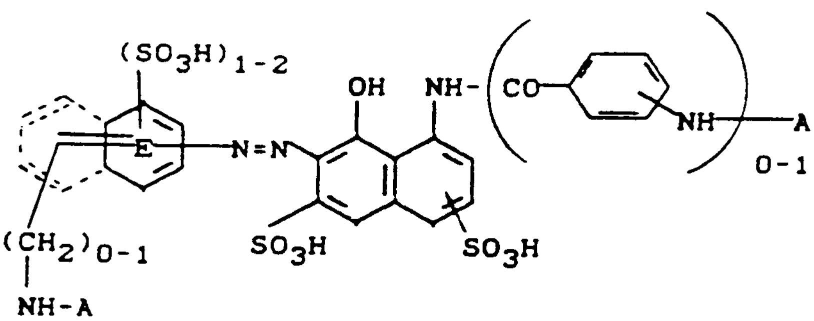

(3)

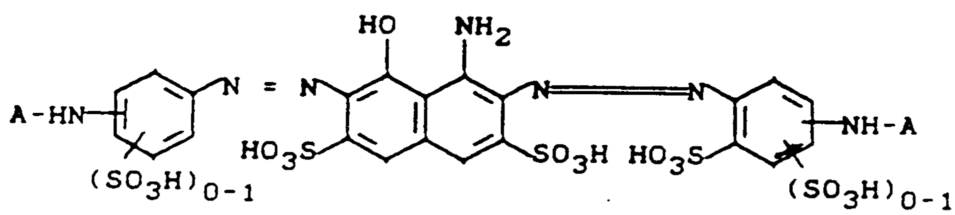

(4),

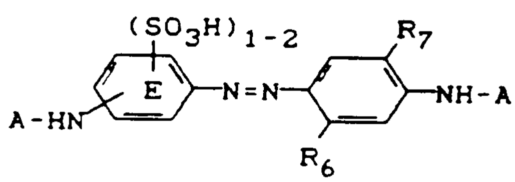

(5)

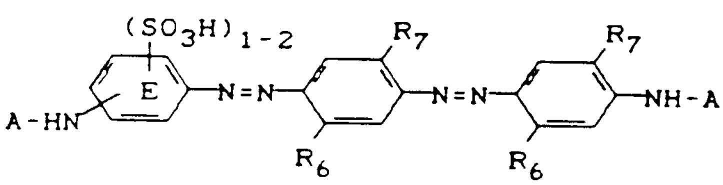

(6)

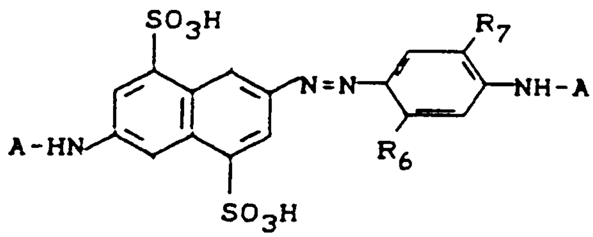

(7)

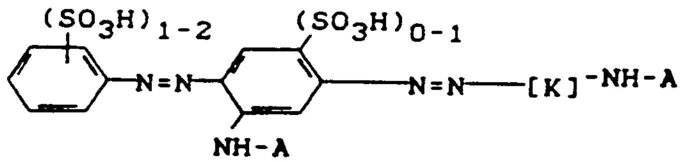

(8)

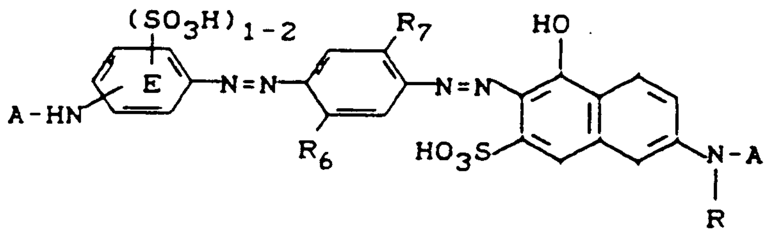

(9)

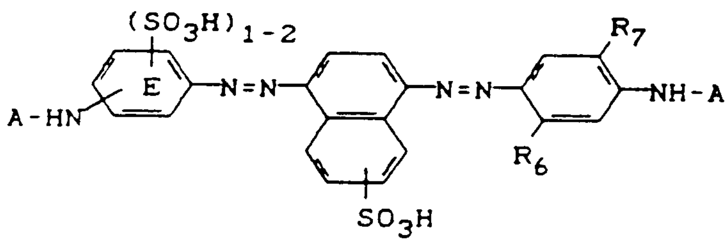

(10)

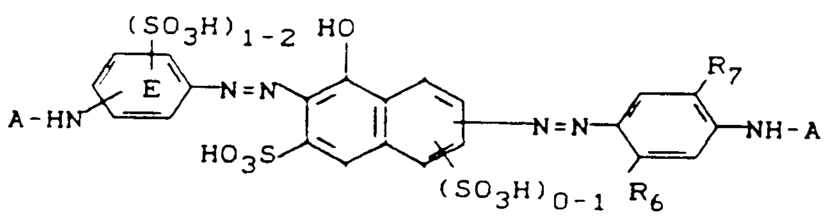

(11)

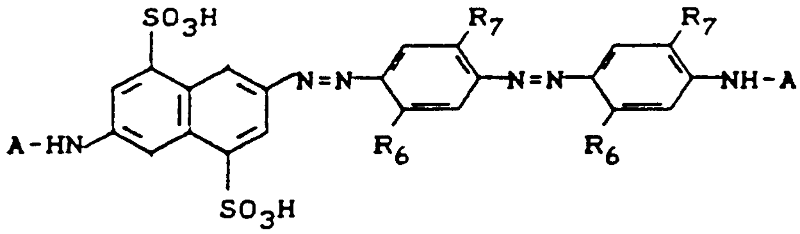

(12)

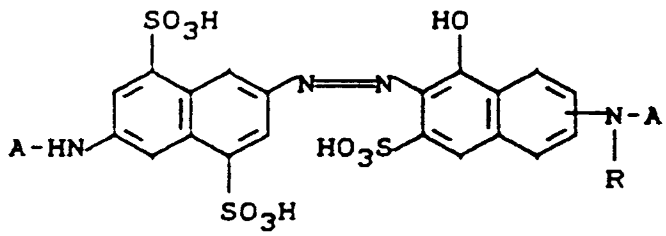

(13)

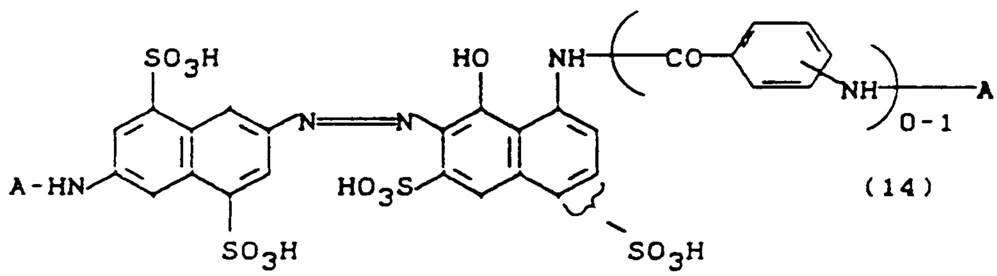

(14)

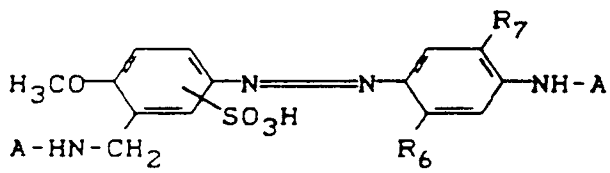

(15)

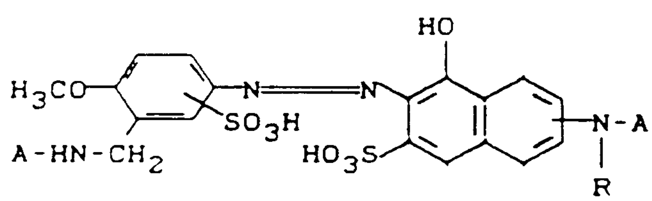

(16)

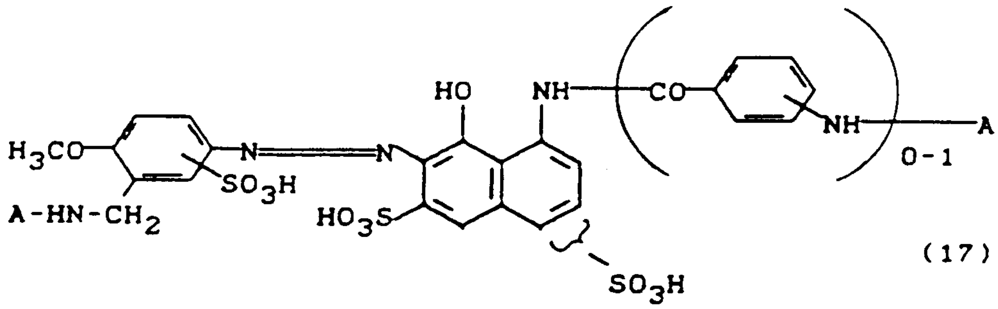

(17)

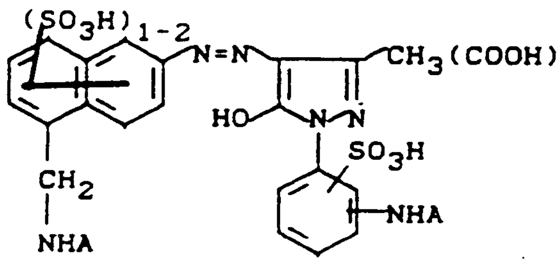

(18)

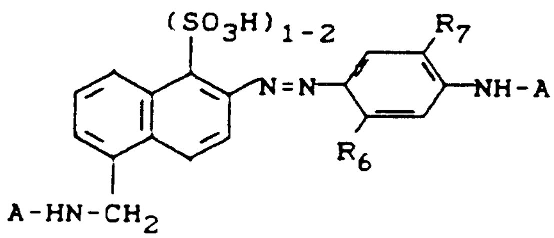

(19)

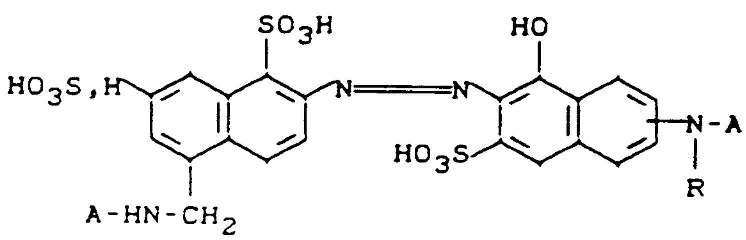

(20)

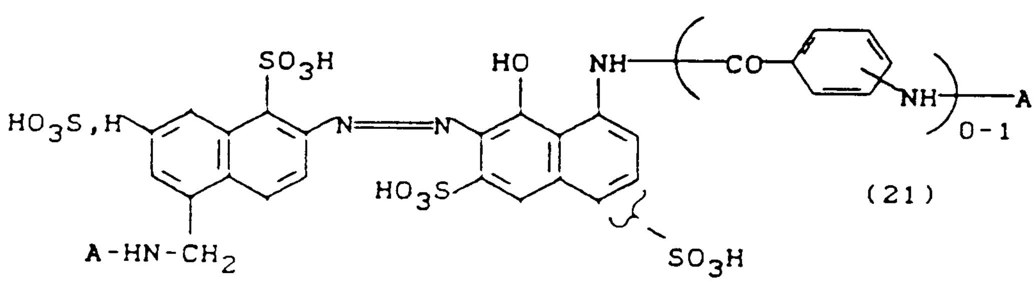

(21)

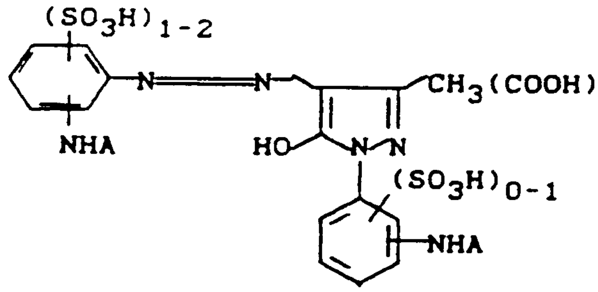

(22)

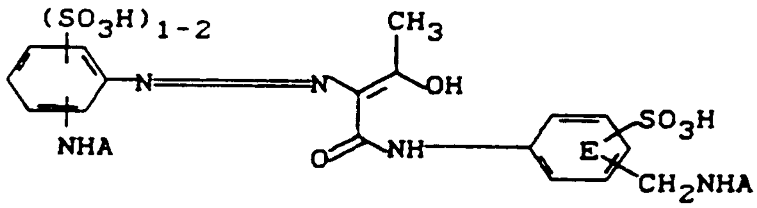

(23)

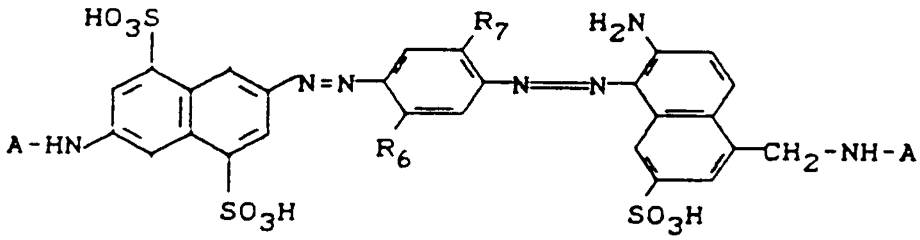

(24)

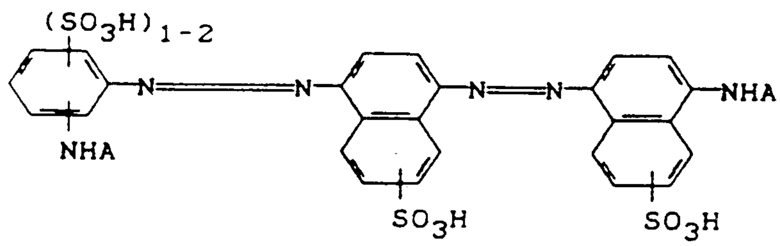

(25)

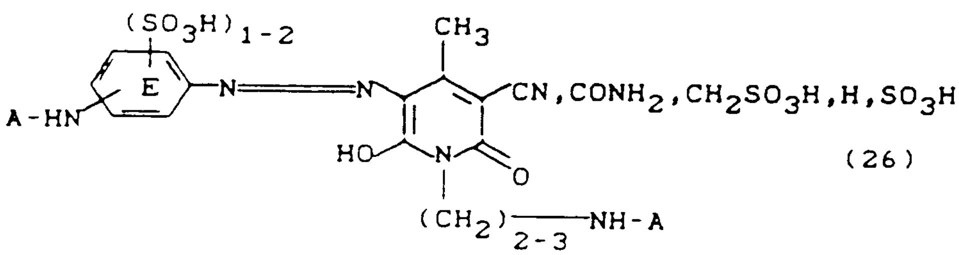

(26)

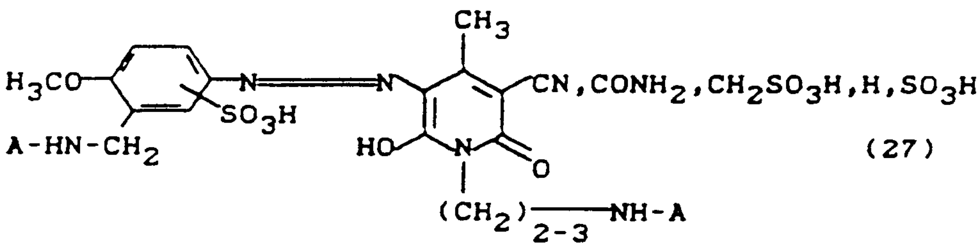

(27)

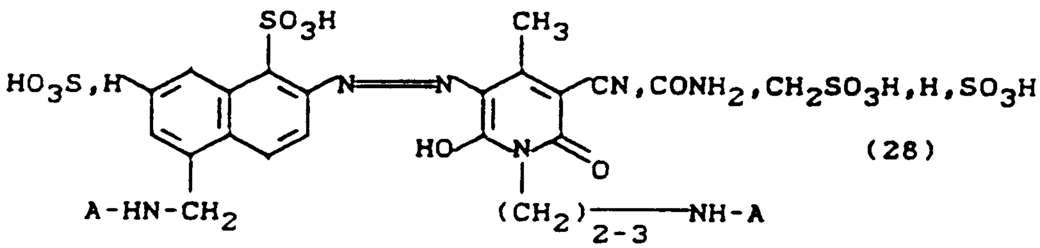

(28)

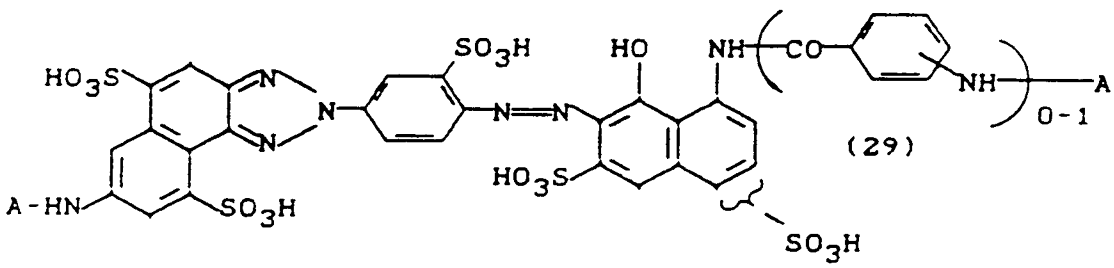

(29)

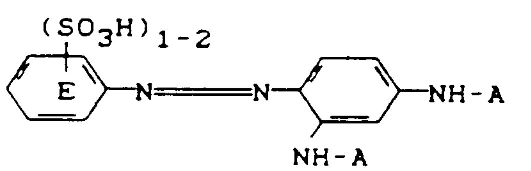

(30)

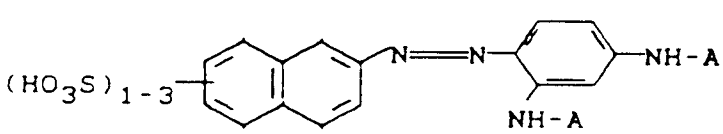

(31)

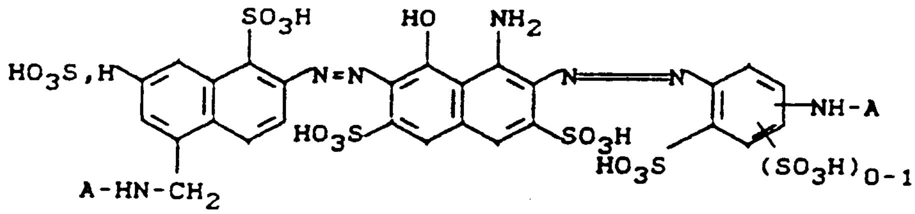

(32)

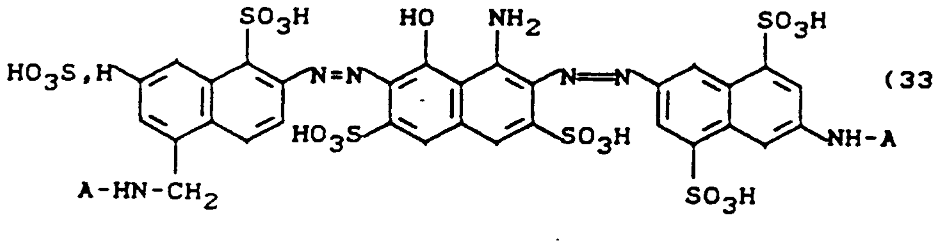

(33)

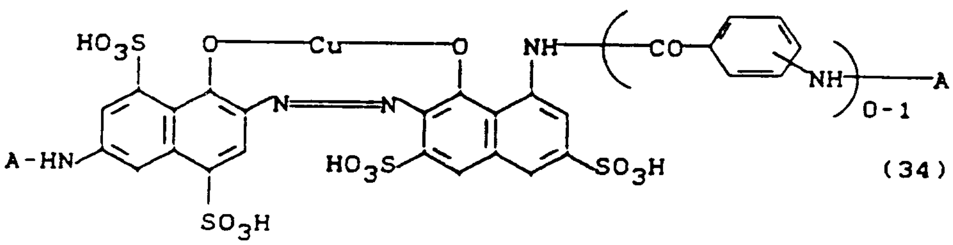

(34)

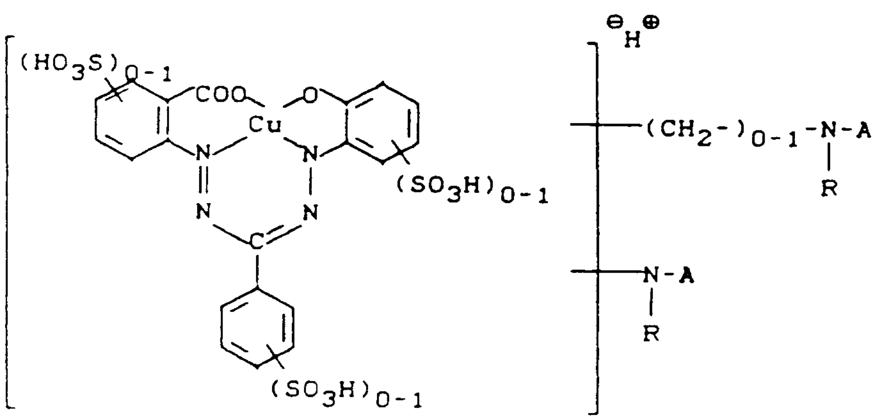

(35)

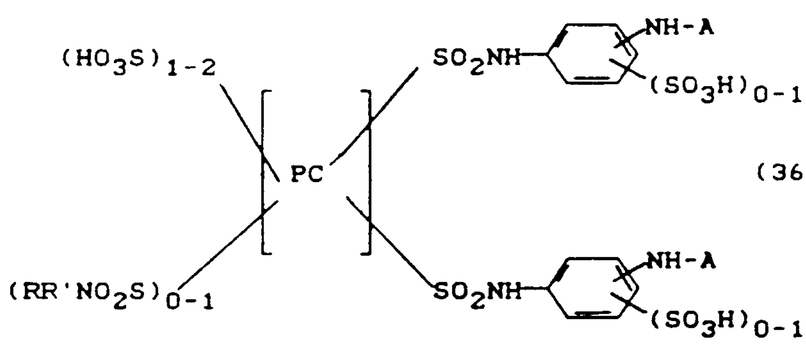

(36)

in which Pc represents a Cu or Ni phthalocyanine radical and the total number of the substituents on the Pc structure is at most 4; R and R' have the abovementioned meaning,

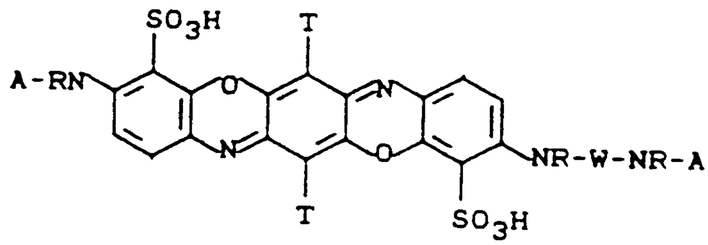

(37)

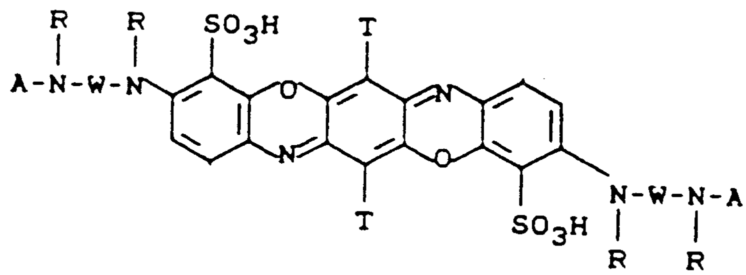

(38)

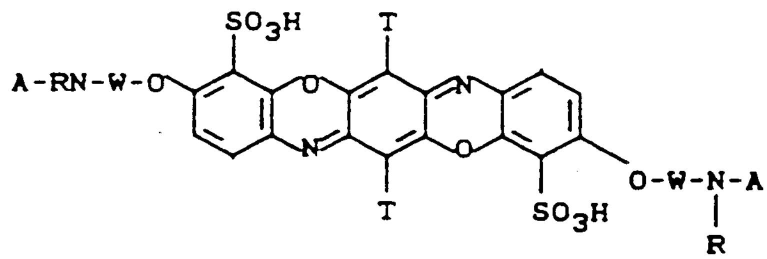

(39)

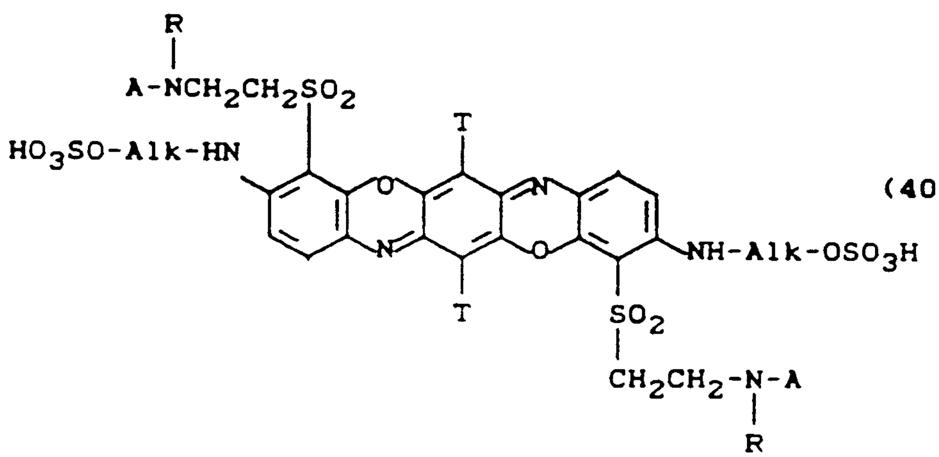

(40)

where

T = Cl, Br, $OCH_3$,

$R_3$ = H, $CH_3$ or $C_2H_5$

$R_6$ = H, $C_1$-$C_4$-alkyl, $C_1$-$C_4$-alkoxy, acylamino, in particular $C_1$-$C_4$-alkylcarbonylamino, $C_1$-$C_4$-alkylsulphonylamino, aminocarbonylamino, optionally substituted phenylcarbonylamino, Cl or Br

$R_7$ = H, $C_1$-$C_4$-alkyl, $C_1$-$C_4$-alkoxy, OH or $SO_3H$,

W = an aliphatic bridge member, in particular $C_2$-$C_4$-alkylene,

Alk = straight-chain or branched $C_1$-$C_6$-alkylene which is optionally interrupted by hetero atoms or groups containing hetero atoms such as N, O or S, and in which either both A = X or one A represents X and the other A represents Z and where the benzene rings E are optionally additionally substituted.

**9.** Dyestuffs of Claim 6 of the formula

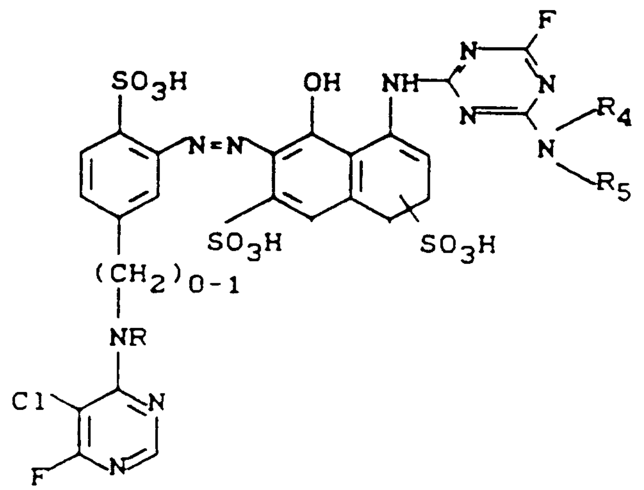

in which $R_4$ and $R_5$ independently of one another are hydrogen, $C_{1-4}$-alkyl which is optionally substituted by halogen, cyano, $C_{1-4}$-alkoxy, hydroxyl, carboxyl, sulpho or sulphato, benzyl, phenethyl, cyclohexyl, phenyl or $-NHCH_2CH_2OCH_2CH_2-SO_2M$ (M = $-CH=CH_2$ or $-CH_2CH_2V$ where V = a radical which can be eliminated by alkali), phenyl which is optionally substituted by halogen, nitro, cyano, trifluoromethyl, sulphamoyl, carbamoyl, $C_{1-4}$-alkyl, $C_{1-4}$-alkoxy, $C_{1-4}$-alkanoylamino, benzoylamino, ureido, hydroxyl, carboxyl, sulphomethyl or sulpho, or naphthyl which is optionally substituted by halogen, nitro, $C_{1-4}$-alkoxy, $C_{1-4}$-alkanoylamino, hydroxyl, carboxyl or sulpho,
or in which $R_4$ and $R_5$, together with the amino nitrogen atom, form a morpholino, piperidino or piperazino radical, and R represents H, $CH_3$ and $C_2H_5$.

**10.** Use of the dyestuffs of Claims 1-6 for dyeing and printing hydroxyl group- and amide group-containing materials.

**11.** Hydroxyl group- or amide group-containing materials dyed or printed with the dyestuffs of Claims 1-6.

## Revendications

**1.** Colorants réactifs de formule :

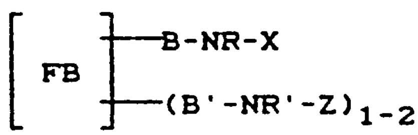

(1)

et en particulier colorants de formule :

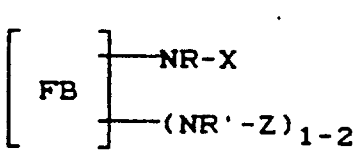

(1a)

dans lesquelles
FB = le radical d'un colorant des séries mono- ou poly-azoïques, des complexes métalliques azoïques, anthraquinonique, des phtalocyanines, de formazane, d'azométhine, de dioxazine, de phénazine, de stilbène, du triphénylméthane, du xanthène, de thioxanthone, nitroarylique, de naphtoquinone, de pyrène-quinone ou du pérylène-tétracarbimide,

B et B' = liaison directe ou pont sur un atome de carbone cyclique d'un noyau aromatique-carbocyclique ou sur un atome de carbone ou d'azote cyclique d'un noyau aromatique-hétérocyclique dans FB,

X = 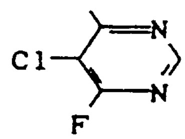

Z = radical hétérocyclique réactif avec les fibres,

R, R' = H, alkyle en $C_1$-$C_6$ éventuellement substitué, à l'exception du colorant de formule :

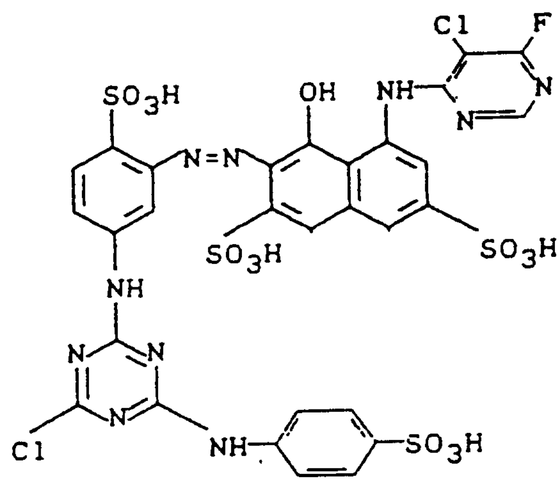

**2.** Colorants de la revendication 1, de formules :

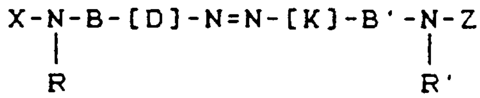

(1b)

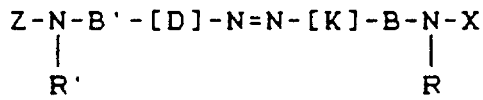

(1c)

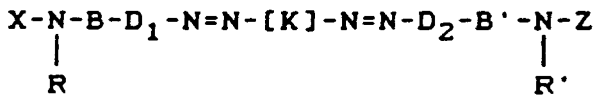

(1d)

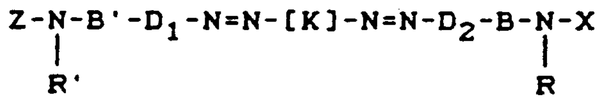

(1e)

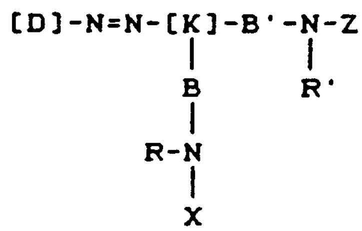

(1f)

dans lesquelles
-K-, dans les formules 1d) et 1e), représente le radical d'un copulant qui copule deux fois,
D, $D_1$, $D_2$ = radical d'un composant diazotable de la série benzénique ou naphtalénique,
K = radical d'un copulant de la série benzénique, naphtalénique, des acétylacétoarylides ou hétérocyclique ; dans la série hétérocyclique, de préférence un radical de pyrazolone ou de pyridone.

**3.** Colorants de la revendication 1, pour lesquels Z = radical pyrimidyle-4-fluoré réactif avec les fibres, en particulier X.

**4.** Colorants de la revendication 1, pour lesquels Z =

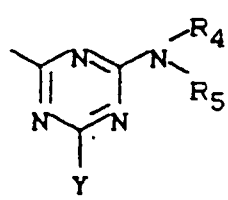

dans lequel $R_4$ et $R_5$ représentent chacun, indépendamment l'un de l'autre, l'hydrogène, un groupe alkyle en $C_1$-$C_4$ éventuellement substitué par des halogènes, des groupes cyano, alcoxy en $C_1$-$C_4$, hydroxy, carboxy, sulfo ou sulfato, benzyle, phénéthyle, cyclohexyle, phényle ou $-NHCH_2CH_2OCH_2CH_2-SO_2M$ (M = -CH = $CH_2$ ou $-CH_2CH_2V$ avec V = substituant éliminable en milieu alcalin), un groupe phényle éventuellement substitué par des halogènes, des groupes nitro, cyano, trifluorométhyle, sulfamoyle, carbamoyle, alkyle en $C_1$-$C_4$, alcoxy en $C_1$-$C_4$, alcanoylamino en $C_1$-$C_4$, benzoylamino, uréido, hydroxy, carboxy, sulfométhyle ou sulfo, ou un groupe naphtyle éventuellement substitué par des halogènes, des groupes nitro, alcoxy en $C_1$-$C_4$, alcanoylamino en $C_1$-$C_4$,

hydroxy, carboxy ou sulfo,
ou bien $R_4$ et $R_5$ forment ensemble et avec l'atome d'azote aminé un groupe morpholino, pipéridino ou pipérazino, et Y = Cl, F ou radical pyridinium éventuellement substitué.

**5.** Colorants de la revendication 4, dans lesquels $R_4$ et $R_5$ représentent chacun, indépendamment l'un de l'autre, l'hydrogène, un groupe alkyle en $C_1$-$C_4$ éventuellement substitué par des halogènes, des groupes cyano, alcoxy en $C_1$-$C_4$, hydroxy, carboxy, sulfo ou sulfato, benzyle, phénéthyle, cyclohexyle, phényle ou $-NHCH_2CH_2OCH_2CH_2-SO_2M$ (M = $-CH=CH_2$ ou $-CH_2CH_2V$ avec V = substituant éliminable en milieu alcalin), un groupe phényle éventuellement substitué par des halogènes, des groupes nitro, cyano, trifluorométhyle, sulfamoyle, carbamoyle, alkyle en $C_1$-$C_4$, alcoxy en $C_1$-$C_4$, alcanoylamino en $C_1$-$C_4$, benzoylamino, uréido, hydroxy, carboxy, sulfométhyle ou, un groupe naphtyle éventuellement substitué par des halogènes, des groupes nitro, alcoxy en $C_1$-$C_4$, alcanoylamino en $C_1$-$C_4$, hydroxy, carboxy ou sulfo,
ou bien $R_4$ et $R_5$ forment ensemble et avec l'atome d'azote aminé un groupe morpholino, pipéridino ou pipérazino, et Y = Cl.

**6.** Colorants de la revendication 4, dans lesquels $R_4$ et $R_5$ représentent chacun, indépendamment l'un de l'autre, l'hydrogène, un groupe alkyle en $C_1$-$C_4$ éventuellement substitué par des halogènes, des groupes cyano, alcoxy en $C_1$-$C_4$, hydroxy, carboxy, sulfo ou sulfato, benzyle, phénéthyle, cyclohexyle, phényle ou $-NHCH_2CH_2OCH_2CH_2-SO_2M$ (M = $-CH=CH_2$ ou $-CH_2CH_2V$ avec V = substituant éliminable en milieu alcalin), un groupe phényle éventuellement substitué par des halogènes, des groupes nitro, cyano, trifluorométhyle, sulfamoyle, carbamoyle, alkyle en $C_1$-$C_4$, alcoxy en $C_1$-$C_4$, alcanoylamino en $C_1$-$C_4$, benzoylamino, uréido, hydroxy, carboxy, sulfométhyle ou sulfo, ou un groupe naphtyle éventuellement substitué par des halogènes, des groupes nitro, alcoxy en $C_1$-$C_4$, alcanoylamino en $C_1$-$C_4$, hydroxy, carboxy ou sulfo, ou bien $R_4$ et $R_5$ forment ensemble et avec l'atome d'azote aminé un groupe morpholino, pipéridino ou pipérazino, et Y = F.

**7.** Colorants de la revendication 1, pour lesquels :

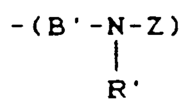

représente

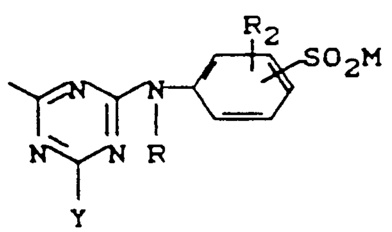

(III)

dans lequel
Y = Cl, F ou groupe pyridinium éventuellement substitué,
M = $CH=CH_2$ ou $CH_2CH_2V$ dans lequel
V = substituant éliminable en milieu alcalin, par exemple $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2-C_6H_4$, $[N(CH_3)_3]^+anion^-$ ou groupe pyridinium éventuellement substitué (substituants en particulier alkyle en $C_1$-$C_4$ éventuellement substitué, COOH, $SO_3H$, CN, carboxamide) et
$R_2$ = H, Cl, Br, alkyle en $C_1$-$C_4$, alcoxy en $C_1$-$C_4$, $CO_2H$ ou $SO_3H$.

**8.** Colorants de la revendication 1, de formules :

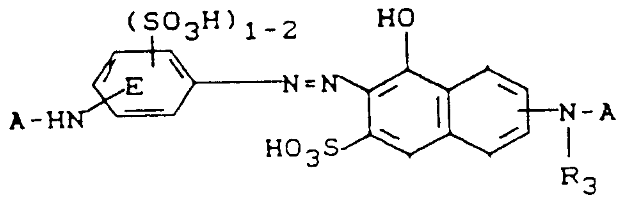

(2),

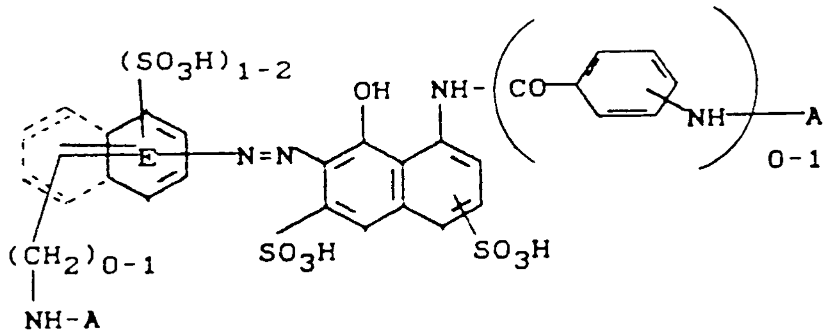

(3)

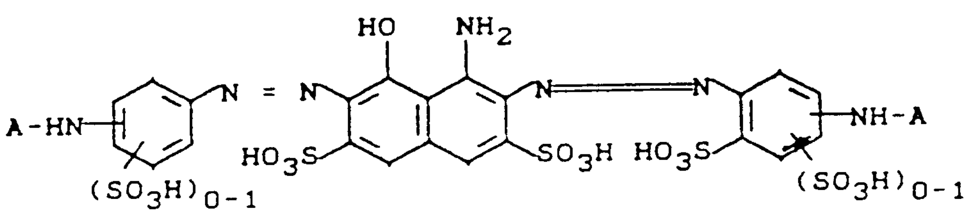

(4),

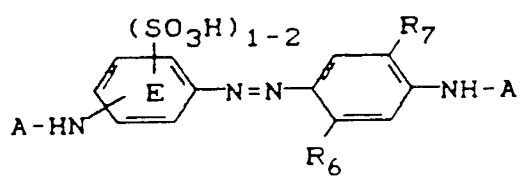

(5)

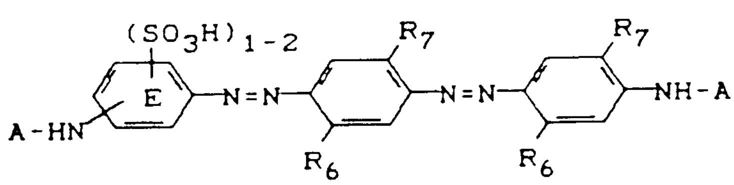

(6)

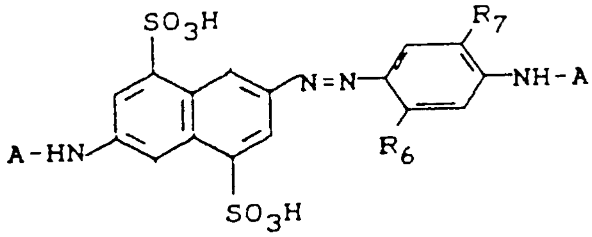

(7)

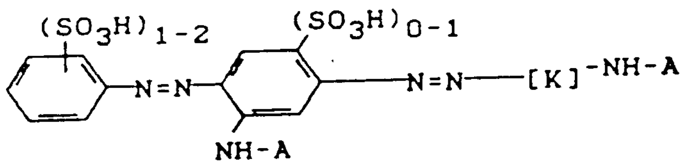

(8)

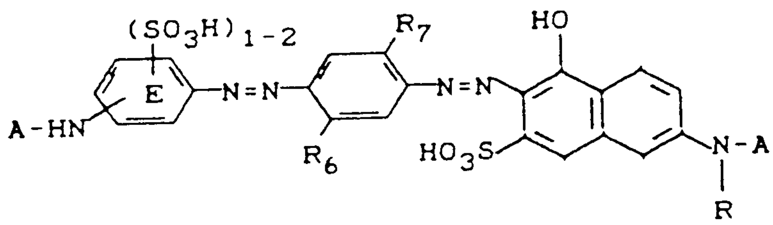

(9)

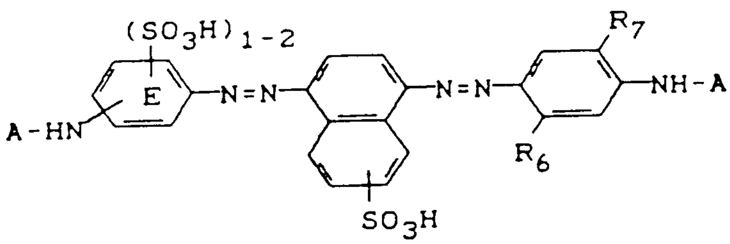

(10)

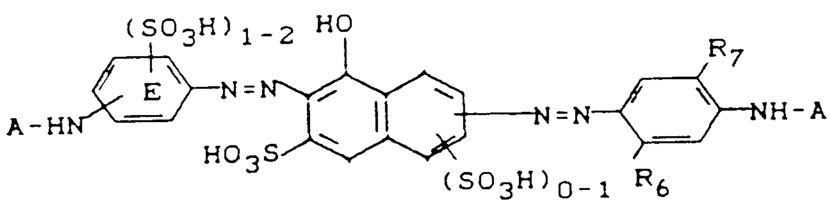

(11)

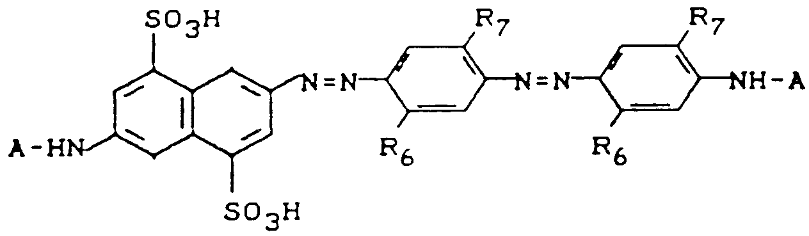

(12)

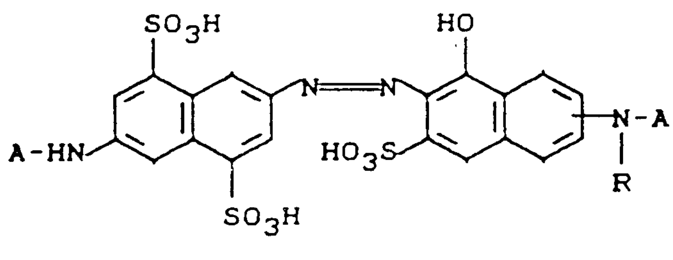

(13)

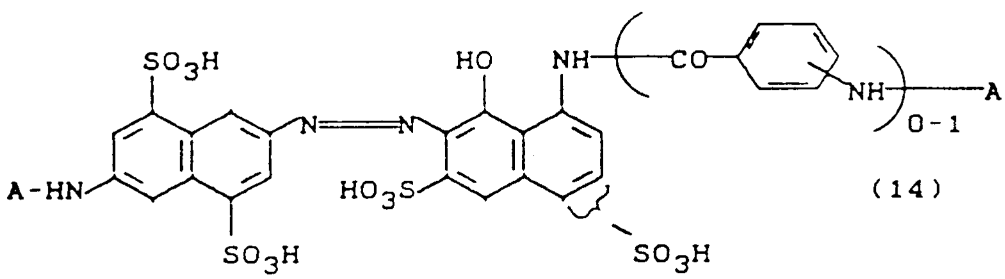

(14)

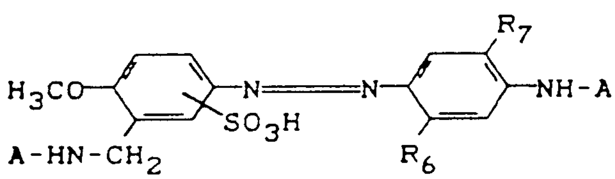

(15)

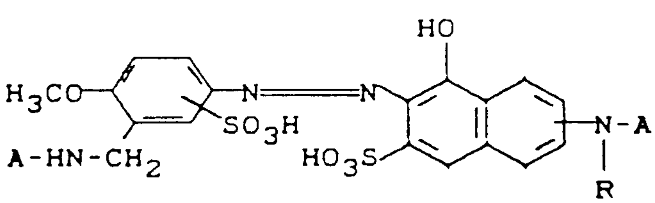

(16)

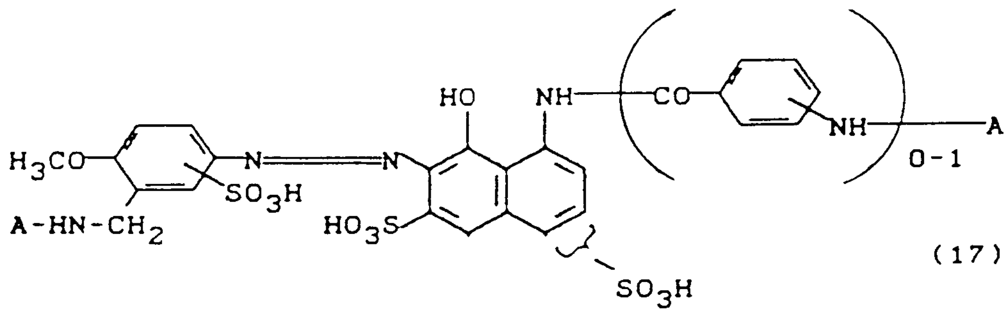

(17)

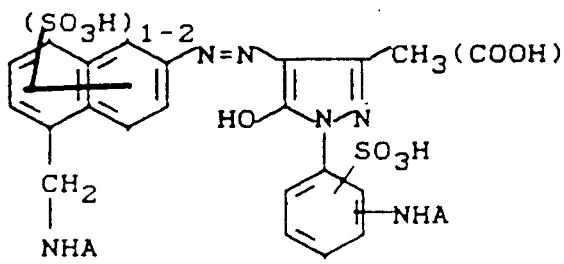

(18)

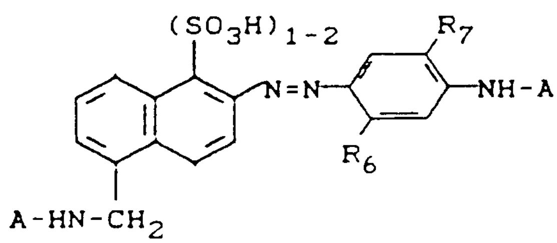

(19)

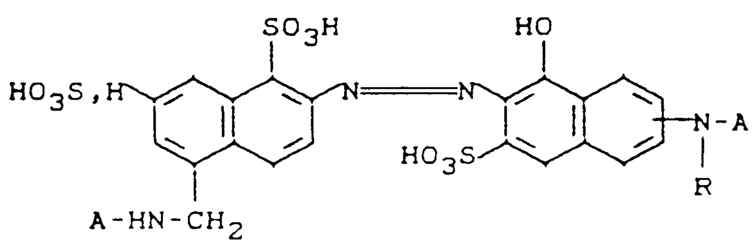

(20)

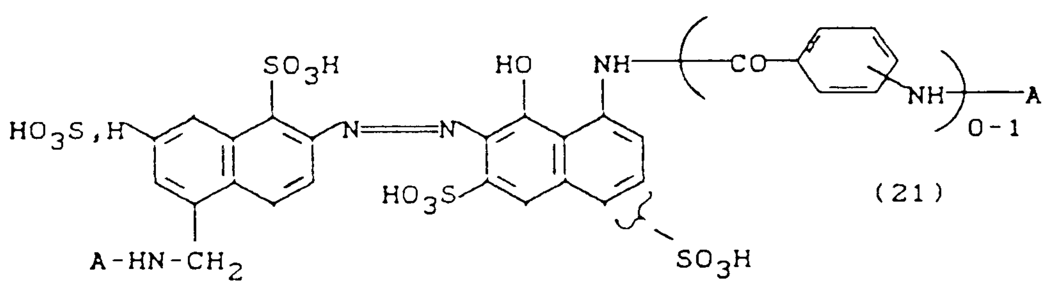

(21)

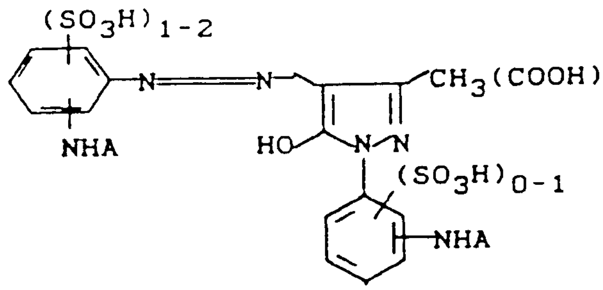

(22)

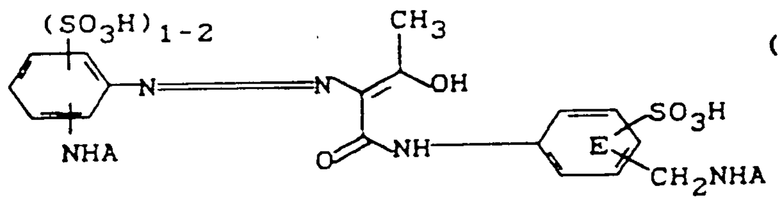

(23)

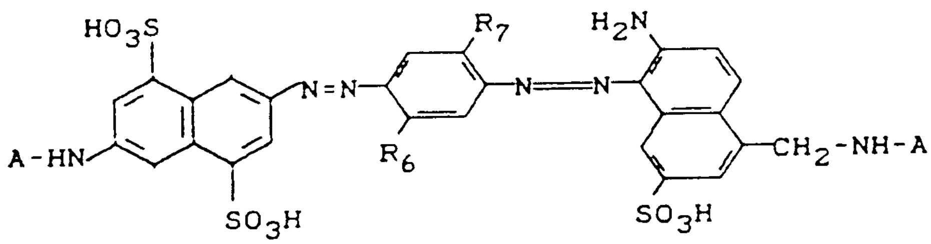

(24)

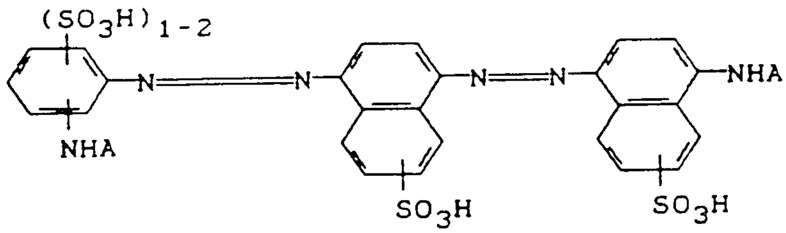

(25)

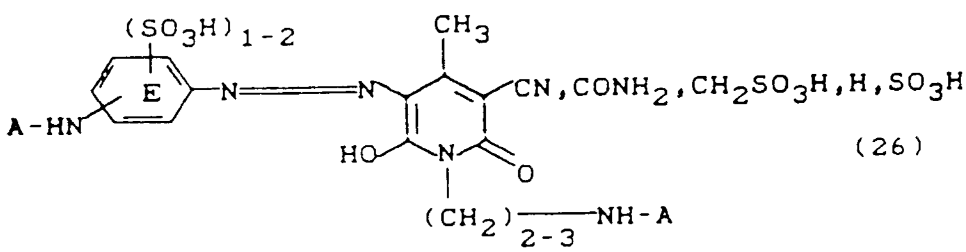

(26)

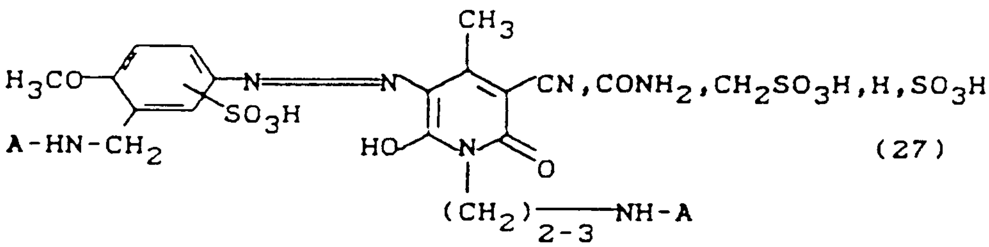

(27)

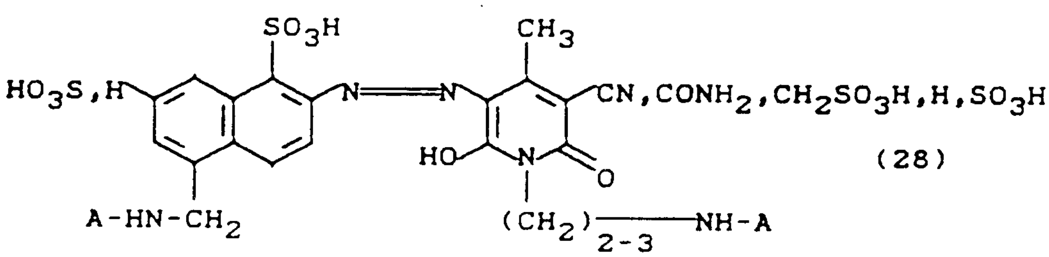

(28)

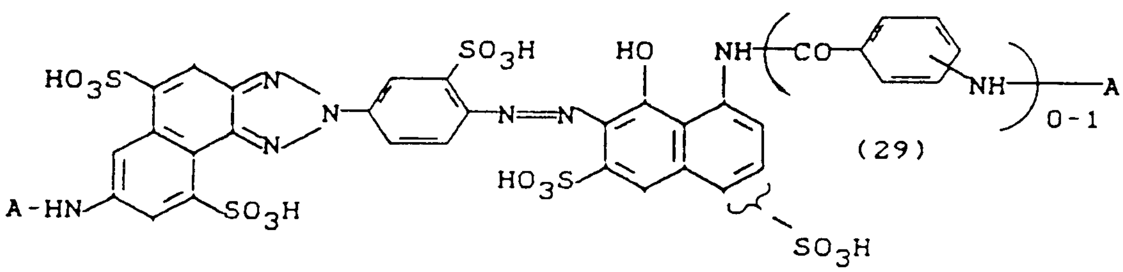

(29)

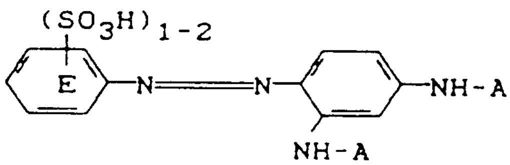

(30)

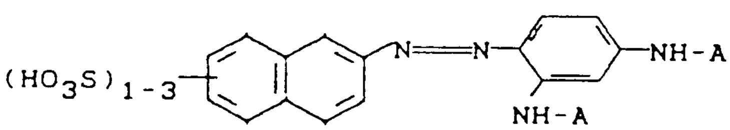

(31)

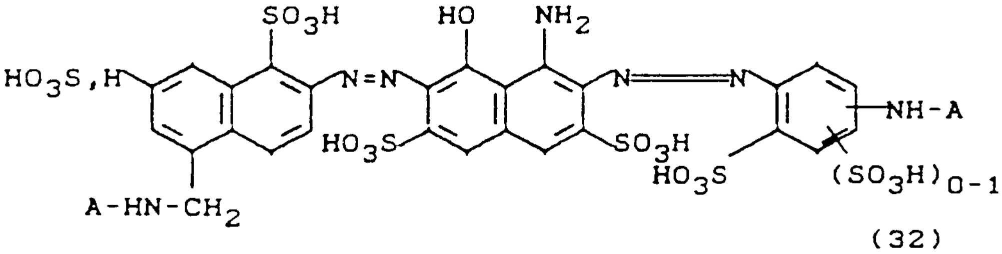

(32)

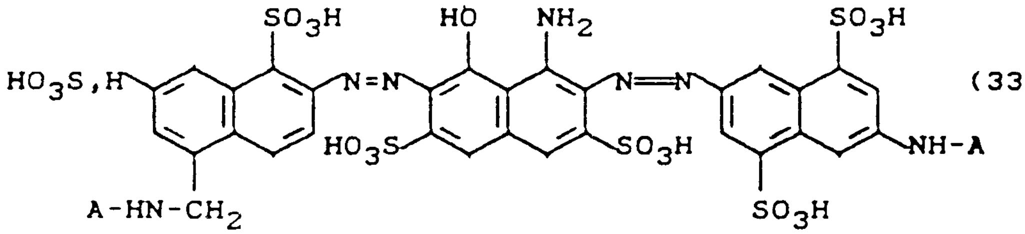

(33)

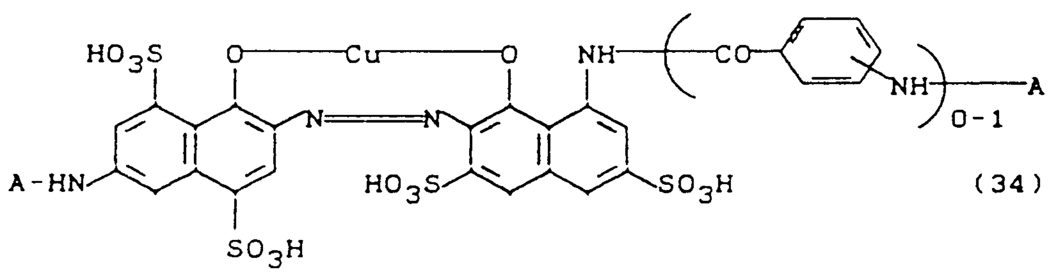

(34)

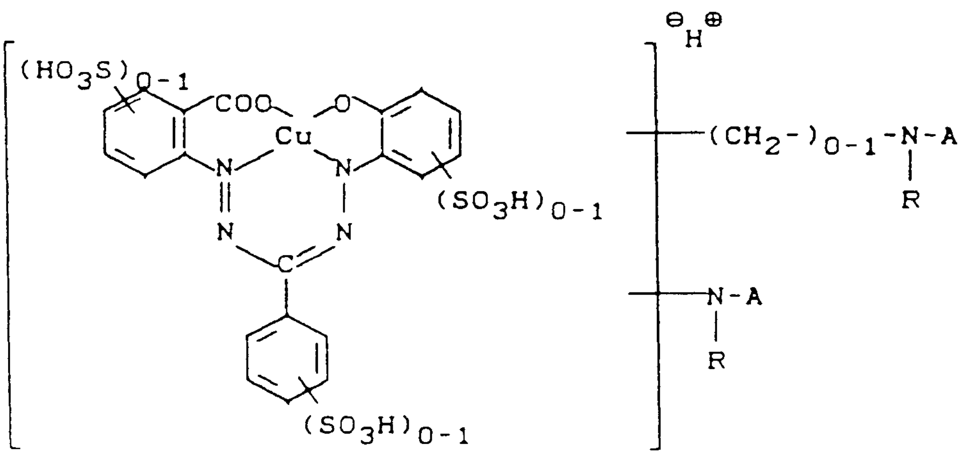

(35)

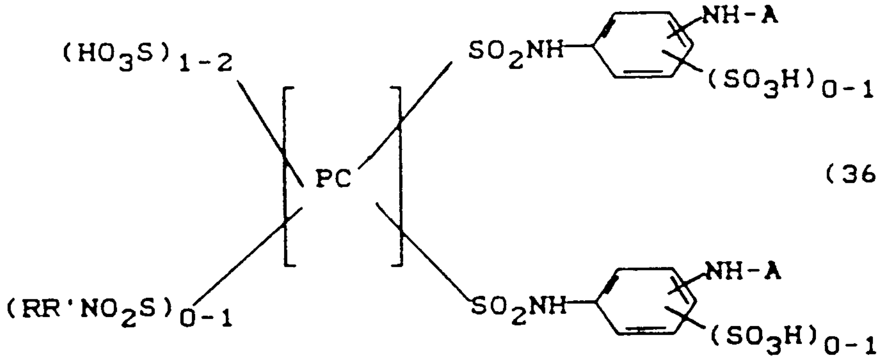

(36)

dans lesquelles Pc représente un radical de phtalocyanine de cuivre ou de nickel et le nombre total des substituants du squelette Pc est au maximum de 4; R et R' ont les significations indiquées ci-dessus,

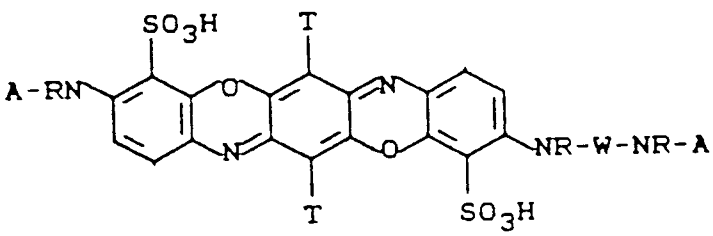

(37)

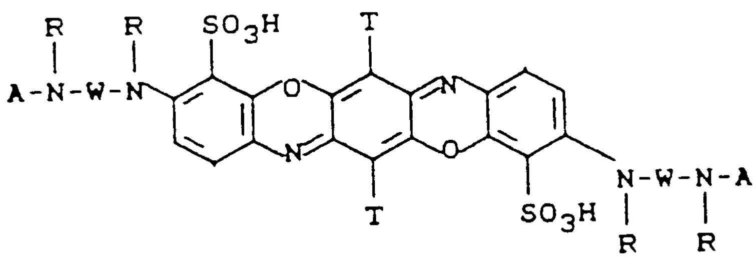

(38)

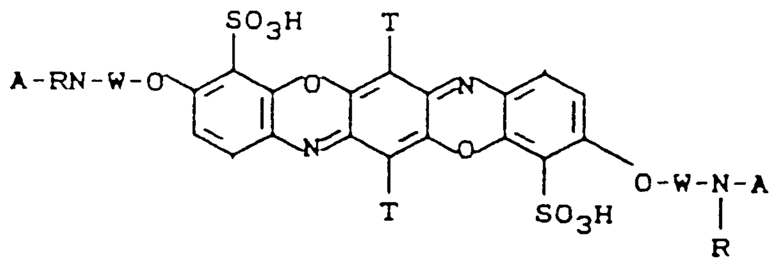

(39)

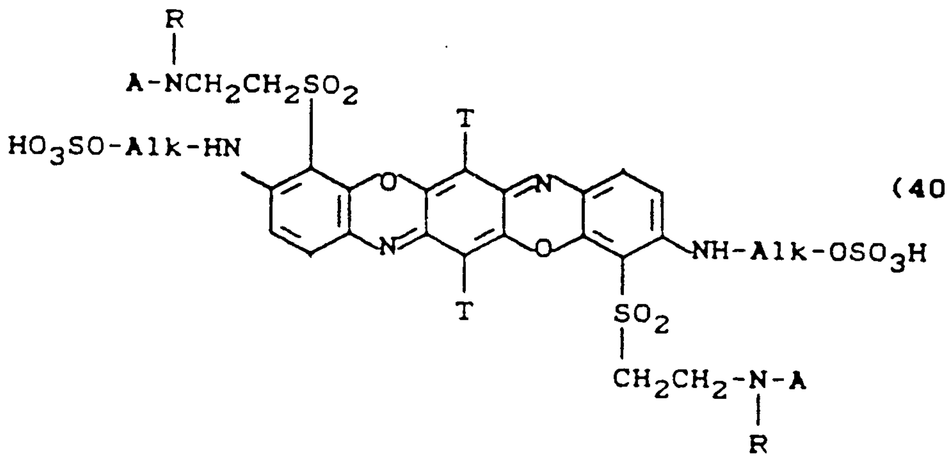

(40)

dans lesquelles
T = Cl, Br, $OCH_3$,
$R_3$ = H, $CH_3$ ou $C_2H_5$,
$R_6$ = H, alkyle en $C_1$-$C_4$, alcoxy en $C_1$-$C_4$, acylamino, en particulier (alkyle en $C_1$-$C_4$)carbonylamino, alkylsulfonylamino en $C_1$-$C_4$, aminocarbonylamino, phénylcarbonylamino éventuellement substitué, Cl, Br,
$R_7$ = H, alkyle en $C_1$-$C_4$, alcoxy en $C_1$-$C_4$, OH, $SO_3H$,
W = pont aliphatique, en particulier alkylène en $C_2$-$C_4$, Alk = alkylène à chaîne droite ou ramifiée, en $C_1$-$C_6$, éventuellement interrompue par des hétéroatomes ou par des groupements contenant des hétéroatomes tels que N, O ou S, les deux symboles A représentant X ou bien l'un des symboles A représente X et l'autre Z, les cycles benzéniques E portant éventuellement d'autres substituants.

9. Colorants de la revendication 6, de formule :

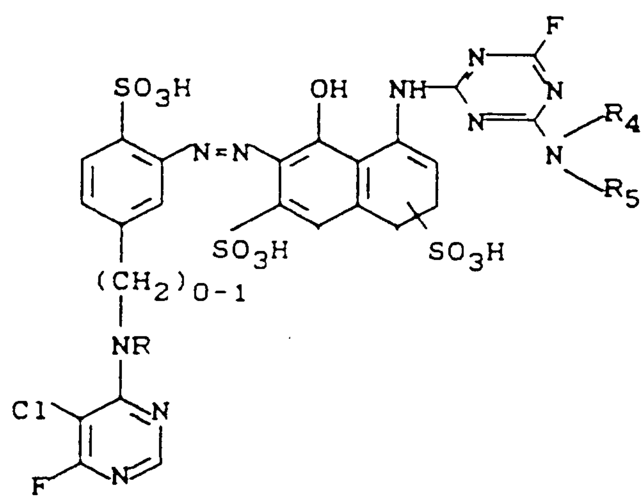

dans laquelle $R_4$ et $R_5$ représentent chacun, indépendamment l'un de l'autre, l'hydrogène, un groupe alkyle en $C_1$-$C_4$ éventuellement substitué par des halogènes, des groupes cyano, alcoxy en $C_1$-$C_4$, hydroxy, carboxy, sulfo ou sulfato, benzyle, phénéthyle, cyclohexyle, phényle ou $-NHCH_2CH_2OCH_2CH_2-SO_2M$ (M = $-CH = CH_2$ ou $-CH_2CH_2V$ avec V = substituant éliminable en milieu alcalin), un groupe phényle éventuellement substitué par des halogènes, des groupes nitro, cyano, trifluorométhyle, sulfamoyle, carbamoyle, alkyle en $C_1$-$C_4$, alcoxy en $C_1$-$C_4$, alcanoylamino en $C_1$-$C_4$, benzoylamino, uréido, hydroxy, carboxy, sulfométhyle ou sulfo, ou un groupe naphtyle éventuellement substitué par des halogènes, des groupes nitro, alcoxy en $C_1$-$C_4$, alcanoylamino en $C_1$-$C_4$, hydroxy, carboxy ou sulfo, ou bien $R_4$ et $R_5$ forment ensemble et avec l'atome d'azote aminé un groupe morpholino, pipéridino ou pipérazino, et R représente H, $CH_3$ et $C_2H_5$.

**10.** Utilisation des colorants des revendications 1 à 6 pour la teinture et l'impression de matières contenant des groupes hydroxy et des groupes amide.

**11.** Matières contenant des groupes hydroxy ou des groupes amide, teintes ou imprimées par les colorants des revendications 1 à 6.